# EUROPEAN PATENT APPLICATION

(11) **EP 4 661 469 A1**
(43) Date of publication of application: **10.12.2025**
(21) Application number: 24755987.5
(22) Date of filing: 31.01.2024
(51) Int. Cl.: H04W 24/02

(54) **COMMUNICATION METHOD, AND RELATED APPARATUS AND SYSTEM**

(30) Priority: 16.02.2023 CN 202310160108; 07.04.2023 CN 202310401614
(71) Applicant: Huawei Technologies Co., Ltd., Shenzhen, Guangdong 518129 (CN)
(72) Inventor: YAN, Mao, Shenzhen, Guangdong 518129 (CN); SONG, Xinghua, Shenzhen, Guangdong 518129 (CN)
(74) Representative: Körber, Martin Hans
(86) International application number: PCT/CN2024/074823
(87) International publication number: WO 2024/169613

(57) **Abstract**

Embodiments of this application provide a communication method and a related apparatus and system. In the method, a network device sends first configuration information and second configuration information to a relay device, where the first configuration information is for configuring a first forwarding parameter, and the second configuration information is for configuring a second forwarding parameter, but the first configuration information conflicts with the second configuration information. The relay device performs processing based on the first configuration information with a higher priority in the first configuration information and the second configuration information, for example, forwards, to a terminal device, a signal received from the network device, forwards, to the network device, a signal received from the terminal device, or skips performing signal forwarding. In this way, a problem that the relay device cannot normally perform signal forwarding when a forwarding parameter configuration conflict occurs can be avoided, to help improve transmission performance.

## Description

This application claims priorities to Chinese Patent Application No. 202310160108.6, filed with the China National Intellectual Property Administration on February 16, 2023 and entitled "COMMUNICATION METHOD AND RELATED APPARATUS AND SYSTEM", and to Chinese Patent Application No. 202310401614.X, filed with the China National Intellectual Property Administration on April 7, 2023 and entitled "COMMUNICATION METHOD AND RELATED APPARATUS AND SYSTEM", both of which are incorporated herein by reference in their entireties.

### TECHNICAL FIELD

This application relates to the communication field, and in particular, to a communication method and a related apparatus and system.

### BACKGROUND

Currently, wireless communication technologies have been widely applied. In some scenarios, because a path loss between a network device and a terminal device is high, the terminal device may be incapable of directly communicating with the network device. Currently, a method is known. A relay device is for assisting in communication between the network device and the terminal device. Therefore, the network device needs to configure a forwarding parameter, for example, a backhaul link beam, an access link beam, an amplification gain, forwarding enabled, or forwarding disabled, for the relay device.

However, a conflict may occur on configuration performed by the network device on a same relay device. For example, in signaling sent by the network device for a previous time, a backhaul link beam is configured for signal forwarding on a symbol; and in signaling sent for a subsequent time, another backhaul link beam is configured for signal forwarding on a same symbol. However, the relay device may be incapable of using two backhaul link beams for signal forwarding on the same symbol. The configuration conflict makes the relay device incapable of determining a parameter configuration based on which signal forwarding is to be performed. In this way, the relay device cannot normally assist in the communication between the network device and the terminal device, and transmission performance is affected.

### SUMMARY

This application provides a communication method and a related apparatus and system, to help a relay device better assist in communication between a network device and a terminal device, and improve system transmission performance.

According to a first aspect, a communication method is provided. The method may be applied to a communication system including a network device and a relay device. For example, the method includes: The network device sends first configuration information and second configuration information to the relay device, where the first configuration information is for configuring a first forwarding parameter for the relay device, the second configuration information is for configuring a second forwarding parameter for the relay device, and the first forwarding parameter and the second forwarding parameter are parameters for controlling forwarding behavior of the relay device. The relay device forwards, to a terminal device based on the first configuration information, a signal received from the network device, or forwards, to the network device based on the first configuration information, a signal received from the terminal device.

According to a second aspect, a communication method is provided. The method may be applied to a relay device, for example, may be performed by the relay device, may be performed by a component (for example, a chip or a chip system) configured in the relay device, or may be implemented by a logical module or software that can implement all or some of functions of the relay device. This is not limited in this application.

For example, the method includes: receiving first configuration information and second configuration information from a network device, where the first configuration information is for configuring a first forwarding parameter for the relay device, the second configuration information is for configuring a second forwarding parameter for the relay device, and the first forwarding parameter and the second forwarding parameter are parameters for controlling forwarding behavior of the relay device. The relay device forwards, to a terminal device based on the first configuration information, a signal received from the network device, or forwards, to the network device based on the first configuration information, a signal received from the terminal device.

Because the first configuration information may be for configuring the first forwarding parameter, and the second configuration information may be for configuring the second forwarding parameter, that the network device sends the first configuration information and the second configuration information to the relay device may alternatively be understood as that the network device configures the first forwarding parameter and the second forwarding parameter for the relay device.

Both the first forwarding parameter and the second forwarding parameter are forwarding parameters. The forwarding parameter may be for controlling (in other words, defining) the forwarding behavior of the relay device. The forwarding parameter includes, for example, but is not limited to, a type of a forwarded signal, a priority of the forwarded signal, an index of a forwarding resource, a backhaul link beam, an access link beam, forwarding enabled, forwarding disabled, an amplification gain (for an amplify-and-forward relay), and a reflection configuration matrix (for a reflect-and-forward relay). The first forwarding parameter and the second forwarding parameter each may be one of the foregoing enumerated forwarding parameters, and may be a same item or different items. This is not limited in this application. The first configuration information and the second configuration information may be for respectively configuring specific values of the first forwarding parameter and the second forwarding parameter, so that the relay device performs signal forwarding based on a configuration.

If the specific value configured for the first forwarding parameter by using the first configuration information conflicts with the specific value configured for the second forwarding parameter by using the second configuration information, the relay device may be incapable of determining configuration information based on which signal forwarding is to be performed.

In the method provided in this application, the relay device may perform processing based on the first configuration information. In this way, the relay device can normally perform signal forwarding without being affected by a configuration conflict, so that strong support is provided for wireless communication between the network device and the terminal device that have a long distance, to help improve transmission performance.

With reference to the first aspect or the second aspect, in some possible implementations, the first configuration information conflicts with the second configuration information.

A possible case in which the first configuration information conflicts with the second configuration information is as follows: The first forwarding parameter configured by using the first configuration information and the second forwarding parameter configured by using the second configuration information are a same forwarding parameter, but configuration performed on the first forwarding parameter by using the first configuration information is different from configuration performed on the second forwarding parameter by using the second configuration information; and the first forwarding parameter takes effect in a first time period, the second forwarding parameter takes effect in a second time period, and the first time period and the second time period are in a same slot.

In other words, although the same forwarding parameter is configured by using the first configuration information and the second configuration information, the specific value configured for the first forwarding parameter by using the first configuration information may be different from the specific value configured for the second forwarding parameter by using the second configuration information. However, effective time periods of the first forwarding parameter and the second forwarding parameter are configured in the same slot by using the two pieces of configuration information. Consequently, the relay device cannot determine configuration information that is for configuring a value based on which processing is to be performed.

That the first time period and the second time period are in the same slot includes: The first time period and the second time period have an overlapping time period in the same slot, or the first time period and the second time period are in the same slot but do not overlap.

In an example, the first forwarding parameter and the second forwarding parameter are a same forwarding parameter, but the configuration performed on the first forwarding parameter by using the first configuration information is different from the configuration performed on the second forwarding parameter by using the second configuration information; and the first forwarding parameter and the second forwarding parameter each include a parameter for controlling the relay device to perform signal forwarding.

For example, the first forwarding parameter and the second forwarding parameter each include the backhaul link beam, the access link beam, the amplification gain, or the like. The first forwarding parameter or the second forwarding parameter each may include any parameter other than the forwarding disabled in the foregoing enumerated forwarding parameters.

The following provides a plurality of possible implementations to implement the step that the relay device forwards, to the terminal device based on the first configuration information, the signal received from the network device, or forwards, to the network device based on the first configuration information, the signal received from the terminal device.

Implementation 1: The relay device forwards, to the terminal device based on the first configuration information in the first time period, the signal received from the network device, or forwards, to the network device based on the first configuration information in the first time period, the signal received from the terminal device; and skips performing signal forwarding on a time domain symbol other than the first time period in a target slot.

Implementation 2: The relay device forwards, to the terminal device based on the first configuration information in a target time period, the signal received from the network device, or forwards, to the network device based on the first configuration information in the target time period, the signal received from the terminal device.

Implementation 3: The relay device forwards, to the terminal device based on the first configuration information in the target time period, the signal received from the network device, or forwards, to the network device based on the first configuration information in the target time period, the signal received from the terminal device; and skips performing signal forwarding on another time domain symbol that is in the target slot and that is after the target time period.

Implementation 4: The relay device forwards, to the terminal device based on the first configuration information in the target time period, the signal received from the network device, or forwards, to the network device based on the first configuration information in the target time period, the signal received from the terminal device; and skips performing signal forwarding on another time domain symbol that is in the target slot and that is before the target time period.

Implementation 5: The relay device forwards, to the terminal device based on the first configuration information in the target time period, the signal received from the network device, or forwards, to the network device based on the first configuration information in the target time period, the signal received from the terminal device; and skips performing signal forwarding in a reserved time period.

Implementation 6: The relay device forwards, to the terminal device based on the first configuration information in the first time period and the second time period, the signal received from the network device, or forwards, to the network device based on the first configuration information in the first time period and the second time period, the signal received from the terminal device; and skips performing signal forwarding on a time domain symbol other than the first time period and the second time period in the target slot

Implementation 7: The relay device forwards, to the terminal device based on the first configuration information in the target slot, the signal received from the network device, or forwards, to the network device based on the first configuration information in the target slot, the signal received from the terminal device.

The target slot is the slot which the first time period and the second time period are jointly in, the target time period is an overlapping time period between the first time period and the second time period, and the target time period includes one or more time domain symbols in the target slot; and the reserved time period includes k1 time domain symbols that are in the target slot and that are before the target time period and/or k2 time domain symbols that are in the target slot and that are after the target time period, where both k1 and k2 are preconfigured values or predefined values, and both k1 and k2 are integers greater than or equal to 0.

The relay device may perform the step based on one or more of the foregoing plurality of implementations, to implement signal forwarding.

It should be noted that, in the foregoing plurality of enumerated implementations, specific implementations are provided for how to perform signal forwarding based on the first configuration information. In the implementations, the specific implementations are mainly provided for how to perform processing in the target time period or the first time period in the target slot. In a time period that is in the target slot and that is not mentioned, the relay device may perform or skip performing signal forwarding based on received configuration information (for example, the second configuration information or other configuration information (for example, third configuration information)) with reference to a conventional technology. This is not limited in this application.

In another design, the first configuration information may be for configuring the first forwarding parameter and the effective time period of the first forwarding parameter, and the second configuration information may be for configuring the second forwarding parameter and the effective time period of the second forwarding parameter. A case in which the first configuration information conflicts with the second configuration information is described above. Details are not described herein again.

A difference lies in that, when the relay device forwards, to the terminal device based on the first configuration information, the signal received from the network device, or forwards, to the network device based on the first configuration information, the signal received from the terminal device, signal forwarding may further need to be implemented with reference to the second configuration information. For example, in the implementation 2 to the implementation 6, the relay device may determine the target slot and the target time period based on the effective time period that is of the first forwarding parameter and that is indicated by the first configuration information and the effective time period that is of the second forwarding parameter and that is configured by using the second configuration information, and further forward, to the terminal device based on the first forwarding parameter configured by using the first configuration information, the signal received from the network device, or forward, to the network device based on the first forwarding parameter configured by using the first configuration information, the signal received from the terminal device. In this case, the foregoing seven implementations may alternatively be varied as follows:

Implementation 1: The relay device forwards, to the terminal device based on the first forwarding parameter in the first time period, the signal received from the network device, or forwards, to the network device based on the first forwarding parameter in the first time period, the signal received from the terminal device.

Implementation 2: The relay device forwards, to the terminal device based on the first forwarding parameter in the target time period, the signal received from the network device, or forwards, to the network device based on the first forwarding parameter in the target time period, the signal received from the terminal device.

Implementation 3: The relay device forwards, to the terminal device based on the first forwarding parameter in the target time period, the signal received from the network device, or forwards, to the network device based on the first forwarding parameter in the target time period, the signal received from the terminal device; and skips performing signal forwarding on the another time domain symbol that is in the target slot and that is after the target time period.

Implementation 4: The relay device forwards, to the terminal device based on the first forwarding parameter in the target time period, the signal received from the network device, or forwards, to the network device based on the first forwarding parameter in the target time period, the signal received from the terminal device; and skips performing signal forwarding on the another time domain symbol that is in the target slot and that is before the target time period.

Implementation 5: The relay device forwards, to the terminal device based on the first forwarding parameter in the target time period, the signal received from the network device, or forwards, to the network device based on the first forwarding parameter in the target time period, the signal received from the terminal device; and skips performing signal forwarding in the reserved time period.

Implementation 6: The relay device forwards, to the terminal device based on the first forwarding parameter in the first time period and the second time period, the signal received from the network device, or forwards, to the network device based on the first forwarding parameter in the first time period and the second time period, the signal received from the terminal device; and skips performing signal forwarding on the time domain symbol other than the first time period and the second time period in the target slot

Implementation 7: The relay device forwards, to the terminal device based on the first forwarding parameter in the target slot, the signal received from the network device, or forwards, to the network device based on the first forwarding parameter in the target slot, the signal received from the terminal device.

Further, the method further includes: The relay device determines, based on one or more of a signal type, a resource type, or a resource priority, a specific implementation of performing signal forwarding based on the first configuration information. For example, an implementation is determined in the foregoing seven implementations for execution.

Another possible case in which the first configuration information conflicts with the second configuration information is as follows: The first forwarding parameter configured by using the first configuration information and the second forwarding parameter configured by using the second configuration information are different forwarding parameters; and the configuration performed on the first forwarding parameter by using the first configuration information indicates that the first forwarding parameter takes effect in the first time period, the configuration performed on the second forwarding parameter by using the second configuration information indicates that the second forwarding parameter takes effect in the second time period, and the first time period and the second time period are in the same slot.

In an example, the first forwarding parameter and the second forwarding parameter are different forwarding parameters, the first forwarding parameter is forwarding disabled, and the second forwarding parameter is the parameter for controlling the relay device to perform signal forwarding, for example, any parameter other than the forwarding disabled in the foregoing enumerated forwarding parameters.

Optionally, the method further includes: The relay device skips performing signal forwarding based on the first configuration information.

The following provides a plurality of possible implementations to implement the step that the relay device skips performing signal forwarding based on the first configuration information.

Implementation 1: The relay device skips performing signal forwarding based on the first configuration information in the first time period.

Implementation 2: The relay device skips performing signal forwarding based on the first configuration information in a target time period.

Implementation 3: The relay device skips performing signal forwarding based on the first configuration information in the target time period and on another time domain symbol that is in a target slot and that is before the target time period.

Implementation 4: The relay device skips performing signal forwarding based on the first configuration information in the target time period and on another time domain symbol that is in the target slot and that is after the target time period.

Implementation 5: The relay device skips performing signal forwarding based on the first configuration information in the target time period and a reserved time period.

Implementation 6: The relay device skips performing signal forwarding based on the first configuration information in the target slot.

The target slot is the slot which the first time period and the second time period are jointly in, the target time period is an overlapping time period between the first time period and the second time period, and the target time period includes one or more time domain symbols in the target slot; and the reserved time period includes k1 time domain symbols that are in the target slot and that are before the target time period and/or k2 time domain symbols that are in the target slot and that are after the target time period, where both k1 and k2 are preconfigured values or predefined values, and both k1 and k2 are integers greater than or equal to 0.

The relay device may perform the step based on one or more of the foregoing plurality of implementations, to implement the forwarding disabled.

It should be noted that the foregoing provides the plurality of possible implementations for a case in which the first forwarding parameter is the forwarding disabled parameter. The processing manners are based on an assumption that a priority of the forwarding disabled is higher than a priority of another forwarding parameter for controlling the relay device to perform signal forwarding.

Another possible case in which the first configuration information conflicts with the second configuration information is as follows: The first forwarding parameter configured by using the first configuration information and the second forwarding parameter configured by using the second configuration information are a same forwarding parameter, but configuration performed on the first forwarding parameter by using the first configuration information is different from configuration performed on the second forwarding parameter by using the second configuration information; and the first forwarding parameter takes effect in a first time period, the second forwarding parameter takes effect in a second time period, the first time period is in one or more slots, the second time period is in one or more slots, at least one of the first time period and the second time period is in a plurality of slots, and the first time period and the second time period are jointly in one or more slots.

In other words, a length of the first time period may be less than or equal to one slot, or may be greater than one slot; and a length of the second time period may be less than or equal to one slot, or may be greater than one slot. The first time period and the second time period each may exist in the one or more slots. The first time period and the second time period are jointly in the one or more slots. That is, at least some time domain symbols in the first time period and at least some time domain symbols in the second time period are in one or more same slots.

The at least some time domain symbols in the first time period (or the second time period) are some time domain symbols or all time domain symbols in the first time period (or the second time period). That the at least some time domain symbols in the first time period and the at least some time domain symbols in the second time period are in the same slot includes: The at least some time domain symbols in the first time period and the at least some time domain symbols in the second time period have an overlapping time period in the one or more slots, or the at least some time domain symbols in the first time period and the at least some time domain symbols in the second time period are in the same slot but do not overlap.

In an example, the first forwarding parameter and the second forwarding parameter are a same forwarding parameter, but the configuration performed on the first forwarding parameter by using the first configuration information is different from the configuration performed on the second forwarding parameter by using the second configuration information; and the first forwarding parameter and the second forwarding parameter each include a parameter for controlling the relay device to perform signal forwarding.

For example, the first forwarding parameter and the second forwarding parameter each include the backhaul link beam, the access link beam, the amplification gain, or the like. The first forwarding parameter or the second forwarding parameter each may include any parameter other than the forwarding disabled in the foregoing enumerated forwarding parameters.

The following provides a plurality of possible implementations to implement the step that the relay device forwards, to the terminal device based on the first configuration information, the signal received from the network device, or forwards, to the network device based on the first configuration information, the signal received from the terminal device.

Implementation 1: The relay device forwards, to the terminal device based on the first configuration information in the first time period, the signal received from the network device, or forwards, to the network device based on the first configuration information in the first time period, the signal received from the terminal device; and skips performing signal forwarding on a time domain symbol other than the first time period in a target slot.

Implementation 2: The relay device forwards, to the terminal device based on the first configuration information in a target time period, the signal received from the network device, or forwards, to the network device based on the first configuration information in the target time period, the signal received from the terminal device; and performs or skips performing signal forwarding based on the received configuration information on a time domain symbol other than the target time period in the target slot.

Implementation 3: The relay device forwards, to the terminal device based on the first configuration information in the target time period, the signal received from the network device, or forwards, to the network device based on the first configuration information in the target time period, the signal received from the terminal device; skips performing signal forwarding on another time domain symbol that is in the target slot and that is before the target time period; and performs or skips performing signal forwarding based on the received configuration information on another time domain symbol that is in the target slot and that is after the target time period.

Implementation 4: The relay device forwards, to the terminal device based on the first configuration information in the target time period, the signal received from the network device, or forwards, to the network device based on the first configuration information in the target time period, the signal received from the terminal device; skips performing signal forwarding on the another time domain symbol that is in the target slot and that is after the target time period; and performs or skips performing signal forwarding based on the received configuration information on the another time domain symbol that is in the target slot and that is before the target time period.

Implementation 5: The relay device forwards, to the terminal device based on the first configuration information in the target time period, the signal received from the network device, or forwards, to the network device based on the first configuration information in the target time period, the signal received from the terminal device; skips performing signal forwarding in a reserved time period; and performs or skips performing signal forwarding based on the received configuration information on a time domain symbol other than the target time period and the reserved time period in the target slot.

Implementation 6: The relay device forwards, to the terminal device based on the first configuration information in the first time period and the second time period, the signal received from the network device, or forwards, to the network device based on the first configuration information in the first time period and the second time period, the signal received from the terminal device; and skips performing signal forwarding on a time domain symbol other than the first time period and the second time period in the target slot.

Implementation 7: The relay device forwards, to the terminal device based on the first configuration information in the target slot, the signal received from the network device, or forwards, to the network device based on the first configuration information in the target slot, the signal received from the terminal device.

Implementation 8: The relay device forwards, to the terminal device based on the first configuration information in the first time period, the signal received from the network device, or forwards, to the network device based on the first configuration information in the first time period, the signal received from the terminal device; and forwards, to the terminal device based on the second configuration information on a time domain symbol other than the target slot in the second time period, the signal received from the network device, or forwards, to the network device based on the second configuration information on the time domain symbol other than the target slot in the second time period, the signal received from the terminal device.

The target slot is the slot which the first time period and the second time period are jointly in, the target time period is an overlapping time period between the first time period and the second time period, and the target time period includes one or more time domain symbols in the target slot; and the reserved time period includes k1 time domain symbols that are in the target slot and that are before the target time period and/or k2 time domain symbols that are in the target slot and that are after the target time period, where both k1 and k2 are preconfigured values or predefined values, and both k1 and k2 are integers greater than or equal to 0.

Because at least one of the first time period and the second time period may cross slots, in other words, exist in the one or more slots, the target slot may vary with different definitions. When the target slot is the slot which the first time period and the second time period are jointly in, the target slot may be a slot including the target time period. When the target slot is a slot including the first time period and the second time period, the target slot may include a union set of the slot which the first time period is in and the slot which the second time period is in. In other words, the target slot may be a slot including both the at least some time domain symbols in the first time period and the at least some time domain symbols in the second time period, in other words, a slot in which the first configuration information conflicts with the second configuration information, in other words, a conflicting slot.

It can be learned from the foregoing definitions of the target slot and the target time period that the target slot may be one slot, or may be a plurality of slots; and a length of the target time period may be less than or equal to one slot, or may be greater than the slot.

Further, the method further includes: The relay device determines, based on one or more of a device capability, an indication of the network device, a signal type, a resource type, or a resource priority, a specific implementation of performing signal forwarding based on the first configuration information. For example, an implementation is determined in the foregoing eight implementations for execution.

With reference to the first aspect or the second aspect, in some possible implementations, the first configuration information is carried in first signaling for configuring a first forwarding resource, and the second configuration information is carried in second signaling for configuring a second forwarding resource.

That the first configuration information conflicts with the second configuration information is that the first forwarding resource conflicts with the second forwarding resource.

The foregoing implementation 1 may alternatively be understood as follows: When the first forwarding resource conflicts with the second forwarding resource, the first forwarding resource with a higher priority is effective, and the second forwarding resource with a lower priority is ineffective.

The implementation 2 may alternatively be understood as follows: On a time domain symbol on which the first forwarding resource conflicts with the second forwarding resource, the first forwarding resource with the higher priority is effective, and the second forwarding resource with the lower priority is ineffective. However, on a time domain symbol on which the first forwarding resource does not conflict with the second forwarding resource, the second forwarding resource with the lower priority is still effective. In other words, the second forwarding resource with the lower priority is ineffective only on the conflicting time domain symbol.

The implementation 7 may alternatively be understood as follows: When the first forwarding resource conflicts with the second forwarding resource, configuration information with a higher priority is effective in the conflicting slot, but configuration information with a lower priority is ineffective in the conflicting slot.

The implementation 8 may alternatively be understood as follows: When the first forwarding resource conflicts with the second forwarding resource, the configuration information with the lower priority is effective in a slot in which an effective time period of the configuration information with the lower priority is not covered; or the configuration information with the lower priority is ineffective in a slot in which the effective time period of the configuration information with the lower priority is covered. In other words, the configuration information with the higher priority is effective in the conflicting slot, and the configuration information with the lower priority is ineffective in the conflicting slot, but the configuration information with the lower priority is effective in a non-conflicting slot.

With reference to the first aspect or the second aspect, in some possible implementations, the first signaling is further for configuring a first reference (reference) subcarrier spacing (sub carrier space, SCS), the second signaling is further for configuring a second reference subcarrier spacing. It may be understood that the first reference subcarrier spacing corresponds to the first forwarding resource, and the second reference subcarrier spacing corresponds to the second forwarding resource.

Optionally, the first time period is determined based on the first reference subcarrier spacing, and the second time period is determined based on the second reference subcarrier spacing.

It should be understood that, that the first time period is determined based on the first reference subcarrier spacing is that the first time period is represented based on a time domain symbol length corresponding to the first reference subcarrier spacing, and that the second time period is determined based on the second reference subcarrier spacing is that the second time period is represented based on a time domain symbol length corresponding to the second reference subcarrier spacing. In this case, the first time period and the second time period are measured based on different time domain symbol lengths.

Optionally, the first time period and the second time period are determined based on a common subcarrier spacing.

Because a time domain symbol length is related to a subcarrier spacing, and the reference subcarrier spacing of the first forwarding resource is different from the reference subcarrier spacing of the second forwarding resource, a time domain symbol length of the first time period is different from a time domain symbol length of the second time period. In this case, the first time period and the second time period may be determined based on a time domain symbol length corresponding to the common subcarrier spacing.

The following provides a plurality of possible designs of the common subcarrier spacing as examples.

For example, the common subcarrier spacing is a reference subcarrier spacing configured in signaling with a higher priority in the first signaling and the second signaling.

For another example, the common subcarrier spacing is a reference subcarrier spacing corresponding to a forwarding resource with longer effective duration in the first forwarding resource and the second forwarding resource.

For another example, the common subcarrier spacing is a reference subcarrier spacing corresponding to a forwarding resource with an earlier start effective time point in the first forwarding resource and the second forwarding resource.

For another example, the common subcarrier spacing is a reference subcarrier spacing corresponding to a forwarding resource with a later start effective time point in the first forwarding resource and the second forwarding resource.

For another example, the common subcarrier spacing is a subcarrier spacing preconfigured by the network device.

For another example, the common subcarrier spacing is a larger one of the first reference subcarrier spacing and the second reference subcarrier spacing.

Based on the foregoing two manners, the relay device may determine the first time period and the second time period, so that the relay device accurately determines whether there is a configuration conflict between the first configuration information and the second configuration information and how to perform processing based on the foregoing implementations when there is a configuration conflict.

In addition, in the foregoing implementations, the specific implementations are mainly provided for how to perform processing in the target time period or the first time period in the target slot. In the time period that is in the target slot and that is not mentioned, the relay device may perform or skip performing signal forwarding based on the received configuration information (for example, the second configuration information or the other configuration information (for example, the third configuration information)) with reference to the conventional technology. This is not limited in this application.

It should be further noted that, because behavior of the relay device varies with configuration of different forwarding parameters, when the forwarding parameter, namely, the forwarding disabled, is configured for the relay device, the relay device may skip performing signal forwarding. Therefore, the step that the relay device skips performing signal forwarding based on the first configuration information may be for replacing the step that the relay device forwards, to the terminal device based on the first configuration information, the signal received from the network device, or forwards, to the network device based on the first configuration information, the signal received from the terminal device, and the step of skipping performing signal forwarding does not necessarily need to be performed after the signal forwarding step is completed. In other words, the relay device may perform or skip performing signal forwarding based on the first configuration information.

It should be further noted that, in the plurality of implementations provided above, performing an action in a time period or a slot may specifically be performing an action on each time domain symbol in the time period or the slot.

In another design, the first configuration information may be for configuring the first forwarding parameter and the effective time period of the first forwarding parameter, and the second configuration information may be for configuring the second forwarding parameter and the effective time period of the second forwarding parameter. A case in which the first configuration information conflicts with the second configuration information is described above. Details are not described herein again.

A difference lies in that, when the relay device skips performing signal forwarding based on the first configuration information, skipping performing signal forwarding may further need to be implemented with reference to the second configuration information. For example, in the implementation 2 to the implementation 6, the relay device may determine the target slot and the target time period based on the effective time period that is of the first forwarding parameter and that is indicated by the first configuration information and the effective time period that is of the second forwarding parameter and that is configured by using the second configuration information, and further skip performing signal forwarding based on the first forwarding parameter configured by using the first configuration information. In this case, the foregoing six implementations may alternatively be varied as follows:
Implementation 1: The relay device skips performing signal forwarding based on the first forwarding parameter in the first time period.
Implementation 2: The relay device skips performing signal forwarding based on the first forwarding parameter in the target time period.
Implementation 3: The relay device skips performing signal forwarding based on the first forwarding parameter in the target time period and on the another time domain symbol that is in the target slot and that is before the target time period.
Implementation 4: The relay device skips performing signal forwarding based on the first forwarding parameter in the target time period and on the another time domain symbol that is in the target slot and that is after the target time period.
Implementation 5: The relay device skips performing signal forwarding based on the first forwarding parameter in the target time period and the reserved time period.
Implementation 6: The relay device skips performing signal forwarding based on the first forwarding parameter in the target slot. Further, the method further includes: The relay device determines, based on one or more of a signal type, a resource type, or a resource priority, a specific implementation of skipping performing signal forwarding based on the first configuration information. For example, an implementation is determined in the foregoing six implementations for execution.

With reference to the first aspect or the second aspect, in some possible implementations, a priority of the first configuration information is higher than a priority of the second configuration information.

In other words, the relay device performs processing based on the configuration information with the higher priority in the first configuration information and the second configuration information. In this specification, for ease of description, it is assumed that the priority of the first configuration information is higher than the priority of the second configuration information. Processing is performed based on the information with the higher priority, so that the configuration information with the higher priority can be applied, and this helps the network device flexibly schedule the relay device.

Optionally, the priority of the first configuration information and the priority of the second configuration information are determined based on priority information.

In a possible design, the priority information is a preset value carried in a preset field in the first signaling or the second signaling, where the first signaling is signaling that carries the first configuration information, and the second signaling is signaling that carries the second configuration information.

In an example, the priority information may be a preset value carried in an "overwritten (Overwritten)" field in the signaling.

In another example, the priority information may be a preset value carried in a "no overwritten (No Overwritten)" field in the signaling.

In still another example, the priority information may be a preset value carried in "priority flag (priorityFlag)" in the signaling.

It may be understood that the "overwritten" field, the "no overwritten" field, and the "priority flag" field are several possible examples of the preset field.

In another possible design, the priority information is a first priority value carried in the first signaling and a second priority value carried in the second signaling, where the first signaling is signaling that carries the first configuration information, and the second signaling is signaling that carries the second configuration information.

In a possible design, a larger priority value indicates a higher priority. In this application, because the priority of the first configuration information is higher than the priority of the second configuration information, the first priority value may be greater than the second priority value.

In another possible design, a smaller priority value indicates a higher priority. In this application, because the priority of the first configuration information is higher than the priority of the second configuration information, the first priority value may be less than the second priority value.

Further, the priority information corresponds to a forwarding parameter, corresponds to a forwarding resource, corresponds to a forwarding resource set, or corresponds to a forwarding configuration, where the forwarding resource includes one or more forwarding parameters, the forwarding resource set includes one or more forwarding resources, and the forwarding configuration includes one or more forwarding resources and/or one or more forwarding resource sets.

The forwarding parameter is configured by using configuration information, and each forwarding parameter may correspond to one piece of configuration information. That the priority information corresponds to the forwarding parameter means that, when there are a plurality of pieces of configuration information in a same piece of signaling, priorities of the configuration information does not depend on a priority of the signaling. Priorities of different configuration information in the same piece of signaling may be different.

The forwarding resource (forwarding resource, Fwd Resource) is for defining a resource used by the relay device to perform signal forwarding, for example, may be for defining one or more of the following: a time domain resource, time domain behavior, a resource type, resource priority information, the access link beam, the backhaul link beam, the amplification gain (for the amplify-and-forward relay), the reflection configuration matrix (for the reflect-and-forward relay), the forwarding resource index, and the like. The forwarding resource may be indicated by at least one of signaling such as an information element (information element, IE) in a radio resource control (radio resource control, RRC) message, a medium access control (medium access control, MAC) control element (control element, CE), or downlink control information (downlink control information, DCI).

Because the forwarding resource includes the one or more forwarding parameters, that the priority information corresponds to the forwarding resource means that priorities of configuration information corresponding to the forwarding parameters in the forwarding resource are the same.

The forwarding resource set (Fwd Resource Set) includes the one or more forwarding resources, and may also be referred to as a forwarding resource list. The forwarding resource set may be for defining a resource set used by the relay device to perform signal forwarding, for example, may be for defining one or more of the following: the time domain resource, the access link beam, the backhaul link beam, the amplification gain (for the amplify-and-forward relay), the reflection configuration matrix (for the reflect-and-forward relay), the forwarding resource index, a forwarding resource set index, and the like. The forwarding resource set may be another information element carried in the RRC message.

Because the forwarding resource set includes the one or more resources, and the forwarding resource includes the one or more forwarding parameters, that the priority information corresponds to the forwarding resource set means that priorities of configuration information corresponding to forwarding parameters in the forwarding resources in the forwarding resource set are the same.

Forwarding configuration (Fwd Config) may also be referred to as a forwarding resource configuration (Fwd Resource Config), and includes the one or more forwarding resources, the one or more forwarding resource sets, and a forwarding configuration index (or a forwarding resource configuration index). The forwarding configuration may also be another information element carried in the RRC message.

Because the forwarding configuration includes the one or more forwarding resources and/or the one or more forwarding resource sets, the forwarding resource set includes the one or more forwarding resources, and the forwarding resource includes the one or more forwarding parameters, that the priority information corresponds to the forwarding configuration means that priorities of configuration information corresponding to forwarding parameters in the forwarding configuration this time are the same.

Optionally, the first configuration information is carried in the first signaling, the second configuration information is carried in the second signaling, and the priorities of the first configuration information and the second configuration information are determined based on priorities of the first signaling and the second signaling. In other words, if the priority of the first signaling is higher than the priority of the second signaling, the priority of the first configuration information is higher than the priority of the second configuration information.

The priorities of the first signaling and the second signaling may be determined based on a preset rule. Several possible rules are enumerated below:
Rule 1: In a descending order of priorities, signaling is sorted as follows: signaling for scheduling an aperiodic resource, signaling for activating a semi-persistent resource, and signaling for configuring a periodic resource.
Rule 2: In a descending order of priorities, signaling is sorted as follows: signaling for configuring a periodic resource, signaling for scheduling an aperiodic resource, and signaling for activating a semi-persistent resource.
Rule 3: In a descending order of priorities, signaling is sorted as follows: signaling for configuring a periodic resource, signaling for activating a semi-persistent resource, and signaling for scheduling an aperiodic resource.
Rule 4: A priority of signaling received first is higher than a priority of signaling received later.
Rule 5: A longer effective time period of a forwarding parameter configured by using configuration information in signaling indicates a higher priority of the signaling.
Rule 6: A shorter effective time period of a forwarding parameter configured by using configuration information in signaling indicates a higher priority of the signaling.
Rule 7: A higher priority of a forwarding parameter configured by using configuration information in signaling indicates a higher priority of the signaling.
Rule 8: A higher priority of a signal forwarded by using a resource configured in signaling indicates a higher priority of the signaling.

In this application, because the priority of the first configuration information is higher than the priority of the second configuration information, the priority of the first signaling is higher than the priority of the second signaling.

Corresponding to the foregoing rules, the first signaling may satisfy one of the following:

The first signaling is signaling for scheduling an aperiodic resource;
the first signaling is signaling for configuring a periodic resource;
the first signaling is received by the relay device earlier than the second signaling;
an effective time period of a forwarding parameter configured in the first signaling is longer than an effective time period of a forwarding parameter configured in the second signaling;
the effective time period of the forwarding parameter configured in the first signaling is shorter than the effective time period of the forwarding parameter configured in the second signaling;
a priority of the forwarding parameter configured in the first signaling is higher than a priority of the forwarding parameter configured in the second signaling; or
a resource configured in the first signaling is for forwarding a preset signal.

A priority of each forwarding parameter may be predefined or preconfigured. For example, the priority of the forwarding disabled is higher than the priority of the another parameter for controlling the relay device to perform signal forwarding.

The preset signal may alternatively be predefined or preconfigured. For example, a priority of a broadcast signal is higher than a priority of a unicast signal.

Further, the priority of the first configuration information and the priority of the second configuration information correspond to one slot.

When the forwarding parameters are configured for the relay device by using the pieces of signaling, configuration may be performed based on a slot. Therefore, the priorities of the pieces of configuration information may alternatively be compared at a granularity of the slot. In other words, configuration information may correspond to one priority in each slot. In other words, the priorities of the first configuration information and the second configuration information may be different in different slots.

The foregoing provides the plurality of methods for determining the priorities of the first configuration information and the second configuration information. According to the methods, the relay device may determine the configuration information with the higher priority, to perform processing based on the determined configuration information. In this way, the relay device can normally perform signal forwarding without being affected by the configuration conflict, so that the strong support is provided for the wireless communication between the network device and the terminal device that have the long distance, to help improve the transmission performance.

According to a third aspect, a communication method is provided. The method may be applied to a communication system including a network device and a relay device. For example, the method includes: The network device sends fourth configuration information and fifth configuration information to the relay device, where the fourth configuration information is for configuring, for the relay device, a sending parameter for uplink transmission, and the fifth configuration information is for configuring, for the relay device, a forwarding parameter for uplink forwarding. An uplink signal is sent based on at least one of the fourth configuration information or the fifth configuration information.

According to a fourth aspect, a communication method is provided. The method may be applied to a relay device, for example, may be performed by the relay device, may be performed by a component (for example, a chip or a chip system) configured in the relay device, or may be implemented by a logical module or software that can implement all or some of functions of the relay device. This is not limited in this application.

For example, the method includes: receiving fourth configuration information and fifth configuration information from a network device, where the fourth configuration information is for configuring, for the relay device, a sending parameter for uplink transmission, and the fifth configuration information is for configuring, for the relay device, a forwarding parameter for uplink forwarding; and sending an uplink signal based on at least one of the fourth configuration information or the fifth configuration information.

For descriptions of the forwarding parameter, refer to the foregoing related descriptions in the first aspect and the second aspect. Details are not described again. The sending parameter is similar to the foregoing forwarding parameter, and is for controlling (in other words, defining) transmission behavior of performing signal transmission by the relay device through a control link. The sending parameter may include, for example, but is not limited to, signal bandwidth (or a frequency domain resource), a time domain resource, a transmit power (or a power spectral density), a transmit beam, a precoding vector (or a precoding matrix), and an amplification gain.

That the fourth configuration information conflicts with the fifth configuration information may specifically mean that the sending parameter configured by using the fourth configuration information and the forwarding parameter configured by using the fifth configuration information exceed a capability range of the relay device, exceed a threshold, or the like.

In a possible case, the sending parameter configured by using the fourth configuration information and the forwarding parameter configured by using the fifth configuration information may be a same parameter, but effective time periods of the parameters overlap. Consequently, the relay device cannot simultaneously perform uplink transmission based on the fourth configuration information and the fifth configuration information.

In another possible case, the sending parameter configured by using the fourth configuration information and the forwarding parameter configured by using the fifth configuration information may alternatively be different parameters, and effective time periods of the two parameters overlap. Consequently, the relay device cannot simultaneously perform uplink transmission based on the fourth configuration information and the fifth configuration information.

In this way, after receiving the fourth configuration information and the fifth configuration information, the relay device cannot determine whether to perform processing based on the fourth configuration information or the fifth configuration information. This affects normal communication of the relay device, and affects system transmission performance.

In the method provided in this application, based on at least one of the fourth configuration information or the fifth configuration information, for example, based on a parameter configured by using one of the pieces of configuration information, a value of a parameter configured by using the other piece of configuration information is adjusted; a value of a parameter configured by using each piece of configuration information is adjusted; or a signal on one selected link in two links is sent, and a signal on the other link is not sent. In this way, the relay device can normally perform uplink transmission within the capability range of the relay device, to assist in communication between the network device and a terminal device, and help improve the system transmission performance.

With reference to the third aspect or the fourth aspect, in some possible implementations, sending the uplink signal based on at least one of the fourth configuration information or the fifth configuration information includes: sending the uplink signal to the network device through a control link based on the fourth configuration information; or forwarding, to the network device through a forwarding link based on the fifth configuration information, the uplink signal from a terminal device.

Whether the relay device sends the uplink signal based on the fourth configuration information or sends the uplink signal based on the fifth configuration information may be determined based on priorities of the fourth configuration information and the fifth configuration information. In this way, it can be ensured that configuration information with a higher priority can be configured.

When sending the uplink signal to the network device through the control link based on the fourth configuration information, the relay device may not forward the uplink signal through the forwarding link, or may forward the uplink signal from the terminal device through the forwarding link. However, a forwarding parameter based on which forwarding is performed is not necessarily the forwarding parameter configured by using the fifth configuration information, but a parameter obtained through adjustment.

When forwarding, to the network device through the forwarding link based on the fifth configuration information, the uplink signal from the terminal device, the relay device may not send the uplink signal through the control link, or may send the uplink signal to the network device through the control link. However, a sending parameter based on which sending is performed is not necessarily the sending parameter configured by using the fourth configuration information, but a parameter obtained through adjustment.

With reference to the third aspect or the fourth aspect, in some possible implementations, the priority of the fourth configuration information and the priority of the fifth configuration information are determined based on a priority of the uplink signal sent through the control link and a priority of the uplink signal forwarded through the forwarding link, determined based on a priority of a transmission resource for sending the signal through the control link and a priority of a forwarding resource for forwarding the uplink signal through the forwarding link, or determined based on priority information.

For comparison between the priorities of the fourth configuration information and the fifth configuration information, refer to the implementations provided in the first aspect or the second aspect. For example, comparison may be performed by using the priority information, or comparison may be performed by using a preset rule. The priority information may be, for example, a value carried in a preset field (for example, an "overwritten" field or a "no overwritten" field) in signaling for carrying the fourth configuration information or the fifth configuration information, or may be priority values carried in signaling for carrying the fourth configuration information and the fifth configuration information. For brevity, details are not described herein again.

The configuration information with the higher priority is determined through comparison of the priorities of the signals or comparison of the priorities of the resources, or based on the priority information, so that transmission of a more important signal is preferentially performed, to help ensure the system transmission performance. Further, the priority of the fourth configuration information and the priority of the fifth configuration information correspond to one slot.

When the sending parameter and the forwarding parameter are configured for the relay device by using the pieces of signaling, configuration may be performed based on a slot. Therefore, the priorities of the pieces of configuration information may alternatively be compared at a granularity of the slot. In other words, configuration information may correspond to one priority in each slot. In other words, the priorities of the fourth configuration information and the fifth configuration information may be different in different slots.

It should be understood that the method in the first aspect or the second aspect and the method in the third aspect or the fourth aspect may be implemented in combination, or may be separately implemented. This is not limited in this application.

According to a fifth aspect, a communication apparatus is provided, and includes modules or units configured to implement the methods in the second aspect, the fourth aspect, and any possible implementation of the second aspect and the fourth aspect. It should be understood that each module or unit may implement a corresponding function by executing a computer program.

According to a sixth aspect, this application provides a communication apparatus, including a processor. The processor is configured to perform the communication methods in the second aspect, the fourth aspect, and any possible implementation of the second aspect and the fourth aspect.

The apparatus may further include a memory, configured to store instructions and data. The memory is coupled to the processor. When executing the instructions stored in the memory, the processor may implement the methods described in the foregoing aspects. The apparatus may further include a communication interface. The communication interface is used by the apparatus to communicate with another device. For example, the communication interface may be a transceiver, a circuit, a bus, a module, or another type of communication interface.

According to a seventh aspect, this application provides a chip system. The chip system includes at least one processor, configured to support implementation of the functions in the second aspect, the fourth aspect, and any possible implementation of the second aspect and the fourth aspect, for example, receive or process the data and/or the information in the foregoing methods.

In a possible design, the chip system further includes a memory, the memory is configured to store program instructions and data, and the memory is located inside or outside the processor.

The chip system may include a chip, or may include the chip and another discrete device.

According to an eighth aspect, a communication system is provided, and includes the foregoing network device and the foregoing relay device.

The network device may be configured to implement the method performed by the network device in the first aspect, and the relay device may be configured to implement the method performed by the relay device in the first aspect or the second aspect; and/or the network device may be configured to implement the method performed by the network device in the third aspect, and the relay device may be configured to implement the method performed by the relay device in the third aspect or the fourth aspect.

According to a ninth aspect, this application provides a computer-readable storage medium, including a computer program. When the computer program is run on a computer, the computer is enabled to implement the methods in the first aspect to the fourth aspect and any possible implementation of the first aspect to the fourth aspect.

According to a tenth aspect, this application provides a computer program product. The computer program product includes a computer program (which may also be referred to as code or instructions). When the computer program is run, a computer is enabled to perform the method in the first aspect to the fourth aspect and any possible implementation of the first aspect to the fourth aspect.

It should be understood that the fifth aspect to the tenth aspect of this application correspond to the technical solutions in the first aspect of this application, and beneficial effects achieved by the aspects and the corresponding feasible implementations are similar. Details are not described again.

### BRIEF DESCRIPTION OF DRAWINGS

FIG. 1 is a diagram of system architectures applicable to a method provided in an embodiment of this application;
FIG. 2 is a diagram of a structure of a network device according to an embodiment of this application;
FIG. 3 is a diagram of a structure of a relay device according to an embodiment of this application;
FIG. 4 is a diagram of a structure of a terminal device according to an embodiment of this application;
FIG. 5 is a diagram of a conflict between configuration information in an RRC message and configuration information in a MAC CE;
FIG. 6 is a schematic flowchart of a communication method according to an embodiment of this application;
FIG. 7, FIG. 8, and FIG. 9 are diagrams of conflicts between first configuration information and second configuration information according to embodiments of this application;
FIG. 10 and FIG. 11 are diagrams of performing signal forwarding by a relay device based on first configuration information according to embodiments of this application;
FIG. 12 is a diagram of skipping performing signal forwarding by a relay device based on configuration information according to an embodiment of this application;
FIG. 13 is a diagram of a conflict between fourth configuration information and fifth configuration information according to an embodiment of this application;
FIG. 14 is a schematic flowchart of a communication method according to another embodiment of this application;
FIG. 15 and FIG. 16 are schematic block diagrams of communication apparatuses according to embodiments of this application;
FIG. 17 is a diagram of a conflict between first configuration information and second configuration information according to an embodiment of this application;
FIG. 18 is a diagram of performing signal forwarding by a relay device based on first configuration information according to an embodiment of this application;
FIG. 19 is a diagram of a conflict between first configuration information and second configuration information according to an embodiment of this application;
FIG. 20 is a diagram of performing signal forwarding by a relay device based on first configuration information according to an embodiment of this application;
FIG. 21 is a diagram of a conflict between first configuration information and second configuration information according to an embodiment of this application;
FIG. 22 is a diagram of performing signal forwarding by a relay device based on first configuration information according to an embodiment of this application;
FIG. 23 is a diagram of a conflict between first configuration information and second configuration information according to an embodiment of this application;
FIG. 24 is a diagram of performing signal forwarding by a relay device based on first configuration information according to an embodiment of this application; and
FIG. 25 is a diagram in which first signaling and second signaling are respectively for configuring a first forwarding resource and a second forwarding resource according to an embodiment of this application.

### DESCRIPTION OF EMBODIMENTS

The following describes technical solutions in this application with reference to accompanying drawings.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a sidelink (sidelink, SL) communication system, a universal mobile telecommunications system (universal mobile telecommunication system, UMTS), a worldwide interoperability for microwave access (worldwide interoperability for microwave access, WiMAX) communication system, a 5th generation (5th generation, 5G) mobile communication system, or a new radio access technology (new radio access technology, NR). The 5G mobile communication system may include non-standalone (non-standalone, NSA) networking and/or standalone (standalone, SA) networking.

The technical solutions provided in this application may be further applied to a future communication system, for example, a 6th generation (6th generation, 6G) mobile communication system. This is not limited in this application.

A network device in this application may be a device configured to communicate with a terminal, or may be a device that enables the terminal to access a wireless network. The network device may be a node in a radio access network (radio access network, RAN), which is referred to as a RAN node for short.

In a possible scenario, the RAN node may be a base station (base station, BS), an evolved NodeB (evolved NodeB, eNodeB), a transmission reception point (transmission reception point, TRP), a home base station (for example, a home evolved NodeB, or a home NodeB, HNB), an access point (access point, AP) of wireless fidelity (wireless fidelity, Wi-Fi), a mobile switching center, a next generation NodeB (next generation NodeB, gNB) in the 5G mobile communication system, a next generation NodeB in the 6th generation (6th generation, 6G) mobile communication system, a base station in the future mobile communication system, or the like. Alternatively, the RAN node may be a device or the like that undertakes a base station function in a D2D communication system, a V2X communication system, an M2M communication system, and an IoT communication system. Alternatively, the RAN node may be a RAN node in a non-terrestrial network (non terrestrial network, NTN). That is, the RAN node may be deployed on a high-altitude platform or a satellite. The RAN node may be a macro base station, may be a micro base station or an indoor base station, may be a relay node, a donor node, or the like, or may be a radio controller in a cloud radio access network (cloud radio access network, CRAN) scenario, a node in an open radio access network (open radio access network, O-RAN or ORAN) scenario, or the like. Optionally, the RAN node may alternatively be a server, a wearable device, a vehicle, a vehicle-mounted device, or the like. For example, a RAN node in a vehicle to everything (vehicle to everything, V2X) technology may be a roadside unit (road side unit, RSU). Certainly, the RAN node may alternatively be a node in a core network.

In another possible scenario, a plurality of RAN nodes coordinate to assist the terminal in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an open CU (O-CU), the DU may also be referred to as an open DU (O-DU), the CU-CP may also be referred to as an open CU-CP (O-CU-CP), the CU-UP may also be referred to as an open CU-UP (O-CU-UP), and the RU may also be referred to as an open RU (O-RU).

Any unit in the CU (or the CU-CP or the CU-UP), the DU, and the RU may be implemented by using a software module, a hardware module, or a combination of the software module and the hardware module.

A terminal device in this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device that has a wireless connection function. Currently, some examples of the terminal device may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), an uncrewed aerial vehicle, a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), and the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that is directly worn or integrated into clothes or an accessory of the user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as the smartphones, for example, various smart bands or smart jewelry for monitoring physical signs.

In addition, the terminal device may alternatively be a terminal device in the internet of things (internet of things, IoT) system. An IoT is an important component in future development of information technologies. A main technical feature of the IoT is to connect things to a network by using a communication technology, to implement an intelligent network for human-machine interconnection and thing-thing interconnection. An IoT technology can achieve massive connections, deep coverage, and terminal power saving by using, for example, a narrow band (narrow band, NB) technology.

In addition, the terminal device may further include sensors such as a smart printer, a train detector, and a gas station. Main functions include: collecting data (which is a function of some terminal devices), receiving control information and downlink data of an access network device, sending an electromagnetic wave, and transmitting uplink data to the access network device.

In embodiments of this application, a relay device has a signal forwarding function.

In a possible implementation, the relay device has a function of performing radio frequency processing (for example, amplification and noise reduction) on a received signal and forwarding a signal obtained through the radio frequency processing. For example, the relay device may amplify the signal and then forward an amplified signal. For another example, the relay device may alternatively shift a carrier frequency of the signal. For another example, the relay device may alternatively demodulate the signal, re-modulate a demodulated signal, and then forward a re-modulated signal. For another example, the relay device may alternatively perform noise reduction on the signal, and then forward a signal obtained through the noise reduction. A network apparatus may alternatively control the relay device to perform more performance enhancement functions, for example, relay transmit power control, relay amplification gain control, relay beam sweeping control, or relay precoding control. A relay that performs signal forwarding in this manner may be referred to as an amplify-and-forward relay.

In another possible implementation, the relay device may perform signal forwarding based on reflection or transmittance. For example, a relay apparatus uses a reflector antenna or a transmissive antenna to directly reflect or transmit the signal (some signal attenuation may occur during reflection or transmittance). The relay device may be considered as a single antenna array, and each antenna element not only receives a signal but also reflects (or transmits) a signal. The relay device may include, for example, a reflector, a reflecting surface, an intelligent reflecting surface (intelligent reflecting surface, IRS), a reconfigurable reflecting surface (reconfigurable reflecting surface, RIS), a reflecting array, an intelligent reflecting array (intelligent reflecting array), an intelligent reflector, a backscatter device (backscatter device), a passive device (passive device), a semi-passive device (semi-passive device), or an ambient signal device (ambient signal device). A relay that performs signal forwarding in this manner may be referred to as a reflect-and-forward relay (or a transmit-and-forward relay).

The amplify-and-forward relay usually has a plurality of panels. Some panels are for communicating with the access network device, and may be referred to as a backhaul side. Other panels are for communicating with the terminal device, and may be referred to as an access side. Each panel may include a plurality of antennas, and a beam may be formed on a single panel, to obtain better relay transmission performance. If the access side of the relay has a multi-beam capability, when a signal is forwarded via the relay, beams on the access side of the relay need to be aligned with the terminal device, to obtain good transmission performance. A typical structure of an amplification relay includes two panels, one of which is for communicating with the access network device and may be referred to as the backhaul side, and the other of which is for communicating with the terminal device and may be referred to as the access side. Generally, one of the panels is for receiving a signal, and the received signal is forwarded or sent by the other panel after being amplified.

Considering the beam capability of the access side, forwarding may be further classified into single-beam forwarding and multi-beam forwarding; or considering a networking form, forwarding may be further classified into single-hop forwarding and multi-hop forwarding.

An amplification circuit of the amplify-and-forward relay may bring noise to a forwarded signal. When the relay noise is transmitted to a receiving end, noise interference may be caused to the receiving end. Therefore, in network transmission, if the relay amplifies the signal by an excessively high multiple, an output power for forwarding the signal by the relay is high. This may cause interference. In addition, a relay power amplifier may even enter a saturation region, and the receiving end cannot correctly demodulate the signal due to distortion of the forwarded signal. Currently, a means of reducing the interference is mainly managing an amplify-and-forward function of the relay, that is, configuring an amplification gain (or the output power) of the relay device and performing on-off management (which is also referred to as on-off control, that is, controlling the relay to enable or disable amplification and forwarding).

The reflect-and-forward relay (or the transmit-and-forward relay) may be usually considered as a single panel, and each antenna element not only receives the signal but also reflects (or transmits) the signal.

The relay device may alternatively be considered as a terminal device in a special form. If a capability of controlling the relay device by a network side is considered, relay devices may be classified into a non-intelligent relay and an intelligent relay, or may be classified into a network-uncontrolled repeater (uncontrolled repeater) and a network-controlled repeater (network controlled repeater, NetConRepeater or NCR). The network device may control the intelligent relay to perform more performance enhancement functions, for example, at least one of relay transmit power control, relay amplification gain control, relay beam sweeping control, relay precoding control, on-off control, and uplink/downlink forwarding control.

In this application, the relay device may be used in a multi-hop relay cascading communication network. That is, the relay node may establish a connection to the network device via at least one upper-level relay node, and is controlled by the network device. In this case, the upper-level relay node may be considered as a special network device. Alternatively, the relay node may establish a connection to the terminal device via at least one lower-level relay node. In this case, the lower-level relay node may be considered as a special terminal device.

In this specification, the relay device, the relay, and the relay node appear alternately, and meanings expressed by the relay device, the relay, and the relay node are the same.

It should be understood that none of specific forms of the network device, the relay device, and the terminal device are limited in this application.

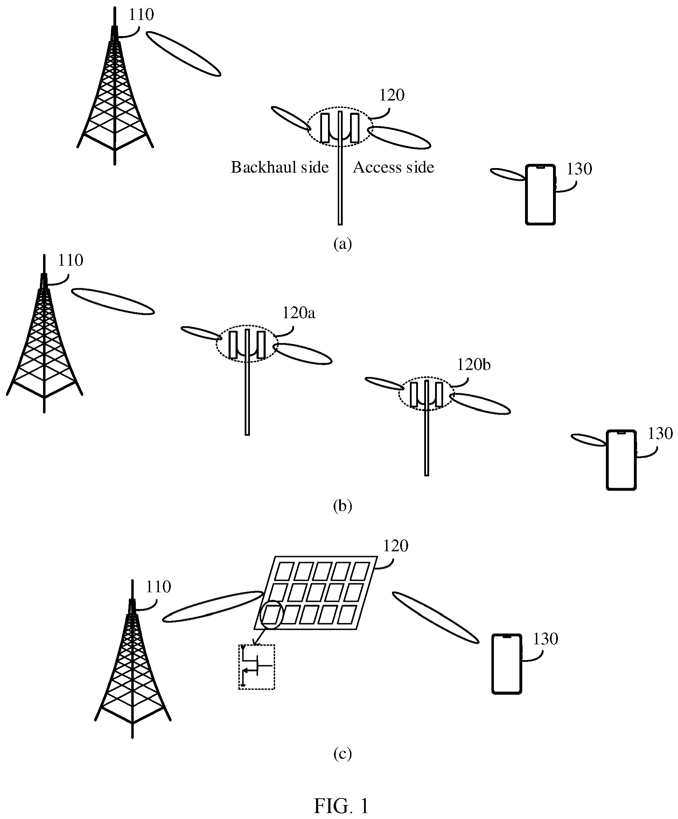

FIG. 1 is a diagram of system architectures applicable to a method provided in an embodiment of this application. (a), (b), and (c) in FIG. 1 respectively show three different architectures. (a) in FIG. 1 shows a single-hop forwarding architecture, (b) in FIG. 1 shows a multi-hop forwarding architecture, and (c) in FIG. 1 shows a reflect-and-forward architecture.
(a) in FIG. 1 shows a network device 110, a relay device 120, and a terminal device 130. The network device 110 may provide network coverage for a particular geographical area. As described above, when the network device 110 is far away from the terminal device 130, communication quality deteriorates. Therefore, the relay device 120 is introduced to assist in communication between the network device 110 and the terminal device 130. As shown in the figure, a backhaul-side beam of the relay device may receive a control signal from the network device; and after performing processing such as amplification on the control signal, send a processed control signal to the terminal device 130 by using an access-side beam. Similarly, the network device 110 may send a downlink signal to the terminal device 130 via the relay device 120, and the terminal device 130 may also send an uplink signal to the network device 110 via the relay device 120.
(b) in FIG. 1 shows a network device 110, relay devices 120a and 120b, and a terminal device 130. Different from (a) in FIG. 1, (b) in FIG. 1 shows a plurality of relay devices (for example, the relay devices 120a and 120b in the figure). That is, a downlink signal from the network device 110 may reach the terminal device 130 through forwarding performed by the plurality of relay devices, and an uplink signal from the terminal device 130 may also reach the network device 110 through forwarding performed by the plurality of relay devices. It should be understood that processing performed on a received signal by the relay devices 120a and 120b in (b) in FIG. 1 is similar to a processing process of the relay device 120 in (a) in FIG. 1. Details are not described again.
(c) in FIG. 1 shows a network device 110, a relay device 120, and a terminal device 130. Different from (a) and (b) in FIG. 1, the relay device 120 uses a reflector antenna panel to forward a signal in a reflection manner.

Although not shown in the figure, it may be understood that the network device may be further connected to a core network device. The core network device may include but is not limited to an access and mobility management function (access and mobility management function, AMF) network element, a session management function (session management function, SMF) network element, a user plane function (user plane function, UPF) network element, and the like. The network elements may be configured to implement respective functions. For example, the AMF may be configured to perform mobility management and access management. The SMF may be for session management, assignment and management of an internet protocol (internet protocol, IP) address of the terminal device, selection and control of the user plane function, termination of an interface toward a policy control or charging function, downlink data notification, and the like. The UPF may be for packet routing and forwarding, quality of service (quality of service, QoS) handling for user plane data, or the like.

The network device and the relay device may further be connected to an operation, administration and maintenance (operation administration and maintenance, OAM) network element. Based on an actual requirement of operation of an operator network, network management is usually classified into three types: operation (operation), administration (administration), and maintenance (maintenance), which are referred to as OAM for short. The operation is mainly to complete routine analysis, prediction, planning, and configuration for a network and a service, and the maintenance is mainly routine operation activities such as network and service tests and fault management. The OAM may detect a network running status, optimize a network connection and network performance, improve network running stability, and reduce network maintenance costs.

To better understand embodiments of this application, the following first briefly describes structures of the network device, the relay device, and the terminal device and related concepts with reference to the accompanying drawings.

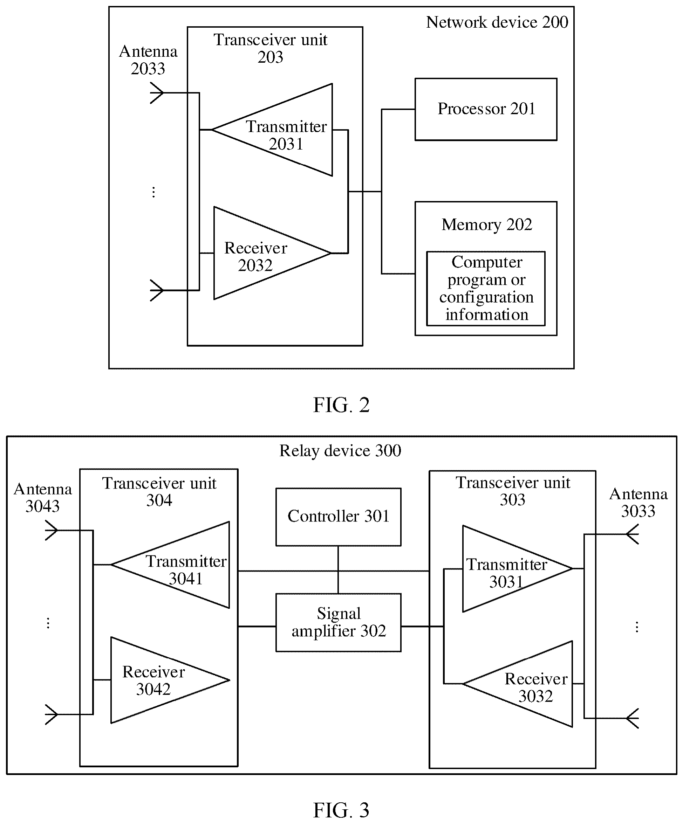

FIG. 2 is a diagram of a structure of a network device according to an embodiment of this application. The network device 200 shown in FIG. 2 includes a processor 201, a memory 202, and a transceiver 203. The memory 202 may be configured to store a computer program or configuration information. The processor 201 may be configured to execute the computer program stored in the memory 202, or read the configuration information stored in the memory 202. The transceiver 203 includes a transmitter 2031, a receiver 2032, and an antenna 2033. The transmitter 2031 may be configured to send a signal through the antenna 2033, and the receiver 2032 may be configured to receive a signal through the antenna 2033.

FIG. 3 is a diagram of a structure of a relay device according to an embodiment of this application. The relay device 300 shown in FIG. 3 includes one or more of a controller 301, a signal amplifier 302, signal transceiver units 303 and 304, and the like. The controller 301 may be configured to control the signal transceiver units 303 and 304 to receive and forward signals, to implement communication with a network device and a terminal device. The controller 301 may further control the signal amplifier 302 to perform processing such as signal amplification and noise reduction.

The controller 301 is also referred to as a mobile terminal (mobile terminal, MT, or NCR-MT), and a radio unit (radio unit, RU), a distributed unit (distributed unit, DU), a distributed radio unit (distributed radio unit, DRU), or the like may include another part (for example, the signal amplifier 302 and the signal transceiver units 303 and 304).

It should be understood that the signal transceiver unit 303 may include a transmitter 3031, a receiver 3032, and an antenna 3033, and the signal transceiver unit 304 may include a transmitter 3041, a receiver 3042, and an antenna 3043. The transmitter 3031 or 3041 may be configured to send a signal through the antenna 3033 or 3043, and the receiver 3032 or 3042 may be configured to receive a signal through the antenna 3033 or 3043.

A communication link between the network device and the controller of the relay device may be referred to as a control link (control link, C-link). The control link may be for signal transmission between the network device and the relay device. A signal whose transmission between the relay device and the network device through the control link may be a reference signal, a control signal, or a data signal. This is not limited in this application.

A communication link between the network device, the relay device, and the terminal device may be referred to as a forwarding link (forwarding link). The relay device may be configured to performing signal forwarding between the network device and the terminal device through the forwarding link. A link between the network device and the relay device connected to the network device is a backhaul link (backhaul link), and a link between the relay device and the terminal device connected to the relay device is an access link (access link). The relay device may receive a signal from the network device through the backhaul link, and forward the received signal to the terminal device through the access link. The signal that is received by the relay device by using the backhaul link and forwarded by the relay device through the access link may be a reference signal, a control signal, or a data signal. This is not limited in this application. Alternatively, the relay device may receive a signal from the terminal device through the access link, and forward the received signal to the network device through the backhaul link. A signal that is received by the relay device by using the access link and forwarded by the relay device through the backhaul link may be a reference signal or a data signal. This is not limited in this application.

It should be noted that the solutions provided in this application may alternatively be applied to a multi-hop relay system. The control link includes a control link between the network device and any-hop relay device or a control link between the network device and a next-hop relay device via a previous-hop/multi-hop relay device. The forwarding link includes a forwarding link between the network device and a first-hop relay device, a forwarding link between a previous-hop/multi-hop relay device and a next-hop relay device, or a forwarding link between a last-hop relay device and the terminal device.

In the backhaul link, the relay device may receive a signal from the network device and/or send a signal to the network device through a backhaul-side antenna. In the access link, the relay device may send a signal to the terminal device and/or receive a signal from the terminal device through an access-side antenna.

Downlink communication is used as an example. A signal transceiver unit (for example, the signal transceiver unit 303) of the relay device is configured to receive a signal from the network device, and another signal transceiver unit (for example, the signal transceiver unit 304) is configured to forward an amplified received signal to the terminal device.

In addition, the controller 301 may further communicate with the network device or the terminal device via the signal transceiver unit 303 or 304. For example, the controller 304 communicates with the network device via the signal transceiver unit 303, and is configured to establish a communication link, perform beam alignment, and so on between the relay device and the network device; and may be further configured to receive configuration or indication information of the network device, so that the network device controls operating time, an operating status, an operating manner, or the like of the relay device; or is configured to receive a trigger signal of the terminal device, so that the relay device enters a corresponding operating mode as needed. For another example, the controller 301 can further determine an operating status (for example, an amplification multiple or a phase) of the signal amplifier 302 based on indication information of the network device or measurement information of the controller 301.

It should be understood that each unit in FIG. 3 may be one or more. For example, there may be a plurality of signal amplifiers, respectively corresponding to different polarization directions or relay radio frequency channels.

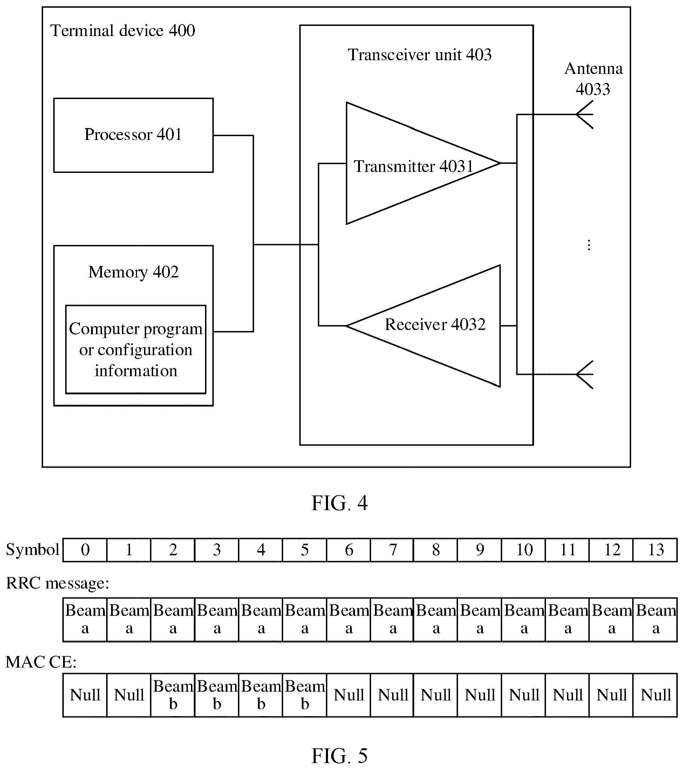

FIG. 4 is a diagram of a structure of a terminal device according to an embodiment of this application. The terminal device 400 shown in FIG. 4 includes a processor 401, a memory 402, and a transceiver 403. The memory 402 may be configured to store a computer program or configuration information. The processor 401 may be configured to execute the computer program stored in the memory 402, or read the configuration information stored in the memory 402. The transceiver 403 includes a transmitter 4031, a receiver 4032, and an antenna 4033. The transmitter 4031 may be configured to send a signal through the antenna 4033, and the receiver 4032 may be configured to receive a signal through the antenna 4033.

It should be understood that the structures of the devices shown in FIG. 2 to FIG. 4 are merely examples, and should not constitute any limitation on this application.

To better understand the method provided in embodiments of this application, the following briefly describes terms in this application.
1. Beam (beam): is a main lobe of a radiation pattern of an antenna or an antenna array, and is formed by superposing radiation signals of antenna modules. The beam may be understood as a spatial filter (spatial filter) or a spatial parameter (spatial parameters). A beam for sending a signal may be referred to as a transmit beam (transmission beam, Tx beam), and may be a spatial transmit filter (spatial domain transmit filter) or a spatial transmit parameter (spatial transmit parameters, spatial Tx parameters). The transmit beam may refer to signal strength distribution formed in different directions in space after a signal is transmitted via an antenna. A beam for receiving a signal may be referred to as a receive beam (reception beam, Rx beam), and may be a spatial receive filter (spatial domain receive filter) or a spatial receive parameter (spatial receive parameters, spatial Rx parameters). The receive beam may refer to signal strength distribution, in different directions in space, of a radio signal received through an antenna.

A technology for forming the beam may be a beamforming technology or another technology. For example, the beamforming technology may specifically be a digital beamforming technology, an analog beamforming technology, or a hybrid digital/analog beamforming technology. This is not limited in this application.

The beam, the spatial filter, the spatial parameter, and the like are merely several possible names enumerated in this specification. This application does not exclude a possibility of defining another term in a future protocol to represent a same or similar meaning.

A feature of the beam may be represented by using one or more of the following directional parameters:
a beam index (beam index);
a beam type (beam type);
a beam azimuth (beam azimuth);
a beam tilt (beam tilt);
a beam width, including a beam horizontal width (beam horizental width) and a beam vertical width (beam vertical width);
a reference beam direction, which may include a reference peak beam direction and a reference beam boresight direction; or
a maximum effective isotropic radiated power (effective isotropic radiated power, EIRP) in a peak beam direction.

The beam may be generated by a particular TRP. The TRP is an antenna array that includes one or more antenna elements and that may be used by a network, and is located at a particular geographical location in a particular area. One TRP may correspond to one coverage area.

The beam usually corresponds to a resource. For example, during beam measurement, a network device measures different beams using different resources, a terminal device feeds back resource quality obtained through the measurement, and the network device learns of quality of the corresponding beams. During data transmission, beam information is also indicated by a resource corresponding to the beam information. For example, for an amplify-and-forward relay, the network device indicates information about a backhaul link beam to the terminal device by using a transmission configuration indicator (transmission configuration indicator, TCI) state identifier (TCI state ID) field in downlink control information (downlink control information, DCI), or indicates information about an access link beam to the terminal device by using a sounding reference signal (sounding reference signal, SRS) resource identifier (SRS resource ID). For a reflect-and-forward relay, a reflecting surface beam may be represented by using one or more reflecting matrices (or vectors), or may be represented as a plurality of component matrices (or submatrices, subvectors, or component vectors). It should be understood that one of the component matrices may correspond to the backhaul link beam, and another component matrix may correspond to the access link beam. In this case, a control and signaling design may be similar to that of the amplify-and-forward relay. Optionally, a plurality of beams having a same communication feature or similar communication features are considered as one beam. One beam may include one or more antenna ports for transmission of a data channel, a control channel, a sounding signal, and the like. The one or more antenna ports forming the beam may also be considered as one antenna port set.

The beam may be indicated/represented by using a reference signal. That is, a quasi-co-location (quasi-co-location, QCL) relationship between reference signals reflects different or same beams. In addition, the beam may be alternatively represented by using a weighted value that acts on an antenna or a codebook (codebook) that acts on an antenna port in a multi-antenna system. That is, the beam may alternatively correspond to the codebook.

2. Quasi-co-location (quasi-co-location, QCL): Signals corresponding to antenna ports that have a QCL relationship have a same parameter, a parameter of one antenna port may be for determining a parameter of the other antenna port that has the QCL relationship with the antenna port, the two antenna ports have a same parameter, or a parameter difference between the two antenna ports is less than a threshold. The parameter may include one or more of the following: a delay spread (delay spread), a Doppler spread (Doppler spread), a Doppler shift (Doppler shift), an average delay (average delay), an average gain, and a spatial receive parameter. The spatial receive parameter may include one or more of the following: an angle of arrival (angle of arrival, AOA), an average AOA, an AOA spread, an angle of departure (angle of departure, AOD), an average angle of departure AOD, an AOD spread, a receive antenna spatial correlation parameter, a transmit antenna spatial correlation parameter, a transmit beam (which is also referred to as a transmit beam), a receive beam, and a resource identifier.

In an NR protocol, the QCL relationship may be classified into the following four types based on different parameters:
a type A (type A): the Doppler shift, the Doppler spread, the average delay, and the delay spread;
a type B (type B): the Doppler shift and the Doppler spread;
a type C (type C): the Doppler shift and the average delay; and
a type D (type D): the spatial receive parameter.

The QCL in embodiments of this application is QCL of the type D. Unless otherwise specified below, the QCL may be understood as the QCL of the type D, namely, QCL defined based on the spatial receive parameter.

When a QCL relationship is a QCL relationship of the type D, a QCL relationship between ports for downlink signals or between ports for uplink signals may be that the two signals have a same AOA or AOD, and indicates that the two signals have a same receive beam or transmit beam. For another example, a QCL relationship between a downlink signal and an uplink signal or between a port for the uplink signal and a port for the downlink signal may be that there is a correspondence between AOAs and AODs of the two signals or that there is a correspondence between the AODs and the AOAs of the two signals. That is, beam reciprocity may be for determining an uplink transmit beam based on a downlink receive beam or determining the downlink receive beam based on the uplink transmit beam.

A signal whose transmission is performed on ports having a QCL relationship may alternatively have a corresponding beam, where the corresponding beam includes at least one of the following: a same receive beam, a same transmit beam, a transmit beam corresponding to a receive beam (corresponding to a reciprocity scenario), and the receive beam corresponding to the transmit beam (corresponding to the reciprocity scenario).

The signal whose transmission is performed on the ports having the QCL relationship may alternatively be understood as a signal received or sent by using a same spatial filter. The spatial filter may be at least one of the following: precoding, a weighted value of an antenna port, a phase deflection of the antenna port, and an amplitude gain of the antenna port.

The signal whose transmission is performed on the ports having the QCL relationship may alternatively be understood as having a corresponding beam pair link (beam pair link, BPL). The corresponding BPL includes at least one of the following: a same downlink BPL, a same uplink BPL, an uplink BPL corresponding to a downlink BPL, or the downlink BPL corresponding to the uplink BPL.

Therefore, the spatial receive parameter (namely, the QCL of the type D) may be understood as a parameter indicating direction information of the receive beam.

3. Forwarding parameter: a parameter for defining (in other words, controlling) forwarding behavior of a relay device. The forwarding parameter includes, for example, but is not limited to, a type of a forwarded signal, a priority of the forwarded signal, an index of a forwarding resource, the backhaul link beam, the access link beam, forwarding enabled, forwarding disabled, a transmit power (or a power spectral density), an amplification gain (for the amplify-and-forward relay), and a reflection configuration matrix (for the reflect-and-forward relay).

4. Forwarding resource (Fwd Resource): is for defining a resource used by the relay device to perform signal forwarding, for example, may be for defining one or more of the following forwarding parameters: a time domain resource, time domain behavior, a resource type, a resource priority, the access link beam, the backhaul link beam, the amplification gain (for the amplify-and-forward relay), the reflection configuration matrix (for the reflect-and-forward relay), the forwarding resource index, and the like. In embodiments of this application, the forwarding resource may be indicated by at least one of an information element (information element, IE) in an RRC message, a MAC CE, DCI, or the like.

Based on different time domain behavior (or resource types), the resource used by the relay device to perform signal forwarding may include a periodic (periodic, P) resource, a semi-persistent (semi-persistent, SP) (which is also referred to as semi-static) resource, and an aperiodic (aperiodic, AP) resource. Accordingly, the resource type includes being periodic, semi-persistent, or aperiodic.

For example, the periodic resource may be configured by using a radio resource control (radio resource control, RRC) message. When the periodic resource is configured for the relay device by using the RRC message, the relay device may directly use the configured resource to perform signal forwarding after receiving the RRC message (a specific effective time point depends on a processing delay or a protocol agreement, for example, the protocol agreement is that taking effect occurs after 10 ms).

The semi-persistent resource may also be configured by using the RRC message. After all or some of forwarding parameters of the resource are configured by using the RRC message, the resource needs to be activated or deactivated by using the MAC CE (or the DCI). During resource activation, all or some of the forwarding parameters may be indicated (or re-indicated) by the MAC CE (or the DCI). The relay device may periodically enable amplification and forwarding based on information about the RRC and the MAC CE (or the DCI), until the resource is deactivated by using the MAC CE (or the DCI). After the resource is deactivated, the relay device skips performing signal forwarding (which is also referred to as the forwarding disabled) on the deactivated resource.

The aperiodic resource may also be configured by using the RRC message. After all or some of forwarding parameters of the resource are configured by using the RRC message, dynamic scheduling may be performed by using the DCI. After scheduling, the forwarding parameter takes effect only once, or takes effect a plurality of times with a limited quantity. For example, the forwarding parameter takes effect the plurality of times only within duration of one monitoring periodicity after DCI receiving (that is, an effective time length is a physical downlink control channel (physical downlink control channel, PDCCH) monitoring periodicity corresponding to the DCI). Within duration of a next monitoring periodicity, forwarding needs to be performed based on an indication of a next piece of DCI. Further, after all or some of the forwarding parameters are configured for the aperiodic resource by using the RRC message, the forwarding parameter may be further indicated (or reconfigured) by using the MAC CE.

5. Forwarding resource set: includes one or more forwarding resources, and is also referred to as a forwarding resource list. In embodiments of this application, the forwarding resource set may be understood as another information element carried in the RRC message. The information element may be for defining a resource set used by the relay device to perform signal forwarding, for example, may be for defining one or more of the following: the time domain resource, the access link beam, the backhaul link beam, the amplification gain (for the amplify-and-forward relay), the reflection configuration matrix (for the reflect-and-forward relay), the forwarding resource index, a forwarding resource set index, and the like.

Optionally, some forwarding parameters of forwarding resources in one forwarding resource set may be the same, for example, same time domain behavior (or resource type), for another example, a same time periodicity, for another example, a same time granularity (or reference subcarrier spacing/reference subcarrier spacing index corresponding to a time parameter), for another example, a same backhaul link beam (TCI-state ID or SRS resource ID), for another example, a same access link beam set, or for another example, a same backhaul link.

Optionally, some parameters of the forwarding resource may be configured by using the forwarding resource set (namely, common parameters of the forwarding resource set).

Optionally, one forwarding resource set corresponds to a plurality of forwarding resources, and one forwarding resource set index may correspond to a plurality of forwarding resource indexes.

Optionally, one forwarding resource set corresponds to a plurality of time domain resources.

Optionally, one forwarding resource set corresponds to a plurality of time resource lists (or patterns (patterns)), and each time resource list (or pattern) corresponds to a plurality of time resources.

Optionally, one forwarding resource set corresponds to a plurality of access link beams.

Optionally, one forwarding resource set corresponds to a plurality of access link beam lists (or patterns), and each access link beam list (or pattern) corresponds to a plurality of access link beams.

Optionally, one forwarding resource set corresponds to a plurality of backhaul link beams.

Optionally, one forwarding resource set corresponds to a plurality of backhaul link beam lists (or patterns), and each backhaul link beam list (or pattern) corresponds to a plurality of backhaul link beams.

The foregoing pattern may be understood as a resource pattern including the time domain resource and a frequency domain resource, for example, a resource pattern including at least one time domain symbol and at least one subcarrier and using a resource element (resource element, RE) as a granularity (or using a passband (passband) as the granularity), to indicate which time domain resources and frequency domain resources are used.

6. Forwarding configuration (Fwd Config): may also be referred to as a forwarding resource configuration (Fwd Resource Config). The forwarding configuration may include one or more of one or more forwarding resources, one or more forwarding resource sets, or a forwarding configuration index (or a forwarding resource configuration index). In embodiments of this application, the forwarding configuration may be understood as another information element carried in the RRC message.

Optionally, some parameters (namely, common parameters) of the forwarding resource or the forwarding resource set may be carried in the forwarding configuration.

Optionally, different forwarding configurations are for forwarding different signals. For example, a forwarding configuration 1 is for forwarding a reference signal (for example, a channel state information reference signal (channel state information reference signal, CSI-RS), a tracking reference signal (tracking reference signal, TRS), and an SRS), a forwarding configuration 2 is for forwarding a data signal/channel and a control signal/channel (for example, a physical downlink shared channel (physical downlink share channel, PDSCH), a physical uplink shared channel (physical uplink share channel, PUSCH), a PDCCH, and a physical uplink control channel (physical uplink control channel, PUCCH), and a forwarding configuration 3 is for forwarding a cell common signal/channel (for example, a synchronization signal block (synchronization signal, SSB), a physical random access channel (physical random access channel, PRACH), and a system information block (system information block, SIB) 1.

7. Time domain symbol: a granularity of the time domain resource. The time domain symbol may be, for example, an orthogonal frequency division multiplexing (orthogonal frequency division multiplexing, OFDM) symbol or a discrete Fourier transform (discrete Fourier transform, DFT)-spread-OFDM (DFT-spread-OFDM, DFT-s-OFDM) symbol. Certainly, the time domain symbol may alternatively be a time domain symbol spread to another type. This application includes but is not limited thereto.

In a communication system in which a relay device is introduced, a network device needs to schedule the relay device to perform signal forwarding. The network device may include configuration information in signaling (for example, an RRC message, a MAC CE, and DCI) sent to the relay device, to configure a forwarding parameter for the relay device, thereby controlling forwarding behavior of the relay device. However, a conflict may sometimes occur on configuration performed by the network device on the relay device.

FIG. 5 shows an example of a conflict between configuration information in an RRC message and configuration information in a MAC CE. As shown in the figure, a network device may configure, in an RRC message, a beam a to take effect on a symbol in a slot. Then, the network device configures, by using a MAC CE, a beam b to take effect on some symbols (for example, a symbol 2 to a symbol 5 shown in the figure) in a same slot.

It may be found that different beams are sequentially configured for a relay device on the symbol 2 to the symbol 5 in the slot. If the relay device does not have a capability of using a plurality of beams simultaneously, it cannot be determined whether to use the beam a or the beam b to perform signal forwarding on the symbol 2 to the symbol 5. In view of this, it can be learned that a configuration conflict may cause the relay device to be incapable of normally performing signal forwarding. Consequently, transmission performance is affected.

It should be understood that the conflict shown in FIG. 5 is merely an example, and the configuration conflict is not limited thereto. For example, the configuration conflict may alternatively be a configuration conflict between values of more forwarding parameters, a configuration conflict between different forwarding parameters, or the like. Because the following provides descriptions with reference to specific examples, enumeration is not performed herein again.

For the foregoing problem, this application provides a method. When a network device configures forwarding parameters for a relay device by using different configuration information, the relay device performs signal forwarding based on a forwarding parameter in one of the pieces of configuration information. The configuration information may be, for example, configuration information with a higher priority in different configuration information sent by the network device. In this way, a problem that the relay device cannot normally perform signal forwarding when a forwarding parameter configuration conflict occurs can be avoided, to help improve transmission performance. In addition, the method further provides a plurality of implementations of how the relay device specifically performs signal forwarding based on the forwarding parameter in the configuration information. This helps the network device design the configuration information with higher flexibility and control forwarding behavior of the relay device, thereby helping improve system performance.

For ease of understanding the method provided in this application, the following several points are first described.

First, for ease of distinguishing and description, in the following descriptions, configuration information corresponds to a forwarding parameter, and each piece of configuration information may be for configuring one forwarding parameter. The configuration information may be carried in signaling such as an RRC message, a MAC CE, and DCI. Each piece of signaling includes configuration information of one or more forwarding parameters. In other words, each piece of signaling includes one or more pieces of configuration information.

In this specification, it is mentioned that the relay device performs signal forwarding based on first configuration information. This does not mean that, when performing signal forwarding, the relay device performs signal forwarding based only on a forwarding parameter configured by using the first configuration information, but performs signal forwarding based on the first configuration information between the first configuration information and second configuration information that conflicts with the first configuration information. When the network device configures another forwarding parameter by using other configuration information, when the other configuration information does not conflict with the first configuration information and the second configuration information, the relay device may alternatively perform signal forwarding by combining the other configuration information. For example, if the network device configures a same forwarding parameter, namely, beams, by using the first configuration information and the second configuration information, and a configuration conflict occurs, the relay device may perform signal forwarding based on the beam configured by using the first configuration information. The network device configures an amplification gain by using third configuration information, and the amplification gain conflicts with none of the first configuration information, the second configuration information, and other configuration information that may be received. In this case, the relay device may perform, by combining the first configuration information and the third configuration information, signal forwarding based on the beam configured by using the first configuration information and the amplification gain configured by using the third configuration information.

Second, for ease of understanding and description, this specification provides a plurality of examples described with reference to the accompanying drawings. In the examples, forwarding parameters on some time domain symbols are "null (null)", which indicates that no forwarding parameter is configured on the time domain symbols. In other words, the relay device may skip performing signal forwarding on the time domain symbols.

Third, for ease of description, the following describes, by using interaction between the network device, the relay device, and a terminal device as an example, the method provided in this application. However, this should not constitute any limitation on a scope to which this application is applicable. As described above, based on different networking forms, the relay device may implement single-hop forwarding (corresponding to a single-hop relay system), or may implement multi-hop forwarding (corresponding to a multi-hop relay system). The method provided in this application is also applicable to a relay device in the single-hop relay system and a relay device in the multi-hop relay system.

Fourth, for ease of understanding, the following enumerates a plurality of possible messages, and describes fields in the messages by using examples. The messages are merely a possible example, and should not constitute any limitation on this application. For example, a name, a data type, and the like of each field in the messages should not be limited to the examples in this specification, and should fall within the protection scope of this application provided that a same or similar function can be implemented.

Fifth, for ease of clearly describing the technical solutions in embodiments of this application, terms such as "first", "second", numeric numbers "1" and "2", and letter numbers "a" and "b" are used in embodiments of this application to distinguish between same items or similar items whose functions are basically the same. For example, the first configuration information and the second configuration information are merely for distinguishing between different configuration information. For another example, a symbol 0 to a symbol 13 are for distinguishing between different time domain symbols. For still another example, a beam a and a beam b are for distinguishing between different beams. A person skilled in the art may understand that "first", "second", numeric numbers "1" and "2", "a", "b", and the like do not limit quantities and execution orders.

Sixth, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following" or a similar expression thereof means any combination of these items, including a single item or any combination of plural items. For example, at least one of a, b, or c may indicate a, b, c, a and b, a and c, b and c, or a, b, and c, where a, b, and c may be single or plural.

Seventh, tables in embodiments of this application are merely examples. Values of information in the tables are merely examples, and other values may be configured. This is not limited in this application. The tables do not constitute a limitation on the protection scope of this application. For example, appropriate deformation and adjustment such as splitting and combination may be performed based on the foregoing tables. For another example, names of parameters shown in titles of the tables may alternatively be other names that can be understood by a communication apparatus, and values or representation manners of the parameters may alternatively be other values or representation manners that can be understood by the communication apparatus. For still another example, during implementation of the foregoing tables, another data structure, for example, an array, a queue, a container, a stack, a linear table, a pointer, a linked list, a tree, a graph, a structure, a class, a pile, or a hash table, may alternatively be used.

Eighth, "sending" and "receiving" in embodiments of this application indicate a signal transfer direction. For example, "sending configuration information to the relay device" may be understood as that a destination end of the configuration information is the relay device, and may include direct sending through an air interface, or indirect sending performed by another unit or module through the air interface. "Receiving configuration information from the network device" may be understood as that a source end of the configuration information is the network device, and may include direct receiving from the network device through an air interface, or indirect receiving from the network device from another unit or module through the air interface. "Sending" may alternatively be understood as "outputting" of a chip interface, and "receiving" may alternatively be understood as "inputting" of the chip interface.

In other words, sending and receiving may be performed between devices, for example, between the relay device and the network device or between the relay device and the terminal device; or may be performed inside a device, for example, sending or receiving between components, modules, chips, software modules, or hardware modules inside the device through a bus, a cable, or an interface.

It may be understood that necessary processing, for example, encoding and modulation, may be performed on information between a source end and a destination end of information sending, but the destination end may understand effective information from the source end. Similar descriptions in this application may be understood similarly. Details are not described again.

Ninth, in embodiments of this application, a forwarding resource may be understood as a configuration, and is for defining a resource used by the relay device to perform signal forwarding. For example, the forwarding resource may be an information element in the RRC message, or configuration information in the MAC CE or the DCI. The forwarding resource may alternatively be understood as a resource for signal forwarding. For ease of distinguishing, in this specification, without ambiguity, the resource for signal forwarding is denoted as a resource, to be distinguished from the forwarding resource (the configuration). However, it may be understood that because the resource is for signal forwarding, the resource may alternatively be replaced with the forwarding resource. In a method 1300, because configuration of a forwarding resource is not mentioned, and a resource includes a resource for sending an uplink signal on a control link and a resource for sending (in other words, forwarding) an uplink signal on a forwarding link, for ease of distinguishing, the resource for sending the uplink signal on the control channel is denoted as a transmission resource, and the resource for sending the uplink signal on the forwarding link is denoted as the forwarding resource.

With reference to the accompanying drawings, the following describes in detail the method provided in embodiments of this application.

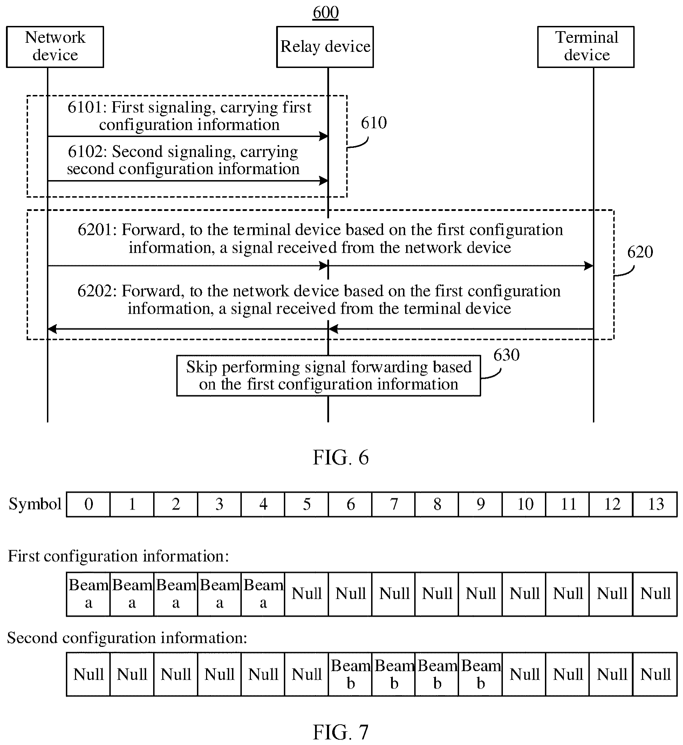

FIG. 6 is a schematic flowchart of a communication method according to an embodiment of this application. FIG. 6 shows the method from a perspective of device interaction. It may be understood that a relay device in the method may alternatively be replaced with a component in the relay device, for example, a chip, a chip system, or another module that may be configured to implement some or all of functions of the relay device. A network device in the method may alternatively be replaced with a component in the network device, for example, a chip, a chip system, or another module that may be configured to implement some or all of functions of the network device. A terminal device in the method may alternatively be replaced with a component in the terminal device, for example, a chip, a chip system, or another module that may be configured to implement some or all of functions of the terminal device. This is not limited in this application.

The method 600 shown in FIG. 6 includes step 610 to step 630. The following describes in detail the steps in the method 600.

In step 610, the network device sends first configuration information and second configuration information to the relay device. Accordingly, the relay device receives the first configuration information and the second configuration information from the network device.

The first configuration information is for configuring a first forwarding parameter for the relay device, and the second configuration information is for configuring a second forwarding parameter for the relay device. The first forwarding parameter and the second forwarding parameter each may be one of the foregoing enumerated forwarding parameters, to control forwarding behavior of the relay device. Alternatively, step 610 may be expressed as that the network device configures the first forwarding parameter and the second forwarding parameter for the relay device.

In a possible implementation, the network device uses different signaling to respectively carry the first configuration information and the second configuration information. For example, the network device uses first signaling to carry the first configuration information, and uses second signaling to carry the second configuration information. It should be understood that, when the network device uses different signaling to carry the first configuration information and the second configuration information, step 610 may be implemented by performing two times of sending (for the network device) actions and two times of receiving (for the relay device) actions. Therefore, step 610 may specifically include the following steps.

Step 6101: The network device sends the first signaling to the relay device, where the first signaling carries the first configuration information.

Step 6102: The network device sends the second signaling to the relay device, where the second signaling carries the second configuration information.

Accordingly, the relay device may receive the first signaling in step 6101 to obtain the first configuration information, and receive the second signaling in step 6102 to obtain the second configuration information.

It should be understood that an execution order of step 6101 and step 6102 is not limited in this application.

Each time the network device sends signaling, the network device usually does not include conflicting configuration information in one piece of signaling. In other words, the network device usually does not configure conflicting forwarding parameters by using the piece of signaling. This application mainly discusses a case in which the first configuration information and the second configuration information are carried in different pieces of signaling.

Optionally, the first signaling is an RRC message, and the second signaling is a MAC CE; or the first signaling is a MAC CE, and the second signaling is an RRC message.

The network device may configure a semi-persistent resource by using the RRC message, and may activate or deactivate the semi-persistent resource by using the MAC CE.

Optionally, the first signaling is an RRC message, and the second signaling is DCI; or the first signaling is DCI, and the second signaling is an RRC message.

The network device may configure a semi-persistent or aperiodic resource by using the RRC message, and may activate or deactivate the semi-persistent resource or schedule the aperiodic resource by using the DCI.

Optionally, the first signaling is a MAC CE, and the second signaling is DCI; or the first signaling is DCI, and the second signaling is a MAC CE.

The network device may activate or deactivate a semi-persistent resource by using the MAC CE, and may activate or deactivate the semi-persistent resource by using the DCI. Alternatively, the network device may configure an aperiodic resource by using the MAC CE, and may schedule the aperiodic resource by using the DCI.

In this embodiment of this application, configuration performed on the first forwarding parameter by using the first configuration information conflicts with configuration performed on the second forwarding parameter by using the second configuration information. In other words, the first configuration information conflicts with the second configuration information.

In a possible case, the first forwarding parameter and the second forwarding parameter are a same forwarding parameter, the first configuration information indicates that the first forwarding parameter takes effect in a first time period, the second configuration information indicates that the second forwarding parameter takes effect in a second time period, and the first time period and the second time period are in a same slot, but the configuration performed on the first forwarding parameter by using the first configuration information is different from the configuration performed on the second forwarding parameter by using the second configuration information.

In another possible case, the first forwarding parameter and the second forwarding parameter are different forwarding parameters, the first configuration information indicates that the first forwarding parameter takes effect in a first time period, the second configuration information indicates that the second forwarding parameter takes effect in a second time period, and the first time period and the second time period are in a same slot.

That the first time period and the second time period are in the same slot may include: The first time period and the second time period do not overlap, but are in the same slot; or the first time period and the second time period are in the same slot, and have an overlapping time period.

For example, the first time period includes a symbol 0 to a symbol 3 in a slot, and the second time period includes a symbol 8 to a symbol 11 in a same slot. That is, the first time period and the second time period do not overlap. For another example, the first time period includes a symbol 2 to a symbol 9 in a slot, and the second time period includes the symbol 3 to the symbol 6 in a same slot. That is, the first time period and the second time period have the overlapping time period, and the overlapping time period includes the four time domain symbols, namely, the symbol 3 to the symbol 6.

The following describes the foregoing two cases by using examples with reference to the accompanying drawings.

In the former possible case, the first forwarding parameter and the second forwarding parameter are a same forwarding parameter, but the configuration performed on the first forwarding parameter by using the first configuration information is different from the configuration performed on the second forwarding parameter by using the second configuration information. In other words, the same forwarding parameter is configured by using the first configuration information and the second configuration information, but specific content configured by using the first configuration information for the first forwarding parameter is different from specific content configured by using the second configuration information for the second forwarding parameter.

An example is shown in FIG. 7. The first configuration information and the second configuration information each are for configuring a beam in the figure. The beam configured by using the first configuration information is a beam a, and the first time period in which the beam a takes effect includes a symbol 0 to a symbol 4 in a slot. The second forwarding parameter configured by using the second configuration information is a beam b, and the second time period in which the beam b takes effect includes a symbol 6 to a symbol 9 in a same slot. That is, in the same slot, the beam configured by using the first configuration information is different from the beam configured by using the second configuration information. If the relay device does not support signal forwarding performed by using a plurality of beams at a moment, and the relay device does not expect to perform beam switching in the same slot, the first configuration information conflicts with the second configuration information.

An example is shown in FIG. 5 above. In the figure, the first configuration information is carried in the RRC message, and the second configuration information is carried in the MAC CE. A forwarding parameter, namely, a beam, is configured by using each of the RRC message and the MAC CE. The configuration information for configuring the beam in the RRC message is an example of the first configuration information, and the configuration information for configuring the beam in the MAC CE is an example of the second configuration information. The beam configured by using the first configuration information is the beam a, and the first time period in which the beam a takes effect includes a symbol 0 to a symbol 13. The second forwarding parameter configured by using the second configuration information is the beam b, and the second time period in which the beam b configured by using the second configuration information takes effect includes the symbol 2 to the symbol 5. That is, the beams configured by using the first configuration information and the second configuration information are different, and the first time period in which the beam a takes effect and the second time period in which the beam b takes effect have the overlapping time period. If the relay device does not support signal forwarding performed by using a plurality of beams at a same moment, the relay device cannot perform signal forwarding by using both the beam a and the beam b on a same symbol. Therefore, the first configuration information conflicts with the second configuration information.

In the latter possible case, the first forwarding parameter and the second forwarding parameter are different forwarding parameters, but the first forwarding parameter configured by using the first configuration information and the second forwarding parameter configured by using the second configuration information cannot take effect simultaneously in the same slot.

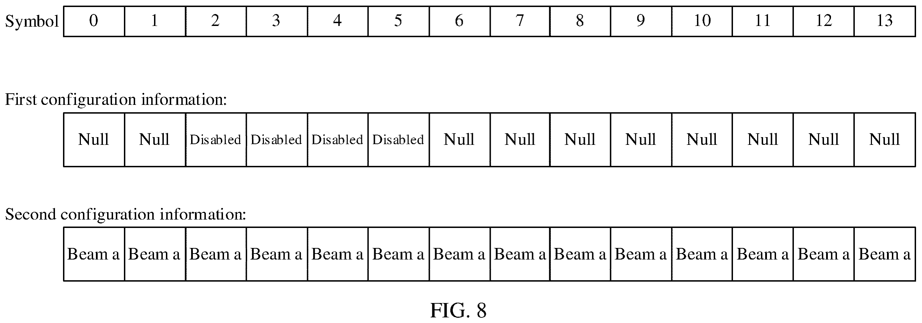

An example is shown in FIG. 8. In the figure, the first configuration information is for configuring forwarding disabled, and the second configuration information is for configuring a beam. The first time period in which the forwarding disabled configured by using the first configuration information takes effect includes a symbol 2 to a symbol 5 in a slot, the beam configured by using the second configuration information is a beam a, and the second time period in which the beam a takes effect includes a symbol 0 to a symbol 13 in a same slot. That is, the forwarding disabled is configured by using the first configuration information on the symbol 2 to the symbol 5 in the same slot. That is, the relay device is configured to skip performing signal forwarding on the symbol 2 to the symbol 5. The beam a is configured by using the second configuration information. That is, the relay device is configured to perform signal forwarding on the symbol 2 to the symbol 5 by using the beam a. Because the relay device cannot perform signal forwarding and skip performing signal forwarding on a same symbol, the first configuration information conflicts with the second configuration information.

Occurrence of the foregoing conflict between the configuration information is not limited to one or two forwarding parameters. When the network device configures a plurality of forwarding parameters by using signaling, a conflict may occur between more configuration information.

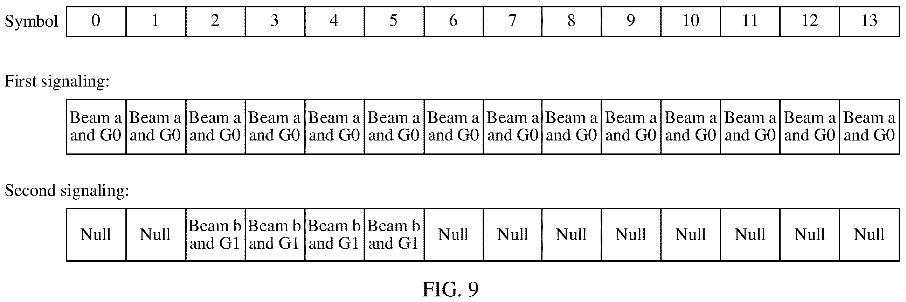

An example is shown in FIG. 9. In the figure, the first configuration information is carried in the first signaling, and the second configuration information is carried in the second signaling. Two forwarding parameters, namely, a beam and an amplification gain, are configured by using each of the first signaling and the second signaling.

For example, configuration information for configuring the amplification gain in the first signaling is an example of the first configuration information, and configuration information for configuring the amplification gain in the second signaling is an example of the second configuration information. The first configuration information and the second configuration information are for configuring a same forwarding parameter: the amplification gain. However, the amplification gain configured by using the first configuration information is G0, and the first time period in which the amplification gain G0 takes effective includes a symbol 0 to a symbol 13. The amplification gain configured by using the second configuration information is G1, and the second time period in which the amplification gain G1 takes effective includes the symbol 2 to the symbol 5. That is, configuration performed on the amplification gain by using the first configuration information is different from configuration performed on the amplification gain by using the second configuration information, and the first time period and the second time period have the overlapping time period. Because the relay device cannot perform signal forwarding by using both the amplification gain G0 and the amplification gain G1 at a same moment, the first configuration information conflicts with the second configuration information.

For another example, configuration information for configuring the beam in the first signaling is an example of the first configuration information, and configuration information for configuring the beam in the second signaling is an example of the second configuration information. The first configuration information and the second configuration information are for configuring a same forwarding parameter: the beam. However, the beam configured by using the first configuration information is a beam a, and the first time period in which the beam a takes effect includes a symbol 0 to a symbol 13. The beam configured by using the second configuration information is a beam b, and the second time period in which the beam a takes effect includes the symbol 2 to the symbol 5. That is, configuration performed on the beam by using the first configuration information is different from configuration performed on the beam by using the second configuration information, and the first time period and the second time period have the overlapping time period. If the relay device does not support signal forwarding performed by using a plurality of beams at a same moment, the relay device cannot perform signal forwarding by using both the beam a and the beam b at the same moment. Therefore, the first configuration information conflicts with the second configuration information.

In conclusion, when the first signaling and the second signaling are for configuring the forwarding parameters for the relay device, there is a configuration conflict between a plurality of forwarding parameters.

It should be understood that the foregoing examples with reference to the accompanying drawings are merely for ease of understanding and description, and show forwarding parameters configured on some symbols, but do not describe forwarding parameters configured on other symbols. The forwarding parameters on the other symbols may be null. That is, no forwarding parameter is configured. Alternatively, the forwarding parameters on the other symbols may not be null. That is, other forwarding parameters are configured. This is not limited in this application.

In step 620, the relay device forwards a received signal based on the first configuration information.

In this embodiment of this application, the relay device may perform signal forwarding based on one of the received first configuration information and second configuration information, for example, based on the first configuration information. For ease of description, it is assumed in this specification that the first configuration information is configuration information with a higher priority in the first configuration information and the second configuration information, in other words, that a priority of the first configuration information is higher than a priority of the second configuration information.

Optionally, before step 620, the method further includes: determining, in the first configuration information and the second configuration information, the configuration information with the higher priority as the first configuration information.

The following describes in detail a process in which the relay device determines the priorities of the first configuration information and the second configuration information.

In a possible implementation, the priority of the first configuration information and the priority of the second configuration information may be determined based on priority information.

In a possible design, the priority information includes a preset value carried in a preset field in signaling for carrying the first configuration information or the second configuration information. In this embodiment, the priority information may be a preset value carried in a preset field in the first signaling or the second signaling.

In an example, the priority information may be a value carried in an "overwritten (Overwritten)" field in the signaling. The "overwritten" field is an example of the preset field.

For example, when there is an "overwritten" field in signaling, and a value in the "overwritten" field is "0", it indicates that a forwarding parameter configured by using configuration information in the signaling may be overwritten (in other words, replaced), for example, may be overwritten by a forwarding parameter configured by using configuration information in other signaling. That is, a priority of the configuration information in the signaling is lower. When there is an "overwritten" field in signaling, and a value in the "overwritten" field is "1", it indicates that a forwarding parameter configured by using configuration information in the signaling may not be overwritten. That is, a priority of the configuration information in the signaling is higher.

For another example, when there is an "overwritten" field in signaling, and a value in the "overwritten" field is "enabled (enabled)", it indicates that a forwarding parameter configured by using configuration information in the signaling may be overwritten. That is, a priority of the configuration information in the signaling is lower. When there is an "overwritten" field in signaling, and a value in the "overwritten" field is "disabled (disabled)", it indicates that a forwarding parameter configured by using configuration information in the signaling may not be overwritten. That is, a priority of the configuration information in the signaling is higher.

In another example, the priority information may be a value carried in a "no overwritten (No Overwritten)" field in the signaling. The "no overwritten" field is an example of the preset field.

For example, when there is a "no overwritten" field in signaling, and a value in the "no overwritten" field is "0", it indicates that a forwarding parameter configured by using configuration information in the signaling may not be overwritten. That is, a priority of the configuration information in the signaling is higher. When a value carried in the "no overwritten" field is "1", it indicates that a forwarding parameter configured by using configuration information in the signaling may be overwritten. That is, a priority of the configuration information in the signaling is lower.

For another example, when there is a "no overwritten" field in signaling, and a value in the "no overwritten" field is "enabled", it indicates that a forwarding parameter configured by using configuration information in the signaling may not be overwritten. That is, a priority of the configuration information in the signaling is higher. When there is a "no overwritten" field in signaling, and a value in the field is "disabled", it indicates that a forwarding parameter configured by using configuration information in the signaling may be overwritten. That is, a priority of the configuration information in the signaling is lower.

Optionally, the priority information is carried in an RRC message. In other words, the priority information in the RRC message may indicate a priority of configuration information carried in the RRC message. If the priority information indicates that a forwarding parameter configured by using the configuration information in the RRC message may not be overwritten, a priority of the configuration information in the RRC message is higher. If the priority information indicates that a forwarding parameter configured by using the configuration information in the RRC message may be overwritten, a priority of the configuration information in the RRC message is lower, and the configuration information may be overwritten by configuration information in other subsequently received signaling (for example, a MAC CE or DCI).

Table 1 shows an example in which a forwarding configuration in the RRC message includes the "overwritten" field. For details, refer to a "Fwd-Overwritten" field in the table. When a value in the "overwritten" field is "enabled", it indicates that a forwarding parameter configured by using configuration information in the forwarding configuration may be overwritten. That is, a priority of the configuration information in the forwarding configuration is lower.

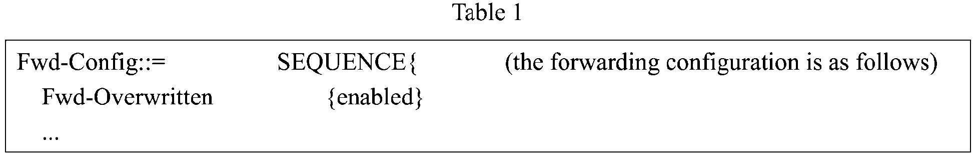

It should be understood that the "overwritten" field included in the forwarding configuration shown in Table 1 is merely an example. The "overwritten" field may alternatively be replaced with the "no overwritten" field, or the "overwritten" field or the "no overwritten" field may be included in another information element. A priority of each piece of configuration information in a same RRC message may be determined based on a specific value in the "overwritten" field or the "no overwritten" field, and priorities of configuration information in the same RRC message may be the same.

Alternatively, the "overwritten" field or the "no overwritten" field may be included in each information element in the RRC message, so that a priority of configuration information in the information element may be determined based on a specific value in the "overwritten" field or the "no overwritten" field. In this way, the priority of the configuration information in the information element in the RRC message can be flexibly configured. It is assumed that, when the RRC message includes information elements such as the forwarding configuration, a forwarding resource, a forwarding resource, and a forwarding resource set, each information element may correspond to one "overwritten" field or one "no overwritten" field. That is, configuration information in the information element may correspond to one piece of priority information. Priorities of the configuration information in the information element are the same. Priorities of configuration information in different information elements may be the same, or may be different. In other words, the priority information may correspond to one forwarding configuration, one forwarding resource, one forwarding resource set, or one forwarding resource configuration.

Alternatively, the "overwritten" field or the "no overwritten" field may be included in each piece of configuration information in the RRC message, so that a priority of the piece of configuration information may be determined based on a specific value in the "overwritten" field or the "no overwritten" field. In this way, the priority of the piece of configuration information in the RRC message can be flexibly configured. That is, the piece of configuration information may correspond to one piece of priority information. Priorities of different configuration information may be the same, or may be different. Because the piece of configuration information may be for configuring one forwarding parameter, the priority information may correspond to the forwarding parameter.

In still another example, the priority information may be a value carried in a "priority flag (priorityFlag)" field in the signaling. The "priorityFlag" field is an example of the preset field.

Table 1b shows an example in which a forwarding resource set (Fwd-ResourceSet) information element in an RRC message includes the "priorityFlag" field. When the value in the "priorityFlag" field is "true", it indicates that a priority of a forwarding parameter configured by using configuration information in the information element is higher. For example, if the field is configured in a periodic forwarding resource set or a semi-persistent forwarding resource set, it indicates that a priority of the periodic forwarding resource set or the semi-persistent forwarding resource set is higher than a priority of configuration information of an aperiodic forwarding resource set. (Indicates the priority for the periodic forwarding resource set or semi-persistent forwarding resource set, if present, the periodic forwarding resource set or semi-persistent forwarding resource set will have higher priority over aperiodic beam indication.)

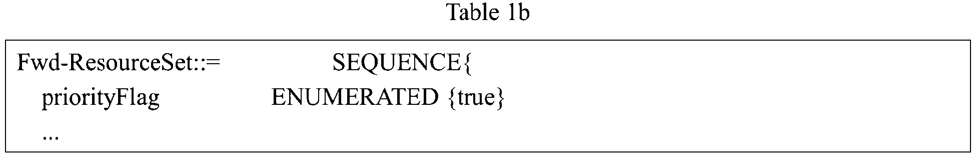

The periodic forwarding resource set includes a periodic forwarding resource, namely, a periodic resource. The semi-persistent forwarding resource set includes a semi-persistent forwarding resource, namely, a semi-persistent resource. The aperiodic forwarding resource set includes an aperiodic forwarding resource, namely, an aperiodic resource. Configuration information of the periodic forwarding resource set may be configuration information for configuring the periodic forwarding resource. Configuration information of the semi-persistent forwarding resource set may be configuration information for configuring the semi-persistent forwarding resource set. The configuration information of the aperiodic forwarding resource set may be configuration information for configuring the aperiodic forwarding resource set.

Further, if the priority information indicates that a priority of configuration information in the RRC message is lower, forwarding parameters configured by using the configuration information in the RRC message may be completely overwritten, or may be partially overwritten. Completely overwriting may mean that the configuration information in the RRC message is completely replaced with configuration information in other signaling. In other words, the relay device performs signal forwarding based on the configuration information in the other subsequently received signaling, instead of performing signal forwarding based on the configuration information in the RRC message. Partially overwriting may mean that, when configuration information in other signaling and the configuration information in the RRC message include configuration information for same forwarding parameters, the forwarding parameters may be configured based on the configuration information in other information; and a forwarding parameter configured by using the configuration information in the RRC is still processed based on the configuration information in the RRC message when being not configured in the other signaling. In other words, the relay device may perform signal forwarding based on the configuration information in the other subsequently received signaling in combination with the configuration information in the RRC message.

It may be understood that, if the priority information is carried in the RRC message, the solution is applicable to a case in which either the first signaling or the second signaling is the RRC message.

It should be understood that, in practice, some relays support priority indication information (for example, priorities of periodic configuration information, semi-persistent configuration information, and aperiodic indication information are determined based on the priority indication information), and some relays do not support the priority indication information. In this case, the network device needs to determine whether the relay supports the priority indication information (to determine a priority of configuration information or actual indication information), to perform more effective configuration and indication (and forwarding control).

In an implementation, the relay reports capability information to the network device, and the network device may perform configuration and indication based on the capability information. In another implementation, capability information of the relay is preconfigured for the network device (for example, configured in an operation and maintenance manner when the relay device is deployed), so that the network device can perform configuration and indication based on the capability information.

Optionally, the capability information indicates whether the relay device supports the configuration information of the periodic forwarding resource set.

Optionally, the capability information indicates whether the relay device supports the configuration information of the semi-persistent forwarding resource set.

Optionally, the capability information indicates whether the relay device supports the configuration information of the aperiodic forwarding resource set.

Optionally, the capability information indicates one or more of the following: whether the relay device supports the configuration information of the periodic forwarding resource set, whether the relay device supports the configuration information of the semi-persistent forwarding resource set, or whether the relay device supports the configuration information of the aperiodic forwarding resource set.

In this embodiment of this application, it is assumed that the priority of the first configuration information is higher than the priority of the second configuration information. If the first configuration information is carried in an RRC message, and the second configuration information is carried in a MAC CE or DCI, the priority information may be, for example, a preset value "1" carried in an "overwritten" field in the RRC message, a preset value "0" carried in a "no overwritten" field in the RRC message, or a preset value "enabled" carried in the "no overwritten" field in the RRC message, or a preset value "disabled" carried in the "overwritten" field in the RRC message. Likewise, if the second configuration information is carried in an RRC message, and the first configuration information is carried in a MAC CE or DCI, the priority information may be, for example, a preset value "0" carried in an "overwritten" field in the RRC message, a preset value "1" carried in a "no overwritten" field in the RRC message, a preset value "enabled" carried in the "overwritten" field in the RRC message, or a preset value "disabled" carried in the "no overwritten" field in the RRC message.

It should be understood that the examples of the signaling for carrying the priority information, the examples of the fields for carrying the priority information, and the examples of the preset values are all examples. This application includes but is not limited thereto.

In another possible design, the priority information includes priority values respectively carried in the first signaling and the second signaling. For ease of distinguishing and description, in this specification, the priority value carried in the first signaling is denoted as a first priority value, and the priority value carried in the second signaling is denoted as a second priority value.

Optionally, a larger priority value indicates a higher priority. In this embodiment, assuming that the priority of the first configuration information is higher than the priority of the second configuration information, the first priority value is greater than the second priority value.

Optionally, a larger priority value indicates a lower priority. In this embodiment, assuming that the priority of the first configuration information is higher than the priority of the second configuration information, the first priority value is less than the second priority value.

For example, a priority value may be represented by using a specific value, for example, 0 to P-1, where P represents a quantity of priorities, in other words, a quantity of values of the priority value, and P is a positive integer. For example, if P=4, the priority value may be an integer less than 4, that is, may be 0, 1, 2, and 3. For another example, if P=2, the priority value may be an integer less than 2, that is, may be 0 and 1.

In another possible design, values (or value ranges) of priority values of uplink forwarding and downlink forwarding are different. For example, the value range of the priority value of the downlink forwarding is 0 to P-1, and the priority value range of the uplink forwarding is 0 to P+K-1, where P and K are positive integers. Further, K is a quantity of priorities used on a control link, for example, K=2. Based on this manner, during uplink forwarding, uniform indication with the priority of the control link may be performed, to perform parameter adjustment when a conflict occurs between the control link and a forwarding link.

In this embodiment, values of the first priority value and the second priority value may be separately obtained from a priority value set, and the priority value set may include a plurality of candidate priority values. The priority value set may be predefined, or may be preconfigured by the network device.

For example, the priority value set may be configured by using an RRC message. For example, an allowed priority quantity P may be configured in the RRC message, and the allowed maximum priority quantity may be carried in, for example, a field "maximum forwarding priorities (maxFwd-Priorities)" in the RRC message. Alternatively, an allowed priority value set may be configured in the RRC message as follows: {0 .. maxFwd-Priorities-1}.

In this embodiment, for example, the first signaling may be the MAC CE, and the second signaling may be the DCI; or the first signaling may be the DCI, and the second signaling may be the MAC CE. That is, the first priority value and the second priority value are carried in the MAC CE and the DCI. In other words, the first priority value and the second priority value in the MAC CE and the DCI may be separately obtained from the priority value set configured in the foregoing RRC message.

Further, the RRC message may include the following plurality of information elements: a forwarding configuration, a forwarding resource configuration, a forwarding resource set, and a forwarding resource. The priority value set in the RRC message may correspond to the plurality of information elements in the RRC message. That is, one priority value set may be configured for the four information elements, namely, the forwarding configuration, the forwarding resource configuration, the forwarding resource set, and the forwarding resource, and the information elements may share a same priority value set. The priority value set may be included in, for example, one of the plurality of information elements, for example, the forwarding configuration. In this case, the values of the first priority value and the second priority value in the MAC CE and the DCI are from the same priority value set, in other words, have a same value range.

Alternatively, the priority value set in the RRC message may correspond to each information element, or may correspond to the plurality of information elements. That is, priority value sets may be respectively configured for the forwarding configuration, the forwarding resource configuration, the forwarding resource set, and the forwarding resource, and the priority value sets configured for the information elements may be the same, or may be different.

Table 2 shows an example of a correspondence between the priority value sets and the information elements.

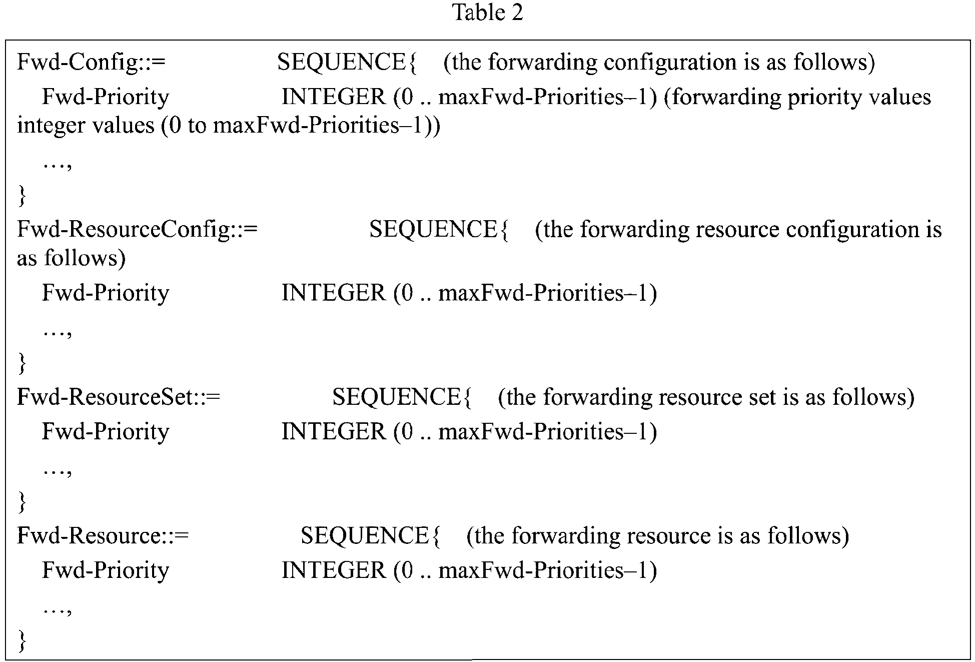

In this case, the values of the first priority value and the second priority value in the MAC CE and the DCI may be from different priority value sets. Specifically, a value range of each priority value may be determined based on an information element to which the forwarding parameters configured by using the configuration information in the MAC CE and the DCI belong in the RRC message. For example, when the forwarding parameters configured by using the MAC CE and the DCI are for defining a resource for signal forwarding, the forwarding parameters configured by using the MAC CE and the DCI belong to parameters in the forwarding resource (Fwd-Resource) information element in the RRC message. The values of the first priority value and the second priority value may be obtained based on a priority value set indicated in the forwarding resource in the RRC message.

As described above, the first priority value and the second priority value may be respectively carried in the first signaling and the second signaling.

In a possible design, the first signaling and the second signaling each carry one priority value, the first priority value indicates a priority of the first signaling, and the second priority value indicates a priority of the second signaling. A priority of each piece of configuration information may be determined based on a priority of signaling for carrying the configuration information. For example, if the priority of the first signaling is higher than the priority of the second signaling, the priority of the first configuration information is higher than the priority of the second configuration information.

In this embodiment, the priority of the first configuration information is higher than the priority of the second configuration information. Therefore, the priority of the first signaling is higher than the priority of the second signaling. If a larger priority value indicates a higher priority, the first priority value is greater than the second priority value. If a larger priority value indicates a lower priority, the first priority value is less than the second priority value.

It should be understood that the examples of the signaling for carrying the priority information, the examples of the signaling for carrying the priority value set, and the examples of the fields for carrying the priority value set are all examples. This application includes but is not limited thereto.

In another possible design, the first signaling and the second signaling each carry one or more priority values. Each priority value corresponds to one piece of configuration information, and indicates a priority of the corresponding configuration information. In this case, the priority of the first configuration information and the priority of the second configuration information are determined based on the priority values corresponding to the first configuration information and the second configuration information.

In this embodiment, the priority of the first configuration information is higher than the priority of the second configuration information. If a larger priority value indicates a higher priority, the first priority value is greater than the second priority value. If a larger priority value indicates a lower priority, the first priority value is less than the second priority value.

In another possible implementation, the priority of the first configuration information and the priority of the second configuration information may be determined based on a priority of the first signaling and a priority of the second signaling. In this embodiment, the priority of the first configuration information is higher than the priority of the second configuration information. Therefore, the priority of the first signaling is higher than the priority of the second signaling.

Priorities of the first signaling and the second signaling may be determined based on a preset rule. Several rules for determining priorities of signaling are enumerated below as examples.

Rule 1: In a descending order of priorities, signaling is sorted as follows: signaling for scheduling an aperiodic resource, signaling for activating a semi-persistent resource, and signaling for configuring a periodic resource.

Rule 2: In a descending order of priorities, signaling is sorted as follows: signaling for configuring a periodic resource, signaling for scheduling an aperiodic resource, and signaling for activating a semi-persistent resource.

Rule 3: In a descending order of priorities, signaling is sorted as follows: signaling for configuring a periodic resource, signaling for activating a semi-persistent resource, and signaling for scheduling an aperiodic resource.

For example, an RRC message may be for configuring the periodic resource, a MAC CE may be for activating the semi-persistent resource, and DCI may be for scheduling the aperiodic resource.

Based on the rule 1, priorities of the signaling may be sorted as follows: A priority of the DCI is higher than a priority of the MAC CE, and the priority of the MAC CE is higher than a priority of the RRC message. In this embodiment, because the priority of the first signaling is higher than the priority of the second signaling, the first signaling may be the DCI, and the second signaling may be the MAC CE or the RRC message; or the first signaling may be the DCI or the MAC CE, and the second signaling may be the RRC message.

Based on the rule 2, priorities of the signaling may be sorted as follows: A priority of the RRC message is higher than a priority of DCI, and the priority of DCI is higher than a priority of the MAC CE. In this embodiment, because the priority of the first signaling is higher than the priority of the second signaling, the first signaling may be the RRC message, and the second signaling may be the DCI or the MAC CE; or the first signaling may be the RRC message or the DCI, and the second signaling may be the MAC CE.

Based on the rule 3, priorities of the signaling may be sorted as follows: A priority of the RRC message is higher than a priority of the MAC CE, and the priority of the MAC CE is higher than a priority of DCI. In this embodiment, because the priority of the first signaling is higher than the priority of the second signaling, the first signaling may be the RRC message, and the second signaling may be the MAC CE or the DCI; or the first signaling may be the RRC message or the MAC CE, and the second signaling may be the DCI.

In an example, if a resource configured by using configuration information is the periodic resource, and the periodic resource may be for transmission of a broadcast signal (for example, a signal like an SSB), a coverage hole (coverage hole) may be caused and system performance may be affected if the configured resource is discarded. If a priority of the signaling for configuring the periodic resource is defined as a high priority, for example, the foregoing rule 2 or rule 3, a case in which the coverage hole is caused because periodic forwarding (for example, the signal like the SSB) of the relay is disabled can be avoided. In this way, this helps obtain larger coverage of the relay device, to better assist in communication between the network device and the terminal device, and improve transmission performance.

Rule 4: A priority of signaling received first is higher than a priority of signaling received later.

In this embodiment, because the priority of the first signaling is higher than the priority of the second signaling, the first signaling is received by the relay device before the second signaling.

Rule 5: A longer effective time period of a forwarding parameter configured by using configuration information in signaling indicates a higher priority of the signaling.

Rule 6: A shorter effective time period of a forwarding parameter configured by using configuration information in signaling indicates a higher priority of the signaling.

That the forwarding parameter takes effect may be understood as that the forwarding parameter is used. An effective time period of the forwarding parameter may be understood as a time period in which the forwarding parameter may be used, in other words, the effective time period of the forwarding parameter. In other words, the relay device may perform signal forwarding by using the forwarding parameter in the effective time period. The effective time period of the forwarding parameter may be configured by using the configuration information of the forwarding parameter. The effective time period of the forwarding parameter configured by using the configuration information may be understood as that the configuration information limits a use time period of the forwarding parameter. The network device may usually configure one or more forwarding parameters by using one piece of signaling. In other words, the piece of signaling may include configuration information of the one or more forwarding parameters. Therefore, if the network device configures one forwarding parameter in each of the first signaling and the second signaling, effective time periods of the forwarding parameters configured in the two pieces of signaling may be compared, to determine the priorities of the first signaling and the second signaling. Generally, when the network device includes configuration information of a plurality of forwarding parameters in one piece of signaling, to configure the plurality of forwarding parameters for the relay device, effective time periods of the plurality of forwarding parameters configured by using the configuration information in a same piece of signaling are consistent. If a plurality of forwarding parameters are configured in either the first signaling or the second signaling, the forwarding parameter configured by using the configuration information in the first signaling may correspond to an effective time period (for example, denoted as an effective time period 1), and the forwarding parameter configured by using the configuration information in the second signaling may also correspond to an effective time period (for example, denoted as an effective time period 2). The priorities of the first signaling and the second signaling may be determined through comparison between the effective time period 1 and the effective time period 2. If effective time periods of the forwarding parameters configured by using the configuration information, carried in the same signaling, of the plurality of forwarding parameters are different, a forwarding parameter with a longest (or shortest) effective time period in the plurality of forwarding parameters may be compared with an effective time period of a forwarding parameter configured in another piece of signaling. For example, if a plurality of forwarding parameters are configured in the first signaling, and a plurality of forwarding parameters are also configured in the second signaling, a forwarding parameter with a longest (or shortest) effective time period in the plurality of forwarding parameters configured in the first signaling may be compared with a forwarding parameter with a longest (or shortest) effective time period in the plurality of forwarding parameters configured in the second signaling, to determine the priorities of the first signaling and the second signaling.

In the rule 5, the longer effective time period of the forwarding parameter indicates the higher priority of the signaling. In other words, a longer time period in which the forwarding parameter may be used indicates the higher priority of the signaling. In this embodiment, because the priority of the first signaling is higher than the priority of the second signaling, an effective time period of the forwarding parameter configured in the first signaling is longer than an effective time period of the forwarding parameter configured in the second signaling.

In the rule 6, the shorter effective time period of the forwarding parameter indicates the higher priority of the signaling. In other words, a shorter time period in which the forwarding parameter may be used indicates the higher priority of the signaling. In this embodiment, because the priority of the first signaling is higher than the priority of the second signaling, an effective time period of the forwarding parameter configured in the first signaling is shorter than an effective time period of the forwarding parameter configured in the second signaling.

Rule 7: A higher priority of a forwarding parameter configured by using configuration information in signaling indicates a higher priority of the signaling.

As described above, the forwarding parameter may include but is not limited to a type of a forwarded signal, a priority of the forwarded signal, a forwarding resource index, a backhaul link beam, an access link beam, forwarding enabled, the forwarding disabled, the amplification gain, a reflection configuration matrix, and the like.

In the foregoing enumerated forwarding parameters, the forwarding disabled is for controlling the relay device to stop signal forwarding, and other forwarding parameters are for controlling the relay device to perform signal forwarding.

In a possible design, a priority of the forwarding disabled may be higher than priorities of the other forwarding parameters. In this case, a priority of signaling including configuration information of the forwarding parameter, namely, the forwarding disabled, is highest. In this embodiment, because the priority of the first signaling is higher than the priority of the second signaling, the forwarding parameter configured by using the configuration information in the first signaling may include the forwarding disabled.

It should be understood that designing the priority of the forwarding disabled to be higher than the priorities of the other forwarding parameter is merely the possible design. In another design, a priority of the forwarding disabled is lower than priorities of the other forwarding parameters. In this case, a priority of signaling including configuration information of the forwarding parameter, namely, the forwarding disabled, is lowest.

Rule 8: A higher priority of a signal forwarded by using a resource configured in signaling indicates a higher priority of the signaling.

A signal forwarded via the relay may include a broadcast signal and a unicast signal. The broadcast signal is usually a cell broadcast signal, for example, an SSB, a PRACH, or a SIB1. These signals are used by the terminal device to access a cell, to perform normal communication in the cell. Therefore, for the terminal device, these signals are more important, and priorities of these signals are higher than a priority of another unicast signal. Based on this, if a resource configured by using configuration information in signaling is for forwarding the broadcast signal, a priority of the signaling is also higher.

To help the relay device determine a priority of signaling, a signal with a higher priority may be predefined and stored in the relay device. When a signal forwarded by using a resource configured in signaling received by the relay device belongs to the predefined signal with the higher priority, a priority of the signaling is higher.

In this embodiment, because the priority of the first signaling is higher than the priority of the second signaling, a signal forwarded by using a resource configured by using the configuration information in the first signaling is the broadcast signal, for example, includes the SSB, the PRACH, or the SIB1.

The foregoing describes, with reference to the plurality of rules, a method for determining the priority of the signaling by the relay device. However, these rules and the foregoing examples are merely examples for ease of understanding, and should not constitute any limitation on this application. The priorities of the RRC message, the MAC CE, and the DCI are not limited in this application.

In addition, it should be noted that, when forwarding parameters are configured for the relay device by using pieces of signaling, configuration may be performed based on a slot. Therefore, priorities of pieces of configuration information may alternatively be compared at a granularity of the slot. In other words, configuration information may correspond to one priority in each slot.

It should be further noted that, because the configuration information (including the first configuration information and the second configuration information) may be for configuring the forwarding parameters for the relay device, the priorities of the configuration information may alternatively be understood as priorities of the forwarding parameters; and because the forwarding parameters that may be configured for the relay device by using the configuration information (including the first configuration information and the second configuration information) include resources for signal forwarding, the priorities of the configuration information may alternatively be understood as priorities of the resource.

When it is determined that the priority of the first configuration information is higher than the priority of the second configuration information, the relay device may perform signal forwarding based on the first configuration information. The relay device may forward an uplink signal, or may forward a downlink signal. Step 620 may specifically include the following steps.

Step 6201: Forward, to the terminal device based on the first configuration information, a signal received from the network device; and/or

Step 6202: Forward, to the network device based on the first configuration information, a signal received from the terminal device.

It should be understood that step 6201 is forwarding of the downlink signal by a relay signal, and step 6202 is forwarding of the uplink signal by the relay device. Whether the relay device forwards the uplink signal or forwards the downlink signal may be determined based on control of the network device. A direction in which the relay device performs signal forwarding is not limited in this application. Step 620 may include step 6201 but not step 6202, may include step 6202 but not step 6201, or may include step 6201 and step 6202.

The following describes in detail, from a perspective of a time granularity, a process in which the relay device performs signal forwarding based on the first configuration information.

As described above, in the possible case of the configuration conflict, the first forwarding parameter and the second forwarding parameter are a same forwarding parameter, but the configuration performed on the first forwarding parameter by using the first configuration information is different from the configuration performed on the second forwarding parameter by using the second configuration information For example, the forwarding parameter includes a parameter for configuring the relay device to perform signal forwarding, for example, the backhaul link beam, the access link beam, the amplification gain, or the reflection configuration matrix.

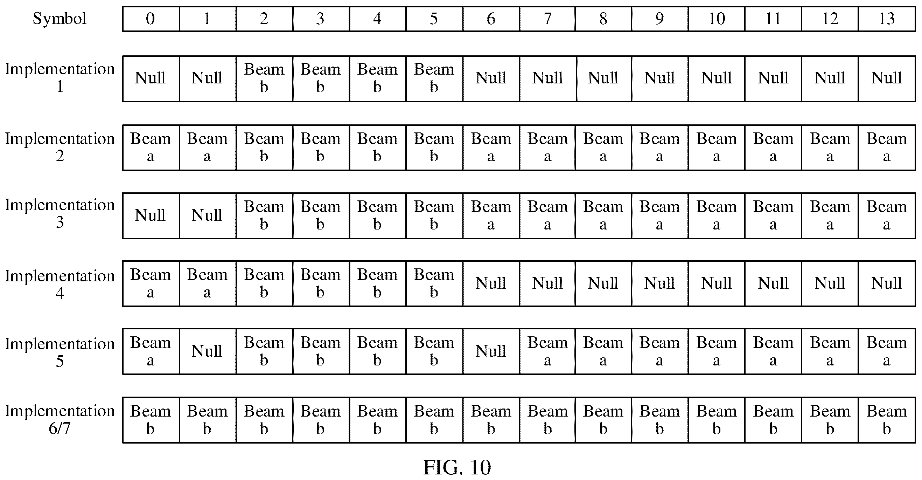

In this case, there are a plurality of possible implementations when the relay device performs step 620. The following uses the conflict between the configuration information shown in FIG. 5 as an example to describe, with reference to FIG. 10, the plurality of implementations in which the relay device performs step 620. It should be understood that the plurality of implementations shown with reference to FIG. 10 below may be used separately or in combination. For example, different implementations are used in different slots, or different implementations are used when there are a plurality of target time periods in a same slot. This is not limited in this application.

FIG. 10 separately shows seven implementations in which the relay device performs signal forwarding based on the first configuration information. For ease of understanding, the following descriptions are first provided: In FIG. 10, it is assumed that the first configuration information is for configuring the beam b, the beam b takes effect on the symbol 2 to the symbol 5, the second configuration information is for configuring the beam a, and the beam a takes effect on the symbol 0 to the symbol 13. In other words, the first time period includes the symbol 2 to the symbol 5, and the second time period includes the symbol 0 to the symbol 13, namely, an entire slot. For ease of description, in the following descriptions, the slot which the first time period and the second time period are jointly in is denoted as a target slot, a repeated time period between the first time period and the second time period is denoted as a target time period, and the target time period includes one or more time domain symbols in the target slot, for example, the four time domain symbols, namely, the symbol 2 to the symbol 5 in the figure.

In an implementation 1, the relay device forwards, to the terminal device based on the first configuration information in the first time period, the signal received from the network device, or forwards, to the network device based on the first configuration information in the first time period, the signal received from the terminal device; and skips performing signal forwarding on a time domain symbol other than the first time period in the target slot.

In other words, in the target slot, the relay device performs signal forwarding based on the first configuration information, and ignores other received configuration information such as the second configuration information. In other words, in the target slot, the relay device performs signal forwarding based only on the configuration information with the higher priority. In other words, the first configuration information conflicts with the second configuration information in the target slot, and the relay device performs signal forwarding based only on the first configuration information in the target slot.

As shown in the figure, the relay device performs signal forwarding by using the beam b based on the first configuration information on the symbol 2 to the symbol 5, and skips performing signal forwarding on another time domain symbol.

In the implementation 1, the relay device only needs to perform processing based on the configuration information with the higher priority in the slot in which the first configuration information conflicts with the second configuration information. In this way, it can be ensured that the forwarding parameter configured by using the configuration information with the higher priority can be used, the relay device does not need to perform processing such as beam switching and power adjustment in one slot, and implementation is simple.

In an implementation 2, the relay device forwards, to the terminal device based on the first configuration information in the target time period, the signal received from the network device, or forwards, to the network device based on the first configuration information in the target time period, the signal received from the terminal device; and performs or skips performing signal forwarding based on the received configuration information on another time domain symbol in the target slot.

In other words, the relay device performs signal forwarding based on the first configuration information in the target time period, and the relay device performs processing based on the received configuration information on the time domain symbol other than the target time period in the target slot. For example, if another forwarding parameter is configured on the another time domain symbol, to control the relay device to perform signal forwarding, the another forwarding parameter is a performing basis. If the forwarding disabled or no other forwarding parameters are configured on the another time domain symbol, the relay device skips performing signal forwarding. In other words, if the first configuration information conflicts with the second configuration information in the target time period, the relay device performs signal forwarding based only on the first configuration information in the target time period.

As shown in the figure, the relay device may perform signal forwarding by using the beam b based on the first configuration information on the symbol 2 to the symbol 5, and the relay device may perform signal forwarding by using the beam a based on the second configuration information on the symbol 0, the symbol 1, and the symbol 6 to the symbol 13.

In the implementation 2, the relay device performs processing based on the configuration information with the higher priority in the target time period in which the configuration conflict occurs, and may still perform processing based on the received configuration information in another time period in which no conflict occurs. Therefore, a time domain resource can be fully used, to help improve resource utilization.

In an implementation 3, the relay device forwards, to the terminal device based on the first configuration information in the target time period, the signal received from the network device, or forwards, to the network device based on the first configuration information in the target time period, the signal received from the terminal device; skips performing signal forwarding on another time domain symbol that is in the target slot and that is before the target time period; and performs or skips performing signal forwarding based on the received configuration information on another time domain symbol that is in the target slot and that is after the target time period.

In other words, the relay device performs signal forwarding based on the first configuration information in the target time period, the relay device skips performing signal forwarding on the another time domain symbol that is in the target slot and that is before the target time period, and the relay device performs processing based on the received configuration information on the time domain symbol other than the target time period and the time domain symbol before the target time period in the target slot. For example, if another forwarding parameter is configured on these time domain symbols, to control the relay device to perform signal forwarding, the another forwarding parameter is a performing basis. If the forwarding disabled or no other forwarding parameters are configured on these time domain symbols, the relay device skips performing signal forwarding. In other words, if the first configuration information conflicts with the second configuration information in the target time period, the relay device performs signal forwarding based only on the first configuration information in the target time period and on the another time domain symbol that is in the target slot and that is before the target time period.

As shown in the figure, the relay device may perform signal forwarding by using the beam b based on the first configuration information on the symbol 2 to the symbol 5, the relay device may skip performing signal forwarding on the symbol 0 and the symbol 1, and the relay device may perform signal forwarding by using the beam a based on the second configuration information on the symbol 6 to the symbol 13.

In the implementation 3, although the relay device performs beam switching, implementation is simple because the relay device does not need to keep phase continuity of the symbol 1 and the symbol 6.

In an implementation 4, the relay device forwards, to the terminal device based on the first configuration information in the target time period, the signal received from the network device, or forwards, to the network device based on the first configuration information in the target time period, the signal received from the terminal device; skips performing signal forwarding on the another time domain symbol that is in the target slot and that is after the target time period; and performs or skips performing signal forwarding based on the received configuration information on the another time domain symbol that is in the target slot and that is before the target slot.

A processing manner in the implementation 3 is similar to that in the implementation 4, and a difference lies in that processing manners on the another time domain symbol before the target time period and the another time domain symbol after the target time period are exactly opposite. Refer to the foregoing descriptions for understanding. Details are not described again.

In other words, if the first configuration information conflicts with the second configuration information in the target time period, the relay device performs signal forwarding based only on the first configuration information in the target time period and on the another time domain symbol that is in the target slot and that is after the target time period.

As shown in the figure, the relay device may perform signal forwarding by using the beam b based on the first configuration information on the symbol 2 to the symbol 5, the relay device may perform signal forwarding by using the beam a based on the second configuration information on the symbol 0 and the symbol 1, and the relay device may skip performing signal forwarding on the symbol 6 to the symbol 13.

In the implementation 4, although the relay device performs beam switching, implementation is simple because the relay device does not need to keep phase continuity of the symbol 1 and the symbol 6 during beam switching.

It may be understood that, in the implementation 3 and the implementation 4, if there are no other time domain symbols after or before the target time period in the target slot, the foregoing processing manner on the another time domain symbol before or after the target time period may be ignored.

In an implementation 5, the relay device forwards, to the terminal device based on the first configuration information in the target time period, the signal received from the network device, or forwards, to the network device based on the first configuration information in the target time period, the signal received from the terminal device; skips performing signal forwarding in a reserved time period; and performs or skips performing signal forwarding based on the received configuration information on a time domain symbol other than the target time period and the reserved time period in the target slot.

The reserved time period may include k1 time domain symbols that are in the target slot and that are before the target time period and/or k2 time domain symbols that are in the target slot and that are after the target time period, where both k1 and k2 are preconfigured values or predefined values, and both k1 and k2 are integers greater than or equal to 0.

In other words, if the first configuration information conflicts with the second configuration information in the target time period, the relay device performs signal forwarding based only on the first configuration information in the target time period and the reserved time period.

Considering that processing time may be needed for the relay device to perform beam switching, power adjustment, and the like, a period of time may be reserved before or after the target time period, so that the relay device performs processing such as beam switching and power adjustment.

A length of the reserved time period may be a preconfigured value or a predefined value. The length of the reserved time period may be represented by using, for example, a value of the parameter k1 or k2. k1 is the quantity of the time domain symbols included in the reserved time period before the target time period, and k2 is the quantity of the time domain symbols included in the reserved time period after the target time period. That k1 is 0 may indicate that the reserved time period before the target time period includes zero time domain symbols. That is, no reserved time period is configured before the target time period. That k2 is 0 may indicate that the reserved time period after the target time period includes zero time domain symbols. That is, no reserved time period is configured after the target time period. In this application, the values of k1 and k2 may be the same, or may be different. This is not limited in this application.

As shown in the figure, the relay device performs signal forwarding by using the beam b based on the first configuration information on the symbol 2 to the symbol 5, skips performing signal forwarding on the symbol 1 and the symbol 6, and performs signal forwarding by using the beam a based on the second configuration information on the symbol 0 and the symbol 7 to the symbol 13. The reserved time period shown in the figure includes one time domain symbol (namely, the symbol 1) before the target time period and one time domain symbol (namely, the symbol 6) after the target time period.

Optionally, a length of the reserved time period may be related to a plurality of factors such as a capability (which is also referred to as a capability type or a type) of the relay device, a subcarrier spacing of a resource for signal forwarding, and an operating carrier frequency range (frequency range, FR).

For example, the length of the reserved time period is related to the capability of the relay device. If the capability of the relay device is stronger, a processing delay of a controller is lower, processing such as beam switching and power adjustment is faster, and the reserved time period may not be needed, or a shorter reserved time period may be needed. In this case, values of k1 and k2 may be smaller, or may even be 0. If the capability of the relay device is weaker, a processing delay of a controller is higher, processing such as beam switching and power adjustment is slower, and a longer reserved time period may be needed. In this case, values of k1 and k2 may be larger. For example, a reserved time period corresponding to a relay device of a first capability type may include one time domain symbol. For example, the value of k1 or k2 is 1. That is, the reserved time period includes one time domain symbol before the target time period or one time domain symbol after the target time period. A reserved time period corresponding to a relay device of a second capability type may include two time domain symbols. For example, the value of k1 or k2 is 2. That is, the reserved time period includes two time domain symbols before the target time period or two time domain symbols after the target time period. Alternatively, the values of k1 and k2 are 1. That is, the reserved time period includes one time domain symbol before the target time period and one time domain symbol after the target time period. Such cases are not enumerated again.

For another example, the length of the reserved time period is related to the subcarrier spacing of the resource used by the relay device to perform signal forwarding. Because the type of the relay device may correspond to the subcarrier spacing, different types of relay devices may correspond to subcarrier spacings having different values. The subcarrier type is inversely proportional to a time domain symbol length. A smaller subcarrier spacing indicates a longer time domain symbol length. Therefore, a relay device with a stronger capability corresponds to a larger subcarrier spacing, and a relay device with a weaker capability corresponds to a smaller subcarrier spacing. When the values of k1 and k2 are fixed, the relay device with the stronger capability corresponds to a shorter reserved time period, and the relay device with the weaker capability corresponds to a longer reserved time period. A reserved time period corresponding to a first subcarrier spacing includes one time domain symbol, and a reserved time period corresponding to a second subcarrier spacing includes two time domain symbols.

An example of a correspondence between the subcarrier spacing and the length of the reserved time period may be shown in Table 3 below. The subcarrier spacing may alternatively be represented by using a subcarrier spacing index. The reserved time period specifically refers to the length of the reserved time period, and may be represented by using a quantity of time domain symbols included in the reserved time period.

**Table 3**

| Subcarrier spacing | Length of a reserved time period |
|---|---|
| 15 kilohertz (kHz) | 0 |
| 30 kHz | 1 |
| 60 kHz | 2 |
| 120 kHz | 2 |
| 240 kHz | 2 |
| 480 kHz | 8 |
| 960 kHz | 16 |
| 1920 kHz | 16 |

For still another example, the length of the reserved time period may be related to the carrier frequency range in which the relay device that performs signal forwarding operates. For example, a reserved time period corresponding to the relay device operating in a first frequency range may include one time domain symbol. For example, the value of k1 or k2 may be 1. That is, the reserved time period includes one time domain symbol before the target time period or one time domain symbol after the target time period. A reserved time period corresponding to the relay device operating in a second frequency range may include two time domain symbols. For example, the value of k1 or k2 may be 2. That is, the reserved time period includes two time domain symbols before the target time period or two time domain symbols after the target time period. Alternatively, the values of k1 and k2 are 1. That is, the reserved time period includes one time domain symbol before the target time period and one time domain symbol after the target time period. A reserved time period corresponding to the relay device operating in a third frequency range may include seven time domain symbols. For example, the value of k1 or k2 may be 7. That is, the reserved time period includes seven time domain symbols before the target time period or seven time domain symbols after the target time period. Alternatively, a sum of the values of k1 and k2 is 7. For example, the value of k1 is 4, and the value of k2 is 3. That is, the reserved time period includes four time domain symbols before the target time period and three time domain symbols after the target time period. Such cases are not enumerated again.

An example of a correspondence between the operating frequency range and the length of the reserved time period may be shown in Table 4 below. The frequency range corresponds to a frequency range name. The reserved time period specifically refers to the length of the reserved time period, and may be represented by using a quantity of time domain symbols included in the reserved time period.

**Table 4**

| Frequency range name | Frequency range | Length of a reserved time period |
|---|---|---|
| FR 1 | 410 MHz to 7125 MHz | 1 |
| FR 2-a | 24250 MHz to 52600 MHz | 2 |
| FR 2-b | 52600 MHz to 71000 MHz | 8 |

In the implementation 5, because the processing delay of the relay device is considered, impact of the processing such as beam switching and power adjustment on data transmission of the relay device can be avoided.

It should be noted that there may be a plurality of noncontiguous target time periods in time domain in one slot, and a reserved time period after a current target time period and a reserved time period before a next target time period may overlap. In this case, a corresponding reserved time period may be determined based on each target time period. In addition, if the k1 time domain symbols before the target time period or the k2 time domain symbols after the target time period are out of a range of the target slot, a time domain symbol out of the target slot may not be included in a range of the reserved time period. In other words, the reserved time period may include a maximum of the k1 time domain symbols before the target time period in the target slot and/or a maximum of the k2 time domain symbols after the target time period in the target slot. Alternatively, a reserved time period between two neighboring target time periods is set based on a larger value needed by the two target time periods, that is, a larger value in k2 corresponding to the current target time period and k1 corresponding to the next target time period. If a time interval between the two target time periods is less than a needed reserved time period, one of the target time periods may be ineffective or a part of one of the target time periods may be ineffective based on a preset or indicated priority. For example, a part of a target time period corresponding to a smaller value in k1 and k2 may be used as the reserved time period. For another example, a part of a target time period corresponding to a larger value in k1 and k2 may be used as the reserved time period.

In an implementation 6, the relay device forwards, to the terminal device based on the first configuration information in the first time period and the second time period, the signal received from the network device, or forwards, to the network device based on the first configuration information in the first time period and the second time period, the signal received from the terminal device; and skips performing signal forwarding on a time domain symbol other than the first time period and the second time period in the target slot.

In other words, the relay device may perform signal forwarding on a scheduled time domain resource, but a forwarding parameter based on which signal forwarding is performed may be the first forwarding parameter in the first configuration information with the higher priority, and the second forwarding parameter in the second configuration information is not considered.

As shown in the figure, the resource of the relay device in the entire slot from the symbol 0 to the symbol 13 is all scheduled for the relay device to perform signal forwarding, and the relay device may perform signal forwarding by using the beam b based on the first configuration information in the entire slot from the symbol 0 to the symbol 13.

Although not shown in the figure, it may be understood that, if no forwarding parameter is configured on some time domain symbols in the slot, it indicates that performing signal forwarding is skipped on the time domain symbols. For example, if no forwarding parameter is configured on the symbol 13, the relay device may perform signal forwarding by using the beam b based on the first configuration information on the symbol 0 to the symbol 12, but skip performing signal forwarding on the symbol 13.

In the implementation 6, the relay device may repeatedly use the scheduled resource to perform signal forwarding, and may also perform processing based on the configuration information with the higher priority. The time domain resource can be fully used, to help improve the resource utilization. In addition, impact of forwarding on an unscheduled resource on communication between other devices can be avoided.

In an implementation 7, the relay device forwards, to the terminal device based on the first configuration information in the target slot, the signal received from the network device, or forwards, to the network device based on the first configuration information in the target slot, the signal received from the terminal device.

In other words, a granularity at which the relay device performs signal forwarding based on the first configuration information is changed from a time domain symbol granularity in the foregoing implementations 1 to 5 to a slot granularity. In the entire target slot, the relay device may perform signal forwarding based on the first configuration information. In other words, if the first configuration information conflicts with the second configuration information in the target slot, the relay device performs signal forwarding based only on the first configuration information on all time domain symbols in the target slot.

As shown in the figure, the relay device performs signal forwarding by using the beam b based on the first configuration information in the entire target slot from the symbol 0 to the symbol 13.

In the implementation 7, in the slot in which the first configuration information conflicts with the second configuration information, the relay device does not need to consider a specific conflicting location, and may perform processing based on the configuration information with the higher priority in the entire slot. The relay device does not need to perform processing such as beam switching and power adjustment, and implementation is simple. In addition, the time domain resource can be fully used, to help improve the resource utilization.

In the implementation 1 to the implementation 7, the relay device may process the conflict between the configuration information based on one of the implementations. A specific implementation used by the relay device may be predefined in a protocol, may be preconfigured by the network device, or may be determined by the relay device. This is not limited in this application.

For example, the relay device may determine, based on the type of the signal, a type of a resource, a priority of the resource, or another forwarding parameter, an implementation to be used to perform step 620. In this way, signals of different types, resources of different types, resources with different priorities, and the like may correspond to different implementations. For example, when a signal forwarded by using a resource configured by using the configuration information in the second signaling is a preset signal (for example, the SSB), the implementation 1 may be used; or when the signal forwarded by using the resource configured by using the configuration information in the second signaling is another signal, one or more of the implementations 2 to 7 may be used.

In addition, in FIG. 10, merely for ease of understanding, the foregoing several implementations are described by using the beam as an example of the forwarding parameter. It may be understood that the beam may alternatively be replaced with another forwarding parameter. In addition, there may alternatively be a plurality of forwarding parameters on which a configuration conflict occurs. This application includes but is not limited thereto.

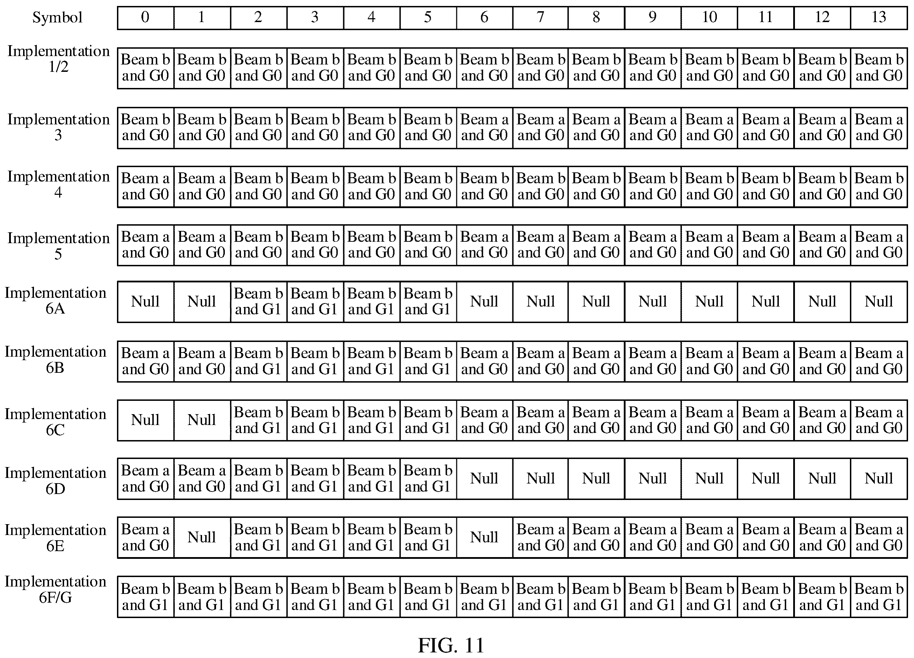

For ease of understanding, the following uses the conflict between the configuration information shown in FIG. 9 as an example to describe, with reference to FIG. 11, the plurality of implementations in which the relay device performs step 620 when there are a plurality of forwarding parameters on which the configuration conflict occurs. It should be understood that the plurality of implementations shown with reference to FIG. 11 below may be used separately or in combination. For example, different implementations are used in different slots, or different implementations are used when there are a plurality of target time periods in a same slot. This is not limited in this application.

FIG. 11 separately shows a plurality of implementations in which the relay device performs signal forwarding based on the first configuration information. For ease of understanding, the following descriptions are first provided: The network device includes configuration information #1 and configuration information #2 in signaling #1, where the configuration information #1 is for configuring the beam a, the configuration information #2 is for configuring the amplification gain G0, and the effective time period of the beam a and the amplification gain G0 is the symbol 0 to the symbol 13, namely, an entire slot. The network device includes configuration information #3 and configuration information #4 in signaling #2, where the configuration information #3 is for configuring the beam b, the configuration information #4 is for configuring the amplification gain G1, and the effective time period of the beam b and the amplification gain G1 is the symbol 2 to the symbol 5. It can be learned that the forwarding parameters configured in the signaling #1 conflict with the forwarding parameters configured in the signaling #2 on the symbol 2 to the symbol 5. That is, a target time period includes the four time domain symbols, namely, the symbol 2 to the symbol 5, and a target slot is the slot which the symbol 0 to the symbol 13 are in.

In the plurality of implementations provided below, in an implementation 1 to an implementation 5, priorities of configuration information are determined at a granularity of the configuration information (in other words, the forwarding parameters); and in an implementation 6, the priorities of the configuration information are determined at a granularity of the signaling.

It is assumed that, in the configuration information #1 and the configuration information #3, a priority of the configuration information #3 is higher than a priority of the configuration information #1. That is, a priority of the beam b is higher than a priority of the beam a. The configuration information #3 may be considered as an example of the first configuration information, and the configuration information #1 may be considered as an example of the second configuration information. In the configuration information #2 and the configuration information #4, a priority of the configuration information #2 is higher than a priority of the configuration information #4. That is, a priority of the amplification gain G0 is higher than a priority of the amplification gain G1. The configuration information #2 may be considered as another example of the first configuration information, and the configuration information #4 may be considered as another example of the second configuration information.

In the implementation 1, the relay device forwards, to the terminal device based on the first configuration information in the target slot, the signal received from the network device, or forwards, to the network device based on the first configuration information in the target slot, the signal received from the terminal device.

For the forwarding parameter, namely, the beam, the first configuration information is the configuration information #3, and the configured beam is the beam b. Therefore, the relay device may perform signal forwarding by using the beam b on each time domain symbol in the target slot.

For the forwarding parameter, namely, the amplification gain, the first configuration information is the configuration information #2, and the configured amplification gain is G0. Therefore, the relay device may perform signal forwarding based on the amplification gain G0 on each time domain symbol in the target slot.

In the implementation 2, the relay device forwards, to the terminal device based on the first configuration information in the first time period and the second time period, the signal received from the network device, or forwards, to the network device based on the first configuration information in the first time period and the second time period, the signal received from the terminal device; and skips performing signal forwarding on a time domain symbol other than the first time period and the second time period in the target slot.

In other words, the relay device may perform signal forwarding on a scheduled time domain resource, but a forwarding parameter based on which signal forwarding is performed may be the first forwarding parameter in the first configuration information with the higher priority, and the second forwarding parameter in the second configuration information is not considered.

For the forwarding parameter, namely, the beam, the first configuration information is the configuration information #3, the configured beam is the beam b, and the first time period and the second time period include the entire slot from the symbol 0 to the symbol 13. Therefore, the relay device may perform signal forwarding by using the beam b on each time domain symbol in the target slot.

For the forwarding parameter, namely, the amplification gain, the first configuration information is the configuration information #2, the configured amplification gain is G0, and the first time period and the second time period include the entire slot from the symbol 0 to the symbol 13. Therefore, the relay device may perform signal forwarding based on the amplification gain G0 on each time domain symbol in the target slot.

As shown in the figure, the resource of the relay device in the entire slot from the symbol 0 to the symbol 13 is all scheduled for the relay device to perform signal forwarding, and the relay device may perform signal forwarding by using the beam b and the amplification gain G0 based on the first configuration information in the entire slot from the symbol 0 to the symbol 13.

Although not shown in the figure, it may be understood that, if some time domain symbols in the slot are not scheduled, performing signal forwarding is skipped on the time domain symbols. For example, if no forwarding parameter is configured on the symbol 13, the relay device may perform signal forwarding by using the beam b based on the first configuration information on the symbol 0 to the symbol 12, but skip performing signal forwarding on the symbol 13.

In the implementation 3, the relay device forwards, to the terminal device based on the first configuration information in the target time period, the signal received from the network device, or forwards, to the network device based on the first configuration information in the target time period, the signal received from the terminal device; skips performing signal forwarding on another time domain symbol that is in the target slot and that is before the target time period; and performs or skips performing signal forwarding based on the received configuration information on another time domain symbol that is in the target slot and that is after the target time period.

For the forwarding parameter, namely, the beam, the first configuration information is the configuration information #3, the configured beam is the beam b, and the first time period includes the symbol 2 to the symbol 5; and the second configuration information is the configuration information #1, the configured beam is the beam a, and the second time period includes the symbol 0 to the symbol 13. Therefore, the relay device may perform signal forwarding by using the beam b on the symbol 2 to the symbol 5, the symbol 0, and the symbol 1, and the relay device may perform signal forwarding by using the beam a on the symbol 6 to the symbol 13.

For the forwarding parameter, namely, the amplification gain, the first configuration information is the configuration information #2, the configured amplification gain is G0, and the first time period includes the symbol 0 to the symbol 13; and the second configuration information is the configuration information #4, the configured amplification gain is G1, and the second time period includes the symbol 2 to the symbol 5. Therefore, the relay device may perform signal forwarding based on the amplification gain G0 on the symbol 0 to the symbol 13.

In the implementation 4, the relay device forwards, to the terminal device based on the first configuration information in the target time period, the signal received from the network device, or forwards, to the network device based on the first configuration information in the target time period, the signal received from the terminal device; skips performing signal forwarding on the another time domain symbol that is in the target slot and that is after the target time period; and performs or skips performing signal forwarding based on the received configuration information on the another time domain symbol that is in the target slot and that is before the target slot.

For the forwarding parameter, namely, the beam, the first configuration information is the configuration information #3, the configured beam is the beam b, and the first time period includes the symbol 2 to the symbol 5; and the second configuration information is the configuration information #1, the configured beam is the beam a, and the second time period includes the symbol 0 to the symbol 13. Therefore, the relay device may perform signal forwarding by using the beam b on the symbol 2 to the symbol 5, and the symbol 6 to the symbol 13, and the relay device may perform signal forwarding by using the beam a on the symbol 0 and the symbol 1.

For the forwarding parameter, namely, the amplification gain, the first configuration information is the configuration information #2, the configured amplification gain is G0, and the first time period includes the symbol 0 to the symbol 13; and the second configuration information is the configuration information #4, the configured amplification gain is G1, and the second time period includes the symbol 2 to the symbol 5. Therefore, the relay device may perform signal forwarding based on the amplification gain G0 on the symbol 0 to the symbol 13.

In the implementation 5, the relay device forwards, to the terminal device based on the first configuration information in the first time period, the signal received from the network device, or forwards, to the network device based on the first configuration information in the first time period, the signal received from the terminal device; and performs or skips performing signal forwarding based on the received configuration information on a time domain symbol other than the first time period in the target slot.

In other words, the relay device performs signal forwarding based on the first configuration information and ignores other received configuration information in the first time period in the target slot, and processing may be performed based on the other received configuration information on the time domain symbol other than the first time period. For example, if another forwarding parameter is configured on the another time domain symbol, to control the relay device to perform signal forwarding, the another forwarding parameter is a performing basis.

As shown in the figure, for the forwarding parameter, namely, the beam, the first configuration information is the configuration information #3, the configured beam is the beam b, and the first time period includes the symbol 2 to the symbol 5; and the second configuration information is the configuration information #1, the configured beam is the beam a, and the second time period includes the symbol 0 to the symbol 13. Therefore, the relay device may perform signal forwarding by using the beam b on the symbol 2 to the symbol 5, and the relay device may perform signal forwarding by using the beam a on the symbol 0, the symbol 1, and the symbol 6 to the symbol 13.

For the forwarding parameter, namely, the amplification gain, the first configuration information is the configuration information #2, the configured amplification gain is G0, and the first time period includes the symbol 0 to the symbol 13; and the second configuration information is the configuration information #4, the configured amplification gain is G1, and the second time period includes the symbol 2 to the symbol 5. Therefore, the relay device may perform signal forwarding based on the amplification gain G0 on the symbol 0 to the symbol 13.

It may be understood that, in this example, the effective time period of the forwarding parameters (for example, the beam a and the amplification gain G0) shown in FIG. 11 occupies the entire target slot. Therefore, the relay device keeps performing signal forwarding in the entire target slot. If the forwarding parameters in this example do not occupy the entire target slot, for example, the beam a and the amplification gain G0 in FIG. 11 take effect on some symbols (for example, the symbol 0 to the symbol 10) in the target slot, that is, forwarding parameters on the symbol 11 to the symbol 13 are null, forwarding behavior that is of the relay device and that is determined based on the implementation 3 to the implementation 5 may be skipping performing signal forwarding on the symbol 11 to the symbol 13.

In an implementation 6, the priorities of the configuration information are determined based on the signaling. In the two forwarding parameters, namely, the beam and the amplification gain, it is assumed that a priority of the beam is higher than a priority of the amplification gain. A priority of the configuration information #3 for configuring the beam b is higher than a priority of the configuration information #1 for configuring the beam a. Therefore, a priority of the signaling #2 is higher than a priority of the signaling #1. Therefore, for the forwarding parameter, namely, the beam, the configuration information #3 is an example of the first configuration information, the configuration information #1 is an example of the second configuration information, the signaling #2 is an example of the first signaling, and the signaling #1 is an example of the second signaling. The priority of the signaling #2 is higher than the priority of the signaling #1. Therefore, a priority of the configuration information #4 in the signaling #2 is also higher than a priority of the configuration information #2 in the signaling #1. Therefore, for the forwarding parameter, namely, the amplification gain, the configuration information #4 is another example of the first configuration information, and the configuration information #2 is an example of the second configuration information. In this way, the first time period includes the symbol 2 to the symbol 5, and the second time period includes the symbol 0, the symbol 1, and the symbol 6 to the symbol 13. The relay device may perform step 620 with reference to the seven implementations in the example in FIG. 10 based on the foregoing descriptions. For details, refer to an implementation 6A to an implementation 6G in FIG. 11. For related descriptions of the implementation 6A to the implementation 6G, refer to the foregoing related descriptions in the seven implementations provided with reference to FIG. 10. For brevity, details are not described herein again.

For example, the relay device may determine, based on the type of the signal, a type of a resource, a priority of the resource, or another forwarding parameter, an implementation to be used to perform step 620. In this way, signals of different types, resources of different types, resources with different priorities, and the like may correspond to different implementations. For example, when a signal forwarded by using a resource configured by using the configuration information in the second signaling is a preset signal (for example, the SSB), the implementation 6A may be used; or when the signal forwarded by using the resource configured by using the configuration information in the second signaling is another signal, one or more of the implementations 1 to 4 and the implementations 6B to 6F may be used.

In the another possible case of the configuration conflict, the first forwarding parameter and the second forwarding parameter are different forwarding parameters, and the effective time period of the first forwarding parameter and the effective time period of the second forwarding parameter are in the same slot.

For example, the first forwarding parameter is the forwarding disabled, and the second forwarding parameter is a parameter for configuring the relay device to perform signal forwarding. In this case, the priorities of the configuration information may be determined based on the priorities of the forwarding parameters. For example, if the priority of the forwarding disabled is higher than the priorities of the other forwarding parameters, it may be determined that the priority of the first configuration information is higher than the priority of the second configuration information. Optionally, the method further includes step 630: Skip performing signal forwarding based on the first configuration information.

It should be understood that, in this application, the forwarding disabled may alternatively be understood as not forwarding (not-forwarding) a received signal, that is, skipping performing signal forwarding.

For example, there may be a plurality of manners/modes of the forwarding disabled. The following provides a plurality of possible implementations:Implementation 1: The relay device disables a signal amplifier, and disables an access link.

Implementation 2: The relay device disables a signal amplifier, and disables a backhaul link.

Implementation 3: The relay device disables a signal amplifier, disables a backhaul link, and disables an access link.

Implementation 4: The relay device disables a signal amplifier.

Implementation 5: The relay device disables an access link, but does not disable a backhaul link and a signal amplifier.

Implementation 6: The relay device disables a backhaul link, but does not disable an access link and a signal amplifier.

Implementation 7: The relay device disables a backhaul link and an access link, but does not disable a signal amplifier.

The signal amplifier in this embodiment of this application refers to a circuit, a unit, a module, or a chip that is in the relay device and that is for signal amplification. That the relay device disables the signal amplifier on a resource may be understood as that the resource is for disabling the signal amplifier, or may be understood as that a signal whose transmission is performed by the relay device on the resource (or a time domain resource corresponding to the forwarding resource) is no longer processed by the signal amplifier.

The access link in this embodiment of this application refers to a circuit, a unit, a module, or a chip that is used by the relay device to perform signal transmission with the terminal device and/or a lower-level relay device (for example, a lower-level relay device in a multi-level relay communication link). That the relay device disables the access link on a resource may be understood as that the resource is for disabling the access link, or may be understood as that the relay device stops, on the resource (or a time domain resource corresponding to the resource), signal transmission performed through the access link.

The backhaul link in this embodiment of this application refers to a circuit, a unit, a module, or a chip that is used by the relay device to perform signal transmission with the network device and/or an upper-level relay device (for example, an upper-level relay device in a multi-level relay communication link). That the relay device disables the backhaul link on a resource may be understood as that the resource is for disabling the backhaul link, or may be understood as that the relay device stops, on the resource (or a time domain resource corresponding to the resource), signal transmission performed through the backhaul link.

A manner in which some modules (for example, any one or two of the backhaul link, the signal amplifier, and the access link) in the backhaul link, the signal amplifier, and the access link are disabled may also be referred to as a light disabling mode. A manner in which the backhaul link, the signal amplifier, and the access link are all disabled may also be referred to as a deep disabling mode.

It should be further understood that, when the forwarding parameter is the forwarding disabled, if the priority of the forwarding disabled is higher than the priorities of the other forwarding parameters, the relay device may not perform step 620, but perform step 630. In other words, step 630 may be for replacing step 620, and the relay device does not necessarily need to perform step 620 and step 630.

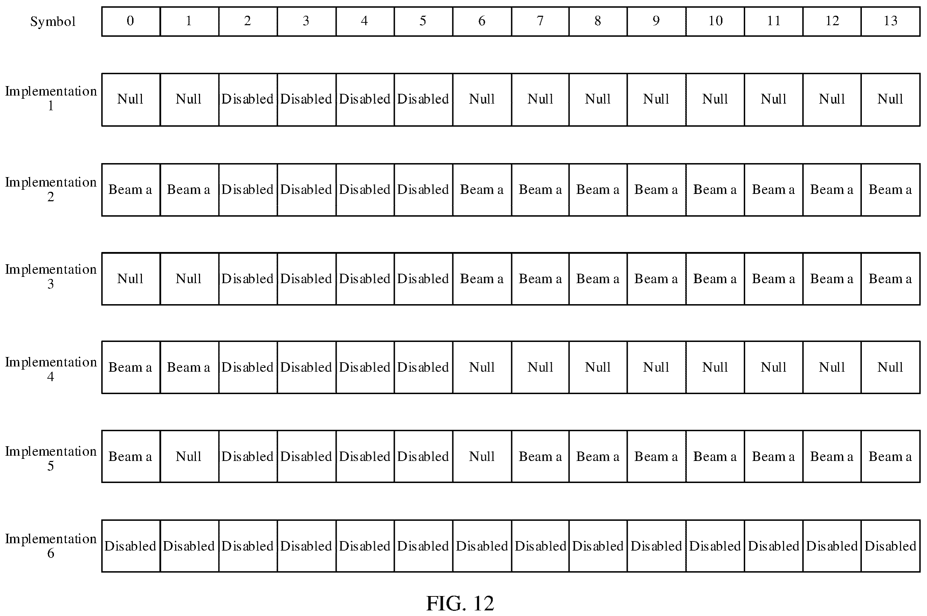

For ease of understanding, the following uses the conflict between the configuration information shown in FIG. 8 as an example to describe, with reference to FIG. 12, the plurality of implementations in which the relay device performs step 630 when there are a plurality of forwarding parameters on which the configuration conflict occurs. It should be understood that the plurality of implementations shown with reference to FIG. 12 below may be used separately or in combination. For example, different implementations are used in different slots, or different implementations are used when there are a plurality of target time periods in a same slot. This is not limited in this application.

FIG. 12 separately shows six implementations in which the relay device skips performing signal forwarding based on the first configuration information. For ease of understanding, the following descriptions are first provided: In FIG. 12, it is assumed that the first configuration information is for configuring the forwarding disabled, and the first time period in which the forwarding disabled takes effect includes the symbol 2 to the symbol 5; and the second configuration information is for configuring the beam a, and the second time period in which the beam a takes effect includes the symbol 0 to the symbol 13, namely, an entire slot. For ease of description, in the following descriptions, the slot which the first time period and the second time period are jointly in is denoted as a target slot, a repeated time period between the first time period and the second time period is denoted as a target time period, and the target time period includes one or more time domain symbols in the target slot, for example, the four time domain symbols, namely, the symbol 2 to the symbol 5 in the figure.

In an implementation 1, the relay device skips performing signal forwarding based on the first configuration information in the first time period.

In other words, in the target slot, the relay device skips performing signal forwarding based on the first configuration information, and ignores other received configuration information such as the second configuration information. In other words, in the target slot, the relay device performs processing based only on the configuration information with the higher priority, that is, skips performing signal forwarding in this example. In other words, the first configuration information conflicts with the second configuration information in the target slot, and the relay device performs processing based only on the first configuration information in the target slot.

As shown in the figure, the relay device skips performing signal forwarding based on the first configuration information on the symbol 2 to the symbol 5, and also skips performing signal forwarding on another time domain symbol.

In the implementation 1, the relay device only needs to perform processing based on the configuration information with the higher priority in the slot in which the first configuration information conflicts with the second configuration information, and processing of the relay device is simple.

In an implementation 2, the relay device skips performing signal forwarding based on the first configuration information in the target time period, and performs or skips performing signal forwarding based on the received configuration information on a time domain symbol other than the target time period in the target slot.

In other words, the relay device skips performing signal forwarding based on the first configuration information in the target time period, and the relay device performs processing based on the received configuration information on the time domain symbol other than the target time period in the target slot. For example, if another forwarding parameter is configured on the another time domain symbol, to control the relay device to perform signal forwarding, the another forwarding parameter is a performing basis. If the forwarding disabled or no other forwarding parameters are configured on the another time domain symbol, the relay device skips performing signal forwarding. In other words, if the first configuration information conflicts with the second configuration information in the target time period, the relay device performs processing based only on the first configuration information in the target time period.

As shown in the figure, the relay device may skip performing signal forwarding based on the first configuration information on the symbol 2 to the symbol 5, and the relay device may perform signal forwarding by using the beam a based on the second configuration information on the symbol 0, the symbol 1, and the symbol 6 to the symbol 13.

In the implementation 2, the relay device performs processing based on the configuration information with the higher priority in the target time period in which the configuration conflict occurs, and may still perform processing based on the received configuration information in another time period in which no conflict occurs. Therefore, a time domain resource can be fully used, to help improve resource utilization.

In an implementation 3, the relay device skips performing signal forwarding based on the first configuration information in the target time period and on another time domain symbol that is in the target slot and that is before the target time period, and performs or skips performing signal forwarding based on the received configuration information on another time domain symbol that is in the target slot and that is after the target time period.

In other words, the relay device skips performing signal forwarding based on the first configuration information in the target time period, the relay device also skips performing signal forwarding on the another time domain symbol that is in the target slot and that is before the target time period, and the relay device performs processing based on the received configuration information on the time domain symbol other than the target time period and the time domain symbol before the target time period in the target slot. For example, if another forwarding parameter is configured on these time domain symbols, to control the relay device to perform signal forwarding, the another forwarding parameter is a performing basis. If the forwarding disabled or no other forwarding parameters are configured on these time domain symbols, the relay device skips performing signal forwarding. In other words, if the first configuration information conflicts with the second configuration information in the target time period, the relay device performs processing based only on the first configuration information in the target time period and on the another time domain symbol that is in the target slot and that is before the target time period.

As shown in the figure, the relay device may skip performing signal forwarding based on the first configuration information on the symbol 2 to the symbol 5, the relay device may skip performing signal forwarding on the symbol 0 and the symbol 1, and the relay device may perform signal forwarding by using the beam a based on the second configuration information on the symbol 6 to the symbol 13.

In an implementation 4, the relay device skips performing signal forwarding based on the first configuration information in the target time period and on the another time domain symbol that is in the target slot and that is after the target time period, and performs or skips performing signal forwarding based on the received configuration information on the another time domain symbol that is in the target slot and that is before the target time period.

In other words, if the first configuration information conflicts with the second configuration information in the target time period, the relay device performs processing based only on the first configuration information in the target time period and on the another time domain symbol that is in the target slot and that is after the target time period.

A processing manner in the implementation 3 is similar to that in the implementation 4, and a difference lies in that processing manners on the another time domain symbol before the target time period and the another time domain symbol after the target time period are exactly opposite. Refer to the foregoing descriptions for understanding. Details are not described again.

As shown in the figure, the relay device may skip performing signal forwarding based on the first configuration information on the symbol 2 to the symbol 5, the relay device may perform signal forwarding by using the beam a based on the second configuration information on the symbol 0 and the symbol 1, and the relay device may skip performing signal forwarding on the symbol 6 to the symbol 13.

In an implementation 5, the relay device skips performing signal forwarding based on the first configuration information in the target time period and a reserved time period, and performs or skips performing signal forwarding based on the received configuration information on a time domain symbol other than the target time period and the reserved time period in the target slot.

In other words, if the first configuration information conflicts with the second configuration information in the target time period, the relay device performs processing based only on the first configuration information in the target time period and the reserved time period.

Considering that processing time may be needed for the relay device to perform beam switching, power adjustment, and the like, a period of time may be reserved before or after the target time period, so that the relay device performs processing such as beam switching and power adjustment. For descriptions of the reserved time period, refer to the foregoing related descriptions. Details are not described again.

As shown in the figure, the relay device skips performing signal forwarding based on the first configuration information on the symbol 2 to the symbol 5, also skips performing signal forwarding on the symbol 1 and the symbol 6, and performs signal forwarding by using the beam a based on the second configuration information on the symbol 0 and the symbol 7 to the symbol 13. The reserved time period shown in the figure includes one time domain symbol (namely, the symbol 1) before the target time period and one time domain symbol (namely, the symbol 6) after the target time period.

In an implementation 6, the relay device skips performing signal forwarding based on the first configuration information on each time domain symbol in the target slot.

In other words, a granularity at which the relay device performs signal forwarding based on the first configuration information is changed from a time domain symbol granularity in the foregoing implementations 1 to 5 to a slot granularity. In the entire target slot, the relay device may perform processing based on the first configuration information, that is, skip performing signal forwarding. In other words, if the first configuration information conflicts with the second configuration information in the target slot, the relay device performs processing based only on the first configuration information on all time domain symbols in the target slot.

As shown in the figure, the relay device skips performing signal forwarding based on the first configuration information in the entire target slot from the symbol 0 to the symbol 13.

In the implementation 1 to the implementation 6, the relay device may process the conflict between the configuration information based on one of the implementations. A specific implementation used by the relay device may be predefined in a protocol, may be preconfigured by the network device, or may be determined by the relay device. This is not limited in this application.

For example, the relay device may determine, based on the type of the signal, a type of a resource, a priority of the resource, or another forwarding parameter, an implementation to be used to perform step 630. In this way, signals of different types, resources of different types, resources with different priorities, and the like may correspond to different implementations. For example, when a signal forwarded by using a resource configured by using the configuration information in the second signaling is a preset signal (for example, the SSB), the implementation 1 may be used; or when the signal forwarded by using the resource configured by using the configuration information in the second signaling is another signal, one or more of the implementations 2 to 6 may be used.

In addition, in FIG. 12, merely for ease of understanding, the foregoing several implementations are described by using the forwarding disabled as an example of the first forwarding parameter and using the beam as an example of the second forwarding parameter. It may be understood that the forwarding parameters are not limited thereto. When priorities of other forwarding parameters are different, and there is a configuration conflict, processing may also be performed with reference to the several implementations shown in FIG. 12. Details are not described herein again.

In the foregoing examples of the configuration conflict shown with reference to FIG. 5 and FIG. 7 to FIG. 9, and the examples in which the relay device performs signal forwarding based on the first configuration information and that are shown with reference to FIG. 10 to FIG. 12, effective duration of each forwarding parameter is described by using an example in which the duration is not greater than one slot. However, this should not constitute any limitation on this application. Effective duration of a forwarding parameter configured by using each piece of configuration information is not limited to one slot, or may be greater than one slot, for example, 112 OFDM symbols, namely, eight slots.

In other words, a case in which the first configuration information conflicts with the second configuration information is not limited to one slot. Another possible case in which the first configuration information conflicts with the second configuration information is as follows: The first forwarding parameter configured by using the first configuration information and the second forwarding parameter configured by using the second configuration information are a same forwarding parameter, but the configuration performed on the first forwarding parameter by using the first configuration information is different from the configuration performed on the second forwarding parameter by using the second configuration information; and the first forwarding parameter takes effect in a first time period, the second forwarding parameter takes effect in a second time period, and at least some time domain symbols in the first time period and at least some time domain symbols in the second time period are in a same slot.

That the at least some time domain symbols in the first time period and the at least some time domain symbols in the second time period are in the same slot includes: The at least some time domain symbols in the first time period and the at least some time domain symbols in the second time period have an overlapping time period in the one or more slots, or the at least some time domain symbols in the first time period and the at least some time domain symbols in the second time period are in the same slot but do not overlap.

As described above, the target time period is the overlapping time period between the first time period and the second time period, namely, a time period in which the configuration conflict occurs between the first configuration information and the second configuration information. It should be understood that the target time period is described at a granularity of a time domain symbol. In contrast, the target slot is described at a granularity of a slot. As described above, the target slot is the slot which the first time period and the second time period are jointly in. However, in this embodiment, the first time period and the second time period each exist in a plurality of slots. Therefore, the target slot may be an intersection set of the slots occupied by the first time period and the slots occupied by the second time period, namely, a slot including both the at least some time domain symbols in the first time period and the at least some time domain symbols in the second time period, namely, a slot including the target time period, in other words, a slot which the target time period is in. In another definition, the target time period may be a union set of the slots occupied by the first time period and the slots occupied by the second time period, namely, a slot including the first time period and the second time period.

It should be understood that the target slot is intended to represent a slot in which the configuration conflict occurs. From a perspective of the time domain symbol, the target slot may be the slot including the target time period, namely, the slot which the target time period is in. From a perspective of a forwarding resource, the target slot may alternatively be a slot in which a forwarding resource configuration conflict occurs, namely, the union set of the first time period and the second time period.

It should be further understood that, in another implementation, the "target time period" may alternatively be described at a granularity of a slot, and/or the "target slot" is replaced with a "target symbol". A related embodiment may be accordingly extended to form a new embodiment.

The first configuration information and the second configuration information may be carried in different signaling, for example, the first signaling and the second signaling, where the first signaling may be for configuring a first forwarding resource, and the second signaling may be for configuring a second forwarding resource. Therefore, that the first configuration information conflicts with the second configuration information is that the first forwarding resource conflicts with the second forwarding resource.

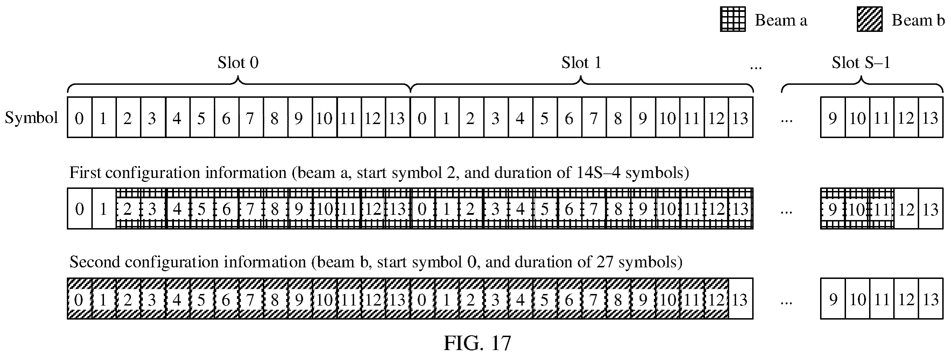

FIG. 17 shows another example of a conflict between the first configuration information and the second configuration information. In the figure, the first configuration information is for configuring a beam a, and an effective time period of the beam a is as follows: A start effective location is a symbol 2 in a slot 0, and duration is 14S-4 symbols, where S is a quantity of slots, and S is a positive integer. In the example in FIG. 17, S is an integer greater than or equal to 2. The second configuration information is for configuring a beam b, and an effective time period of the beam b is as follows: A start effective location is a symbol 0 in the slot 0, and duration is 27 symbols. That is, the first time period includes the symbol 2 in the slot 0 to a symbol 11 in a slot S-1, and the second time period includes the symbol 0 in the slot 0 to a symbol 12 in a slot 1. It can be learned that the first time period and the second time period do not completely overlap. In other words, the first time period and the second time period partially overlap. A time period in which the first time period and the second time period overlap is a target time period, and includes 25 symbols, namely, the symbol 2 in the slot 0 to the symbol 12 in the slot 1. In the target time period, both the beam a and the beam b are configured for the relay device, and there is a configuration conflict. As described above, in this embodiment, target slots may be the intersection set of the slots occupied by the first time period and the slots occupied by the second time period, for example, the slot 0 and the slot 1 in the figure; or the target time period may be the union set of the slots occupied by the first time period and the slots occupied by the second time period, for example, the slot 0 to the slot S-1 in the figure. Unless otherwise specified, the following uses an example in which the target slots are the intersection set of the slots occupied by the first time period and the slots occupied by the second time period. That is, the target slots are the slot 0 and the slot 1.

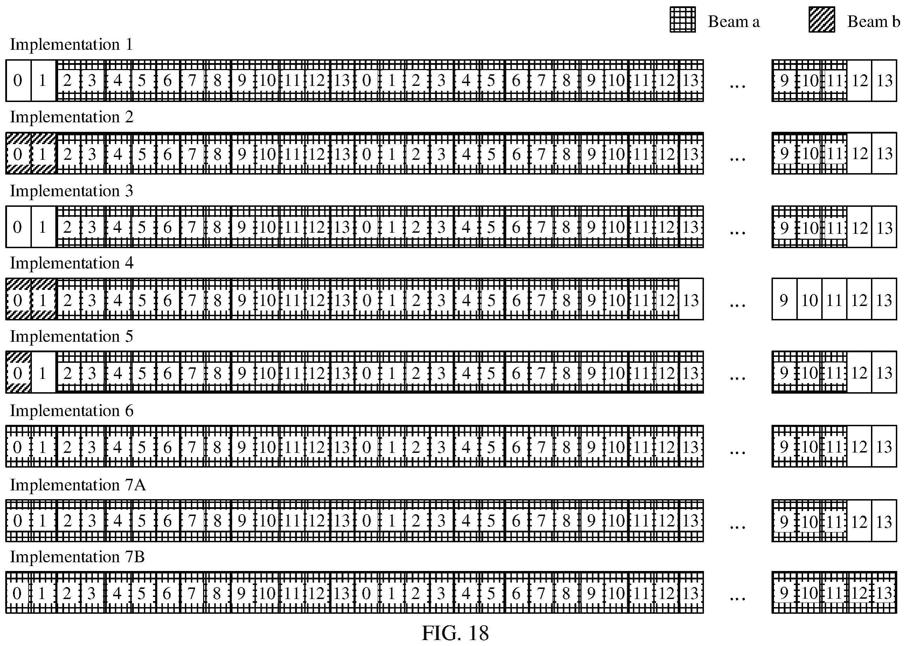

In this embodiment, assuming that the priority of the first configuration information is higher than the priority of the second configuration information, the relay device may perform step 620 to forward the received signal based on the first configuration information. As described above, there are a plurality of possible implementations when the relay device performs step 620. With reference to FIG. 18, the following describes a plurality of different implementations of step 620 for resolving the configuration conflict shown in FIG. 17.

FIG. 18 shows seven implementations in which the relay device performs signal forwarding based on the first configuration information.

In an implementation 1, the relay device forwards, to the terminal device based on the first configuration information in the first time period, the signal received from the network device, or forwards, to the network device based on the first configuration information in the first time period, the signal received from the terminal device; and skips performing signal forwarding on a symbol other than the first time period in the target slots.

In other words, in the target slots, the relay device performs signal forwarding based on the first configuration information, and ignores other received configuration information such as the second configuration information. In other words, in the target slots, a target device performs signal forwarding based only on the configuration information with the higher priority. In other words, the first configuration information conflicts with the second configuration information in the target slots, and the relay device performs signal forwarding based only on the first configuration information in the target slots. In other words, the relay device skips performing signal forwarding based on the second configuration information in the target slots.

In other words, in the target time period, the relay device performs signal forwarding based on the first configuration information, and ignores other received configuration information, that is, performs signal forwarding based on the configuration information with the higher priority in the target time period. It may alternatively be understood as follows: When the first forwarding resource conflicts with the second forwarding resource, the first forwarding resource with a higher priority is effective, and the second forwarding resource with a lower priority is ineffective.

As shown in the figure, the relay device performs signal forwarding by using the beam a on the symbol 2 in the slot 0 to a symbol 13 in the slot 1, skips performing signal forwarding on other symbols in the slot 0 and the slot 1 (for example, the symbol 0 and a symbol 1 in the slot 0), and performs signal forwarding by using the beam a on the symbol 0 in the slot 2 to the symbol 11 in the slot S-1. It may be understood that there is no configuration conflict in the slot 2 to the slot S-1. Therefore, the relay device may perform or skip performing signal forwarding based on the received configuration information according to a conventional technology, for example, in this embodiment, perform signal forwarding based on the received first configuration information. For brevity, in related descriptions of other implementations below, for operations performed by the relay device in the slot 2 to the slot S-1, refer to the descriptions herein. Details are not described again.

In the implementation 1, the relay device only needs to perform processing based on the configuration information with the higher priority in the slots in which the first configuration information conflicts with the second configuration information. In this way, it can be ensured that the forwarding parameter configured by using the configuration information with the higher priority can be used. In addition, the relay device does not need to perform processing such as beam switching and power adjustment in the effective time period of the parameter configured by using the first configuration information, and implementation is simple.

In an implementation 2, the relay device forwards, to the terminal device based on the first configuration information in the target time period, the signal received from the network device, or forwards, to the network device based on the first configuration information in the target time period, the signal received from the terminal device; and performs or skips performing signal forwarding based on the received configuration information on a symbol other than the target time period in the target slots.

In other words, the relay device performs signal forwarding based on the first configuration information in the target time period, and the relay device performs processing based on the received configuration information on the symbol other than the target time period in the target slots. For example, if another forwarding parameter is configured on the another symbol, to control the relay device to perform signal forwarding, the another forwarding parameter is a performing basis. If the forwarding disabled or no other forwarding parameters are configured on the another symbol, the relay device skips performing signal forwarding. In other words, the first configuration information conflicts with the second configuration information in the target time period, and the relay device performs signal forwarding based only on the first configuration information in the target time period. In other words, the relay device skips performing signal forwarding based on the second configuration information in the target time period. Because the target time period is the time period in which the first time period and the second time period overlap, performing signal forwarding based on the first configuration information in the target time period and performing signal forwarding based on the received configuration information on the symbol other than the target time period in the target slots are performing signal forwarding based on the first configuration information in the first time period.

In other words, the relay device performs signal forwarding based on the configuration information (for example, the first configuration information) with the higher priority only in the target time period, that is, only on a symbol on which the configuration conflict occurs, and ignores the configuration information (for example, the second configuration information) with the lower priority. In other words, the configuration information with the higher priority is effective on the symbol on which the configuration conflict occurs, but the configuration information with the lower priority is ineffective on the symbol on which the configuration conflict occurs, and is effective on a symbol on which no conflict occurs.

As shown in the figure, the relay device performs signal forwarding by using the beam a on the symbol 2 in the slot 0 to the symbol 13 in the slot 1, performs signal forwarding by using the beam b on the symbol 0 and the symbol 1 in the slot 0, and performs signal forwarding by using the beam a on the symbol 0 in the slot 2 to the symbol 11 in the slot S-1.

In the implementation 2, the relay device performs processing based on the configuration information with the higher priority in the target time period in which the configuration conflict occurs, and may still perform processing based on the received configuration information in another time period in which no conflict occurs. Therefore, a time domain resource can be fully used, to help improve resource utilization.

In an implementation 3, the relay device forwards, to the terminal device based on the first configuration information in the target time period, the signal received from the network device, or forwards, to the network device based on the first configuration information in the target time period, the signal received from the terminal device; skips performing signal forwarding on another symbol that is in the target slots and that is before the target time period; and performs or skips performing signal forwarding based on the received configuration information on another symbol that is in the target slots and that is after the target time period.

In other words, the relay device performs signal forwarding based on the first configuration information in the target time period, the relay device skips performing signal forwarding on the another symbol that is in the target slots and that is before the target time period, and the relay device performs processing based on the received configuration information on the symbol other than the target time period and the symbol before the target time period in the target slots. For example, if another forwarding parameter is configured on these symbols, to control the relay device to perform signal forwarding, the another forwarding parameter is a performing basis. If the forwarding disabled or no other forwarding parameters are configured on these symbols, the relay device skips performing signal forwarding. In other words, if the first configuration information conflicts with the second configuration information in the target time period, the relay device performs signal forwarding based only on the first configuration information in the target time period and on the another symbol that is in the target slots and that is before the target time period, and ignores the second configuration information, in other words, skips performing signal forwarding based on the second configuration information.

As shown in the figure, the relay device performs signal forwarding by using the beam a on the symbol 2 in the slot 0 to a symbol 13 in the slot 2, skips performing signal forwarding on the symbol 0 and the symbol 1 in the slot 0, and performs signal forwarding by using the beam a on the symbol 0 in the slot 2 to the symbol 11 in the slot S-1.

In an implementation 4, the relay device forwards, to the terminal device based on the first configuration information in the target time period, the signal received from the network device, or forwards, to the network device based on the first configuration information in the target time period, the signal received from the terminal device; skips performing signal forwarding on the another symbol that is in the target slots and that is after the target time period; and performs or skips performing signal forwarding based on the received configuration information on the another symbol that is in the target slots and that is before the target time period.

A processing manner in the implementation 3 is similar to that in the implementation 4, and a difference lies in that processing manners on the another time domain symbol before the target time period and the another symbol after the target time period are exactly opposite. Refer to the foregoing descriptions for understanding. Details are not described again.

In other words, if the first configuration information conflicts with the second configuration information in the target time period, the relay device performs signal forwarding based only on the first configuration information in the target time period and on the another symbol that is in the target slots and that is after the target time period, in other words, skips performing signal forwarding based on the second configuration information.

As shown in the figure, the relay device performs signal forwarding by using the beam a on the symbol 2 in the slot 0 to the symbol 13 in the slot 2, performs signal forwarding by using the beam b on the symbol 0 and the symbol 1 in the slot 0, and performs signal forwarding by using the beam a on a symbol 0 in a slot 3 to the symbol 11 in the slot S-1.

In an implementation 5, the relay device forwards, to the terminal device based on the first configuration information in the target time period, the signal received from the network device, or forwards, to the network device based on the first configuration information in the target time period, the signal received from the terminal device; skips performing signal forwarding in a reserved time period; and performs or skips performing signal forwarding based on the received configuration information on a symbol other than the target time period and the reserved time period in the target slots.

For descriptions of the reserved time period, refer to the foregoing descriptions. Details are not described again. In this embodiment, it is assumed that the reserved time period includes one symbol before the target time period.

As shown in the figure, the relay device performs signal forwarding by using the beam a on the symbol 2 in the slot 0 to the symbol 13 in the slot 2, skips performing signal forwarding on the symbol 1 in the slot 0, performs signal forwarding by using the beam b on the symbol 0 in the slot 0, and performs signal forwarding by using the beam a on the symbol 0 in the slot 2 to the symbol 11 in the slot S-1.

In the implementation 5, because the processing delay of the relay device is considered, impact of the processing such as beam switching and power adjustment on data transmission of the relay device can be avoided.

In an implementation 6, the relay device forwards, to the terminal device based on the first configuration information in the first time period and the second time period, the signal received from the network device, or forwards, to the network device based on the first configuration information in the first time period and the second time period, the signal received from the terminal device; and skips performing signal forwarding on a symbol other than the first time period and the second time period in the target slots.

In other words, the relay device may perform signal forwarding on a scheduled time domain resource, but a forwarding parameter based on which signal forwarding is performed may be the first forwarding parameter in the first configuration information with the higher priority, and the second forwarding parameter in the second configuration information is not considered.

As shown in the figure, resources of the relay device in the two target slots, namely, the symbol 0 in the slot 0 to the symbol 13 in the slot 1, are scheduled for the relay device to perform signal forwarding. The relay device may perform signal forwarding by using the beam a based on the first configuration information in the two target slots, namely, the slot 0 and the slot 1, and may still perform signal forwarding by using the beam a on the symbol 0 in the slot 2 to the symbol 11 in the slot S-1.

In the implementation 6, the relay device may repeatedly use the scheduled resource to perform signal forwarding, and may also perform processing based on the configuration information with the higher priority. The time domain resource can be fully used, to help improve the resource utilization. In addition, impact of forwarding on an unscheduled resource on communication between other devices can be avoided.

In an implementation 7, the relay device forwards, to the terminal device based on the first configuration information in the target slots, the signal received from the network device, or forwards, to the network device based on the first configuration information in the target slots, the signal received from the terminal device.

In other words, a granularity at which the relay device performs signal forwarding based on the first configuration information is changed from a symbol granularity in the foregoing implementations 1 to 6 to a slot granularity. In the entire target slots, the relay device may perform signal forwarding based on the first configuration information. In other words, if the first configuration information conflicts with the second configuration information in the target slots, the relay device performs signal forwarding based only on the first configuration information on all symbols in the target slots.

As described above, in this embodiment, the target slots may be the slots which the target time period is in, or may be the slots including the first time period and the second time period. Therefore, in the implementation 6, based on different definitions of the target slots, operations of the relay device are different. For details, refer to an implementation 7A and an implementation 7B in the figure.

As shown in the figure, in the implementation 7A, the relay device performs signal forwarding by using the beam a based on the first configuration information in both of the two target slots, namely, the slot 0 and the slot 1, and still performs signal forwarding by using the beam a on the symbol 0 in the slot 3 to the symbol 11 in the slot S-1. In the implementation 7B, the relay device performs signal forwarding by using the beam a based on the first configuration information in all of the slot 0 to the slot S-1.

It may be understood that the target slots represent the slots in which the configuration conflict occurs, and may also be referred to as conflicting slots for short. Therefore, the implementation 7 may alternatively be understood as that the relay device performs signal forwarding based on the configuration information (for example, the first configuration information) with the higher priority in the conflicting slots, and ignores the configuration information (for example, the second configuration information) with the lower priority. In other words, the configuration information with the higher priority is effective in the conflicting slots, but the configuration information with the lower priority is ineffective in the conflicting slots.

In the implementation 7, in the slots in which the first configuration information conflicts with the second configuration information, the relay device does not need to consider a specific conflicting location, and may perform processing based on the configuration information with the higher priority in the entire slots. The relay device does not need to perform processing such as beam switching and power adjustment, and implementation is simple. In addition, the time domain resource can be fully used, to help improve the resource utilization.

FIG. 17 shows a case in which the first time period and the second time period partially overlap. In some cases, the first time period and the second time period may completely overlap, or may not overlap at all, but there is distribution of at least some symbols in the first time period and distribution of at least some symbols in the second time period in a same slot.

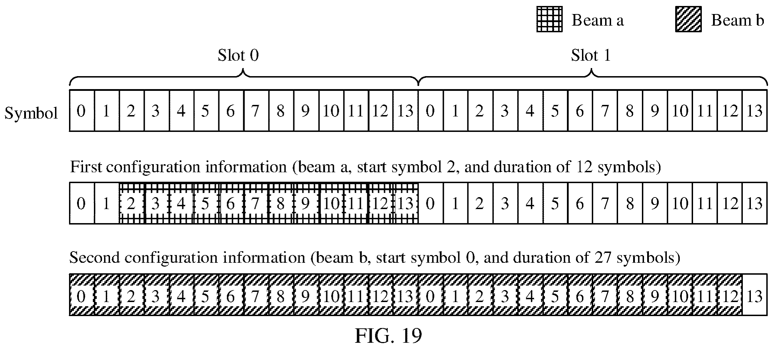

FIG. 19 shows another example of a conflict between the first configuration information and the second configuration information. In the figure, the first configuration information is for configuring a beam a, and an effective time period of the beam a is as follows: A start effective location is a symbol 2 in a slot 0, and duration is 12 symbols. The second configuration information is for configuring a beam b, and an effective time period of the beam b is as follows: A start effective location is a symbol 0 in the slot 0, and duration is 27 symbols. It can be learned that the first time period and the second time period completely overlap. In other words, the first time period is completely covered by the second time period. A time period in which the first time period and the second time period overlap is a target time period, and includes 12 symbols, namely, 12 symbols in the first time period. In the target time period, both the beam a and the beam b are configured for the relay device, and there is a configuration conflict. Based on different definitions of a target slot, the target slot may be one slot, namely, the slot 0, or may be two slots, namely, the slot 0 and a slot 1. Unless otherwise specified, the following uses an example in which the target slot is the intersection set of the slots occupied by the first time period and the slots occupied by the second time period. That is, the target slot is the slot 0.

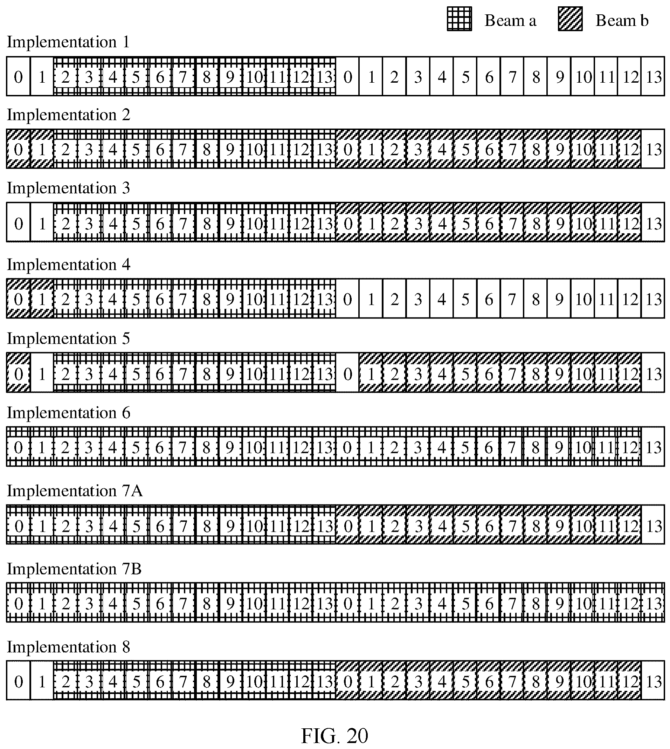

In this embodiment, it is assumed that the priority of the first configuration information is higher than the priority of the second configuration information. Therefore, the relay device may perform step 620 to forward the received signal based on the first configuration information. Similar to the foregoing descriptions, the relay device may perform step 620 in one of a plurality of manners. With reference to FIG. 20, the following describes a plurality of different implementations of step 620 for resolving the configuration conflict shown in FIG. 19.

FIG. 20 shows eight implementations in which the relay device performs signal forwarding based on the first configuration information.

In an implementation 1, the relay device forwards, to the terminal device based on the first configuration information in the first time period (in other words, the target time period), the signal received from the network device, or forwards, to the network device based on the first configuration information in the first time period (in other words, the target time period), the signal received from the terminal device; and skips performing signal forwarding on a symbol other than the first time period in the target slot.

As shown in the figure, the relay device performs signal forwarding by using the beam a on the symbol 2 in the slot 0 to a symbol 13 in the slot 0, and skips performing signal forwarding on other symbols in the slot 0 and the slot 1 (for example, the symbol 0 and a symbol 1 in the slot 0 and a symbol 0 to a symbol 13 in the slot 1).

In an implementation 2, the relay device forwards, to the terminal device based on the first configuration information in the first time period, the signal received from the network device, or forwards, to the network device based on the first configuration information in the first time period, the signal received from the terminal device; and performs or skips performing signal forwarding based on the received configuration information on a symbol other than the first time period in the target slot.

As shown in the figure, the relay device performs signal forwarding by using the beam a on the symbol 2 in the slot 0 to the symbol 13 in the slot 0, performs signal forwarding by using the beam b on the symbol 0 and the symbol 1 in the slot 0 and on the symbol 0 to the symbol 12 in the slot 1, and skips performing signal forwarding on the symbol 13 in the slot 1 because no forwarding parameter is configured.

In an implementation 3, the relay device forwards, to the terminal device based on the first configuration information in the first time period, the signal received from the network device, or forwards, to the network device based on the first configuration information in the first time period, the signal received from the terminal device; skips performing signal forwarding on another symbol that is in the target slot and that is before the first time period; and performs or skips performing signal forwarding based on the received configuration information on another symbol that is in the target slot and that is after the first time period.

As shown in the figure, the relay device performs signal forwarding by using the beam a on the symbol 2 in the slot 0 to the symbol 13 in the slot 0, skips performing signal forwarding on the symbol 0 and the symbol 1 in the slot 0, performs signal forwarding by using the beam b on the symbol 0 to the symbol 12 in the slot 1, and skips performing signal forwarding on the symbol 13 in the slot 1 because no forwarding parameter is configured.

In an implementation 4, the relay device forwards, to the terminal device based on the first configuration information in the first time period, the signal received from the network device, or forwards, to the network device based on the first configuration information in the first time period, the signal received from the terminal device; skips performing signal forwarding on the another symbol that is in the target slot and that is after the first time period; and performs or skips performing signal forwarding based on the received configuration information on the another symbol that is in the target slot and that is before the first time period.

As shown in the figure, the relay device performs signal forwarding by using the beam a on the symbol 2 in the slot 0 to the symbol 13 in the slot 0, performs signal forwarding by using the beam b on the symbol 0 and the symbol 1 in the slot 0, and skips performing signal forwarding on the symbol 10 to the symbol 13 in the slot 1.

In an implementation 5, the relay device forwards, to the terminal device based on the first configuration information in the first time period, the signal received from the network device, or forwards, to the network device based on the first configuration information in the first time period, the signal received from the terminal device; skips performing signal forwarding in a reserved time period; and performs or skips performing signal forwarding based on the received configuration information on a symbol other than the target time period and the reserved time period in the target slot.

For descriptions of the reserved time period, refer to the foregoing descriptions. Details are not described again. In this embodiment, it is assumed that the reserved time period includes one symbol before the target time period and one symbol after the target time period.

As shown in the figure, the relay device performs signal forwarding by using the beam a on the symbol 2 in the slot 0 to the symbol 13 in the slot 0, performs signal forwarding by using the beam b on the symbol 0 in the slot 0 and the symbol 1 to the symbol 12 in the slot 1, and skips performing signal forwarding on the symbol 13 in the slot 1 because no forwarding parameter is configured. The symbol 1 in the slot 0 and the symbol 0 in the slot 1 are the reserved time period, and the relay device skips performing signal forwarding on the two symbols.

In an implementation 6, the relay device forwards, to the terminal device based on the first configuration information in the first time period and the second time period, the signal received from the network device, or forwards, to the network device based on the first configuration information in the first time period and the second time period, the signal received from the terminal device; and skips performing signal forwarding on a symbol other than the first time period and the second time period in the target slot.

As shown in the figure, the relay device performs signal forwarding by using the beam a on the symbol 0 in the slot 0 to the symbol 12 in the slot 1, and skips performing signal forwarding on the symbol 13 in the slot 1.

In an implementation 7, the relay device forwards, to the terminal device based on the first configuration information in the target slot, the signal received from the network device, or forwards, to the network device based on the first configuration information in the target slot, the signal received from the terminal device.

As shown in the figure, based on different definitions of the target slot, in an implementation 7A, the relay device performs signal forwarding by using the beam a based on the first configuration information in the target slot, namely, the slot 0. In an implementation 7B, the relay device performs signal forwarding by using the beam a based on the first configuration information in both of the two target slots, namely, the slot 0 and the slot 1.

For more detailed descriptions of the implementations 1 to 7, refer to the foregoing descriptions with reference to FIG. 18. For brevity, details are not described herein again.

In this example, because the first time period exists in the target slot, and the second time period exists in the target slot and another slot, this application provides an implementation 8 as follows:

In the implementation 8, the relay device forwards, to the terminal device based on the first configuration information in the first time period, the signal received from the network device, or forwards, to the network device based on the first configuration information in the first time period, the signal received from the terminal device; and forwards, to the terminal device based on the second configuration information on a symbol other than the target slot in the second time period, the signal received from the network device, or forwards, to the network device based on the second configuration information on a symbol other than the target slot in the second time period, the signal received from the terminal device.

In other words, in the slot in which there is a configuration conflict, the relay device may ignore the second configuration information with the lower priority, and perform signal forwarding based on the first configuration information in the first time period. In a slot in which there is no configuration conflict, the relay device may perform signal forwarding based on other received configuration information. In other words, when the first forwarding resource conflicts with the second forwarding resource, the configuration information with the lower priority is effective in a slot in which an effective time period of the configuration information with the lower priority is not covered; or the configuration information with the lower priority is ineffective in a slot in which the effective time period of the configuration information with the lower priority is covered.

It should be noted that, in the implementation 8, the target slot should be defined as the slot which the first time period and the second time period are jointly in, instead of the slot including the first time period and the second time period.

As shown in the figure, the relay device performs signal forwarding by using the beam a on the symbol 2 in the slot 0 to the symbol 13 in the slot 0, skips performing signal forwarding on the symbol 0 and the symbol 1 in the slot 0, performs signal forwarding by using the beam b on the symbol 0 to the symbol 12 in the slot 1, and skips performing signal forwarding on the symbol 0 and the symbol 1 in the slot 0 and the symbol 13 in the slot 1 because no forwarding parameter is configured.

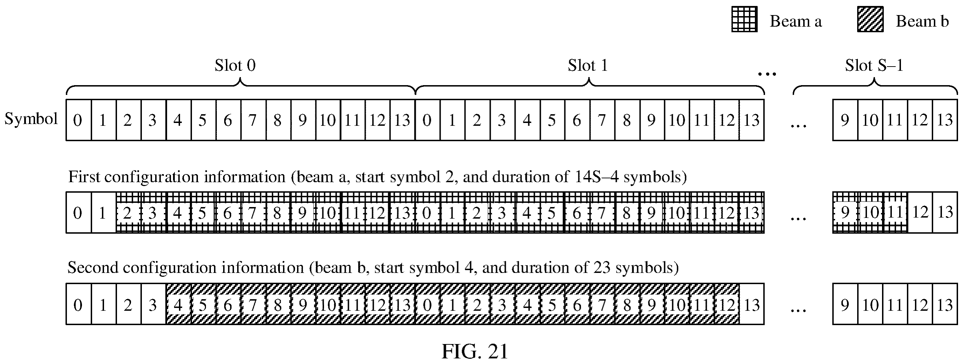

FIG. 21 shows still another example of a conflict between the first configuration information and the second configuration information. In the figure, the first configuration information is for configuring a beam a, and an effective time period of the beam a is as follows: A start effective location is a symbol 2 in a slot 0, and duration is 14S-4 symbols, where S is a quantity of slots, and S is a positive integer. In the example in FIG. 21, S is an integer greater than or equal to 2. The second configuration information is for configuring a beam b, and an effective time period of the beam b is as follows: A start effective location is a symbol 4 in the slot 0, and duration is 23 symbols. It can be learned that the first time period and the second time period completely overlap. In other words, the second time period is completely covered by the first time period. A time period in which the first time period and the second time period overlap is a target time period, and includes 23 symbols, namely, 23 symbols in the second time period. In the target time period, both the beam a and the beam b are configured for the relay device, and there is a configuration conflict. In this embodiment, based on the foregoing definition of the target slot, it may be learned that target slots in this example are a total of two slots: the slot 0 and a slot 1.

In this embodiment, it is assumed that the priority of the first configuration information is higher than the priority of the second configuration information. Therefore, the relay device may perform step 620 to forward the received signal based on the first configuration information. Similar to the foregoing descriptions, the relay device may perform step 620 in one of a plurality of manners.

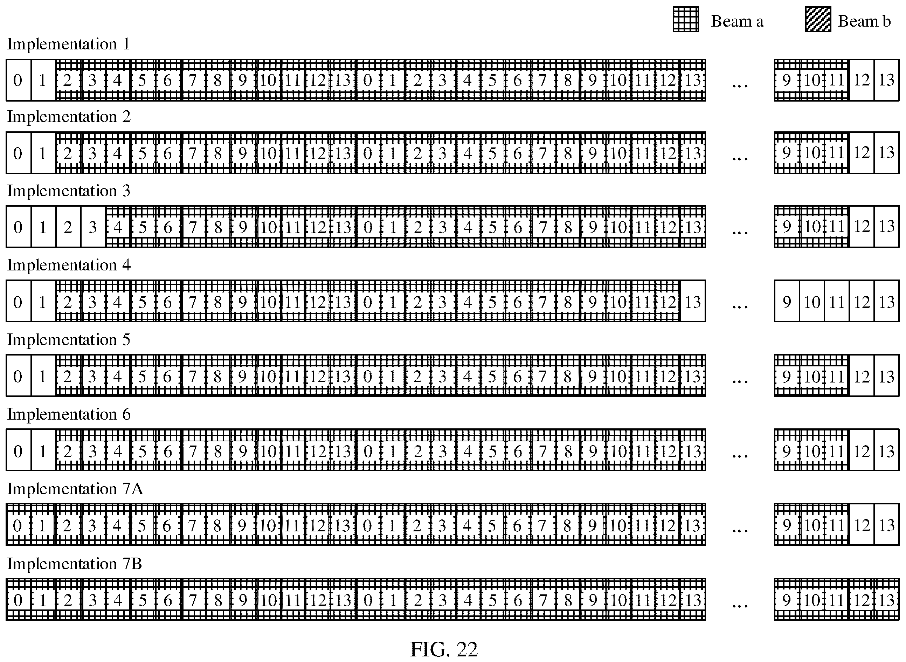

With reference to FIG. 22, the following describes a plurality of different implementations of step 620 for resolving the configuration conflict shown in FIG. 21. Because the plurality of implementations have been repeatedly described above, the following provides descriptions with reference to specific examples, and the plurality of implementations are not described again.

In an implementation 1, the relay device performs signal forwarding by using the beam a based on the first configuration information on the symbol 2 in the slot 0 to a symbol 11 in a slot S-1 (namely, the first time period), and skips performing signal forwarding on other symbols in the slot 0 to the slot S-1 (for example, a symbol 0 and a symbol 1 in the slot 0 and a symbol 12 and a symbol 13 in the slot S-1).

In an implementation 2, the relay device performs signal forwarding by using the beam a based on the first configuration information on the symbol 4 in the slot 0 to a symbol 12 in the slot 1 (namely, the target time period), still performs signal forwarding by using the beam a based on the first configuration information on the symbol 2 and the symbol 3 in the slot 0, a symbol 13 in the slot 1, and the slot 2 to the symbol 11 in the slot S-1, and skips performing signal forwarding on the symbol 0 and the symbol 1 in the slot 0 and the symbol 12 and the symbol 13 in the slot S-1 because no forwarding parameter is configured.

In an implementation 3, the relay device performs signal forwarding by using the beam a based on the first configuration information on the symbol 4 in the slot 0 to the symbol 12 in the slot 1, still performs signal forwarding by using the beam a based on the first configuration information on the symbol 13 in the slot 1 and the slot 2 to the symbol 11 in the slot S-1, and skips performing signal forwarding on the symbol 0 to the symbol 4 in the slot 0 and the symbol 12 and the symbol 13 in the slot S-1.

In an implementation 4, the relay device performs signal forwarding by using the beam a based on the first configuration information on the symbol 4 in the slot 0 to the symbol 12 in the slot 1, still performs signal forwarding by using the beam a based on the first configuration information on the symbol 2 and the symbol 3 in the slot 0, and skips performing signal forwarding on the symbol 0 and the symbol 1 in the slot 0 and the symbol 13 in the slot 1, and in the slot 2 to the slot S-1.

In an implementation 5, the relay device performs signal forwarding by using the beam a based on the first configuration information on the symbol 4 in the slot 0 to the symbol 12 in the slot 1. In this example, because the first time period includes the target time period, the relay device may still perform signal forwarding by using the beam a on the symbol 2 and the symbol 3 in the slot 0, the symbol 13 in the slot 1, and the slot 2 to the symbol 11 in the slot S-1, and does not need to perform beam switching. Therefore, forwarding does not need to be disabled in a reserved time period.

In an implementation 6, the relay device performs signal forwarding by using the beam a based on the first configuration information on the symbol 2 in the slot 0 to the symbol 12 in the slot S-1 (namely, the first time period and the second time period), and skips performing signal forwarding on the symbol 0 and the symbol 1 in the slot 0 and the symbol 12 and the symbol 13 in the slot S-1 because no forwarding parameter is configured.

In an implementation 7A, the relay device performs signal forwarding by using the beam a based on the first configuration information in the slot 0 and the slot 1 (that is, an example of the target slots), still performs signal forwarding by using the beam a based on the first configuration information in the slot 2 to the symbol 11 in the slot S-1, and skips performing signal forwarding on the symbol 12 and the symbol 13 in the slot S-1 because no forwarding parameter is configured. In an implementation 7B, the relay device performs signal forwarding by using the beam a based on the first configuration information in the slot 0 to the slot S-1 (that is, another example of the target slots).

For more detailed descriptions of the implementations 1 to 7, refer to the foregoing descriptions with reference to FIG. 18. For brevity, details are not described herein again.

In addition, in this embodiment, the first time period includes the target time period, and the priority of the first configuration information is higher than the priority of the second configuration information. Therefore, the target time period in the foregoing implementations may alternatively be replaced with the first time period. In this case, operations performed by the relay device may also be different based on different implementations. For brevity, details are not enumerated one by one herein again.

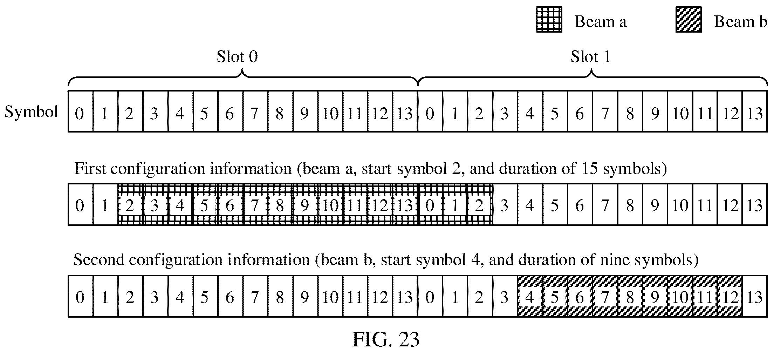

FIG. 23 shows still another example of a conflict between the first configuration information and the second configuration information. In the figure, the first configuration information is for configuring a beam a, and an effective time period of the beam a is as follows: A start effective location is a symbol 2 in a slot 0, and duration is 15 symbols. The second configuration information is for configuring a beam b, and an effective time period of the beam b is as follows: A start effective location is a symbol 4 in a slot 1, and duration is nine symbols. It can be learned that the first time period and the second time period do not overlap, but some time domain resources in the first time period are in a same slot (namely, the slot 1) as the second time period. Because the relay device does not expect to perform beam switching in the same slot, there is a configuration conflict between the first configuration information and the second configuration information in the slot 1. As described above, the target slot is intended to represent the slot in which the configuration conflict occurs. In this example, the configuration conflict occurs in the slot 1, and the slot 1 may be determined as the target slot. Similarly, there is also a similar configuration conflict in the slot shown in FIG. 7. The slot shown in FIG. 7 is also an example of the target slot. Alternatively, in another definition, the target slot may be the slot including the first time period and the second time period. Therefore, the slot 0 and the slot 1 may be determined as target slots. Unless otherwise specified, the following uses an example in which the target slot is the intersection set of the slots occupied by the first time period and the slot occupied by the second time period. That is, the target slot is the slot 1.

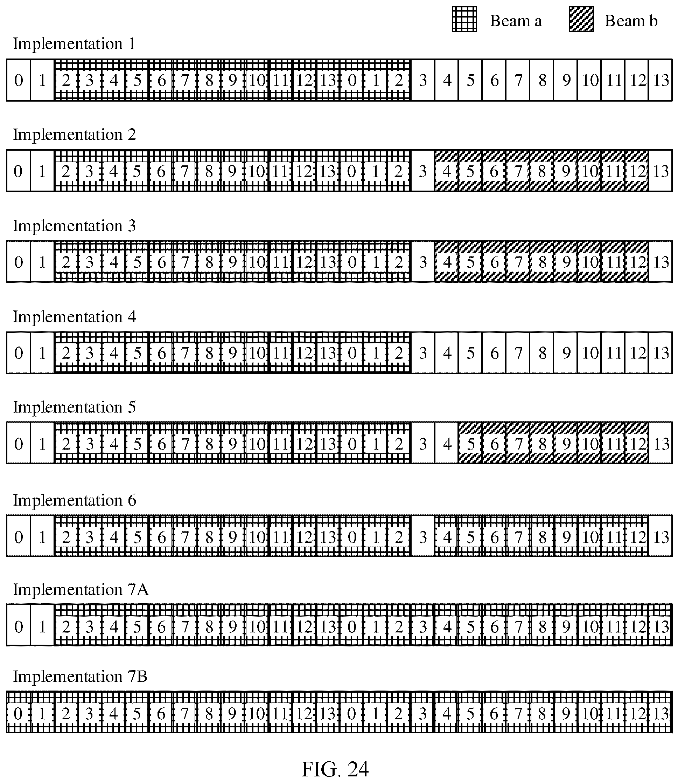

In this embodiment, it is assumed that the priority of the first configuration information is higher than the priority of the second configuration information. Therefore, the relay device may perform step 620 to forward the received signal based on the first configuration information. Similar to the foregoing descriptions, the relay device may perform step 620 in one of a plurality of manners. With reference to FIG. 24, the following describes a plurality of different implementations of step 620 for resolving the configuration conflict shown in FIG. 23.

In an implementation 1, the relay device forwards, to the terminal device based on the first configuration information in the first time period, the signal received from the network device, or forwards, to the network device based on the first configuration information in the first time period, the signal received from the terminal device; and skips performing signal forwarding on a symbol other than the first time period in the target slot.

As shown in the figure, the relay device performs signal forwarding by using the beam a on a symbol 2 in the slot 0 to the symbol 2 in the slot 1, and skips performing signal forwarding on other symbols in the slot 0 and the slot 1 (for example, a symbol 0 and a symbol 1 in the slot 0 and a symbol 3 to a symbol 13 in the slot).

In an implementation 2, the relay device forwards, to the terminal device based on the first configuration information in the first time period, the signal received from the network device, or forwards, to the network device based on the first configuration information in the first time period, the signal received from the terminal device; and performs or skips performing signal forwarding based on the received configuration information on a symbol other than the first time period in the target slot.

As shown in the figure, the relay device performs signal forwarding by using the beam a on the symbol 2 in the slot 0 to the symbol 2 in the slot 1, performs signal forwarding by using the beam b on the symbol 4 to the symbol 12 in the slot 1, and skips performing signal forwarding on other symbols in the slot 0 and the slot 1 (for example, the symbol 0 and the symbol 1 in the slot 0 and the symbol 3 and the symbol 13 in the slot 1).

In an implementation 3, the relay device forwards, to the terminal device based on the first configuration information in the first time period, the signal received from the network device, or forwards, to the network device based on the first configuration information in the first time period, the signal received from the terminal device; skips performing signal forwarding on another symbol that is in the target slot and that is before the first time period; and performs or skips performing signal forwarding based on the received configuration information on another symbol that is in the target slot and that is after the first time period.

As shown in the figure, the relay device performs signal forwarding by using the beam a on the symbol 2 in the slot 0 to the symbol 2 in the slot 1, performs signal forwarding by using the beam b on the symbol 4 to the symbol 12 in the slot 1, and skips performing signal forwarding on other symbols in the slot 0 and the slot 1 (for example, the symbol 0 and the symbol 1 in the slot 0 and the symbol 3 and the symbol 13 in the slot 1).

In an implementation 4, the relay device forwards, to the terminal device based on the first configuration information in the first time period, the signal received from the network device, or forwards, to the network device based on the first configuration information in the first time period, the signal received from the terminal device; skips performing signal forwarding on the another symbol that is in the target slot and that is after the first time period; and performs or skips performing signal forwarding based on the received configuration information on the another symbol that is in the target slot and that is before the first time period.

As shown in the figure, the relay device performs signal forwarding by using the beam a on a symbol 2 in the slot 0 to the symbol 2 in the slot 1, and skips performing signal forwarding on other symbols in the slot 0 and the slot 1 (for example, a symbol 0 and a symbol 1 in the slot 0 and a symbol 3 to a symbol 13 in the slot 1).

In an implementation 5, the relay device forwards, to the terminal device based on the first configuration information in the first time period, the signal received from the network device, or forwards, to the network device based on the first configuration information in the first time period, the signal received from the terminal device; skips performing signal forwarding in a reserved time period; and performs or skips performing signal forwarding based on the received configuration information on a symbol other than the first time period and the reserved time period in the target slot.

In this embodiment, because the first time period and the second time period do not overlap, the reserved time period may be defined as one or more symbols before and/or after the effective time period of the configuration information with the higher priority. Herein, it is assumed that the reserved time period includes two symbols before the first time period and two symbols after the first time period.

As shown in the figure, the relay device performs signal forwarding by using the beam a on the symbol 2 in the slot 0 to the symbol 2 in the slot 1, performs signal forwarding by using the beam b on the symbol 5 to the symbol 12 in the slot 1, and skips performing signal forwarding on other symbols in the slot 0 and the slot 1 (for example, the symbol 0 and the symbol 1 in the slot 0 and the symbol 3, the symbol 4, and the symbol 13 in the slot 1).

In an implementation 6, the relay device forwards, to the terminal device based on the first configuration information in the first time period and the second time period, the signal received from the network device, or forwards, to the network device based on the first configuration information in the first time period and the second time period, the signal received from the terminal device; and skips performing signal forwarding on a symbol other than the first time period and the second time period in the target slot.

As shown in the figure, the relay device performs signal forwarding by using the beam a on the symbol 2 in the slot 0 to the symbol 2 in the slot 1, performs signal forwarding by using the beam a on the symbol 4 to the symbol 12 in the slot 1, and skips performing signal forwarding on other symbols in the slot 0 and the slot 1 (for example, the symbol 0 and the symbol 1 in the slot 0 and the symbol 3 and the symbol 13 in the slot 1).

In an implementation 7, the relay device forwards, to the terminal device based on the first configuration information in the target slot, the signal received from the network device, or forwards, to the network device based on the first configuration information in the target slot, the signal received from the terminal device.

As shown in the figure, in an implementation 7A, the relay device performs signal forwarding by using the beam a on all symbols in the slot 1 (that is, an example of the target slot), still performs signal forwarding by using the beam a on the symbol 2 to the symbol 13 in the slot 0, and skips performing signal forwarding on the symbol 0 and the symbol 1 in the slot 0 because no forwarding parameter is configured. In an implementation 7B, the relay device performs signal forwarding by using the beam a on all symbols in the slot 0 and the slot 1 (that is, another example of the target slot).

With reference to a plurality of accompanying drawings, the foregoing describes in detail possible cases of a plurality of configuration conflicts and several possible implementations of resolving the conflict by the relay device. These implementations are merely examples. A person skilled in the art may simply change these implementations based on a same concept, to obtain more possible implementations. For example, the target time period is replaced with the effective time period (namely, the first time period) of the configuration information with the higher priority. For another example, a definition of the target time period may alternatively be replaced with a slot and/or a time domain symbol occupied by the first time period, or a slot and/or a time domain symbol occupied by the second time period.

In the foregoing plurality of implementations, the relay device may process the conflict between the configuration information based on one of the implementations. A specific implementation used by the relay device may be predefined in a protocol, may be preconfigured by the network device, or may be determined by the relay device. This is not limited in this application.

For example, the relay device may determine, based on the capability of the relay device, an indication of the network device, the type of the signal, a type of a resource, a priority of the resource, or another forwarding parameter, an implementation to be used to perform step 620. In this way, signals of different types, resources of different types, resources with different priorities, and the like may correspond to different implementations.

It should be understood that the foregoing examples of the conflict between the first configuration information and the second configuration information shown with reference to the plurality of accompanying drawings and the examples of the plurality of implementations of step 620 are merely provided for ease of understanding, and should not constitute any limitation on this application. For example, the foregoing describes various possible configuration conflicts and the plurality of possible implementations by using the beam as an example of the forwarding parameter. It may be understood that the beam may alternatively be replaced with another forwarding parameter, for example, the amplification gain. In addition, there may alternatively be a plurality of forwarding parameters on which a configuration conflict occurs. For example, the network device may configure one or more forwarding parameters by using the first signaling, and configure one or more forwarding parameters by using the second signaling. In this case, for each forwarding parameter, it may be separately determined whether a configuration conflict occurs on configuration information for configuring the forwarding parameter. If the configuration conflict occurs on the configuration information for configuring the forwarding parameter, the configuration conflict may be resolved based on one or more of the foregoing plurality of implementations.

In a possible case, the forwarding parameter configured in the first signaling is not completely the same as the forwarding parameter configured in the second signaling. For example, one forwarding parameter is configured in the first signaling. For example, a forwarding parameter A (for example, a beam) is configured by using configuration information #1. Two forwarding parameters are configured in the second signaling. For example, the forwarding parameter A is configured by using configuration information #2, and a forwarding parameter B (for example, an amplification gain) is configured by using configuration information #3. In this case, a specific configuration of the forwarding parameter A may be determined based on configuration information with a higher priority in the configuration information #1 and the configuration information #2, and a specific configuration of the forwarding parameter B may be determined based on the configuration information #3 in the second signaling. Because there is no configuration conflict on the forwarding parameter B, when the relay device uses one of the foregoing plurality of implementations, some forwarding parameters (for example, the forwarding parameter A) may be determined based on the configuration information with the higher priority, and some forwarding parameters (for example, the forwarding parameter B) may be determined based on the received configuration information.

The first signaling and the second signaling each may be for configuring a forwarding resource, for example, an RRC message, a MAC CE, or DCI. The forwarding resource configured by using the first signaling is denoted as the first forwarding resource. The first signaling includes the configuration information #1, and is for configuring a beam a. The first signaling may further include other configuration information, for example, configuration information for configuring an effective time period of the first forwarding resource (including the beam a), and configuration information for configuring a reference subcarrier spacing (for example, denoted as a first reference subcarrier spacing) of the forwarding resource. The forwarding resource configured by using the second signaling is denoted as the second forwarding resource. The second signaling includes the configuration information #2, and is for configuring a beam b. The second signaling may further include the configuration information #3, and is for configuring the amplification gain. The second signaling may further include other configuration information, for example, configuration information for configuring an effective time period of the second forwarding resource (including the beam b), and configuration information for configuring a reference subcarrier spacing (for example, denoted as a second reference subcarrier spacing) of the forwarding resource. It may be understood that the beam is a forwarding parameter in the forwarding resource, and an effective time period of the forwarding resource is an effective time period of the beam. The effective time period of the forwarding resource is a time domain resource in the forwarding resource, and configuration information for configuring the effective time period of the forwarding resource is configuration information for configuring the time domain resource in the forwarding resource.

In some cases, reference subcarrier spacings configured on different forwarding resources are different. Because a time domain symbol length is related to a size of a subcarrier spacing, time domain resources in different forwarding resources may be measured by using time domain symbols of different scales. For example, the first reference subcarrier spacing configured in the first forwarding resource is 120 kHz, and the second reference subcarrier spacing configured in the second forwarding resource is 60 kHz. Accordingly, a time domain symbol length corresponding to the second forwarding resource is twice a time domain symbol length corresponding to the first forwarding resource.

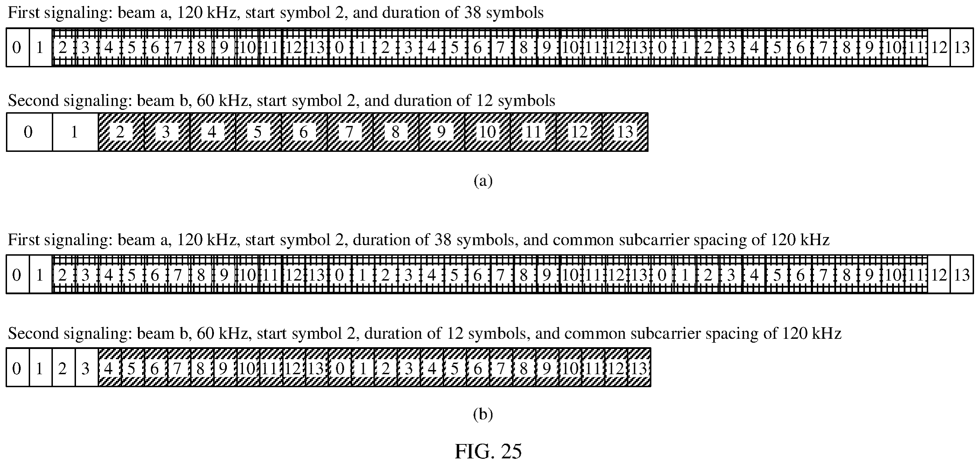

FIG. 25 shows an example in which first signaling and second signaling are respectively for configuring a first forwarding resource and a second forwarding resource. The configuration information in the first signaling may be for configuring the first forwarding resource as follows: the beam a, the reference subcarrier spacing of 120 kHz, a start symbol 2, and duration of 38 symbols. The configuration information in the second signaling may be for configuring the second forwarding resource as follows: the beam b, the reference subcarrier spacing of 60 kHz, a start symbol 2, and duration of 12 symbols.

Because the reference subcarrier spacing in the first forwarding resource is twice the reference subcarrier spacing in the second forwarding resource, the time domain symbol length corresponding to the second forwarding resource is twice the time domain symbol length corresponding to the first forwarding resource. A start effective time point of the beam b in the second forwarding resource is the symbol 2, but is aligned with a symbol 4 in the first forwarding resource. Although the effective duration of the beam b in the second forwarding resource is less than one slot, if a time domain symbol in the first forwarding resource is used as a reference, the effective duration has exceeded one slot.

In a possible processing manner, the relay device may determine, by using the reference subcarrier spacing configured in each piece of signaling, the effective time period of the forwarding resource configured in each piece of signaling, and/or the forwarding parameter (for example, a forwarding beam, an amplification gain, or disabled) in the effective time period. In this case, if the first forwarding resource conflicts with the second forwarding resource, the relay device may determine the first time period and the second time period based on the subcarrier spacing configured for the first forwarding resource and the second forwarding resource, to determine the target time period and/or the target slot, and resolve a conflict problem based on the plurality of possible implementations provided above.

It may be understood that, because different reference subcarrier spacings configured in different signaling may cause different time domain symbol lengths in different forwarding resources, the target time period and/or the target slot may be determined based on absolute locations and duration of the first time period and the second time period in time domain, as shown in (a) in FIG. 25. Therefore, the determined target time period and/or target slot may correspond to different symbol numbers and slot numbers in the first forwarding resource and the second forwarding resource. For example, for the first forwarding resource, the target time period includes a symbol 4 in a slot 0 to a symbol 13 in a slot 1; and for the second forwarding resource, the target time period includes a symbol 2 to the symbol 13 in the slot 0. Absolute locations and duration of the two target time period are consistent in time domain. Therefore, this does not affect implementation of the foregoing plurality of implementations by the relay device.

Time domain symbol lengths are determined by using respective subcarrier spacings of different forwarding resources. In some cases, excessively long duration of ineffective configuration information can be avoided. For example, if the priority of the second configuration information is higher than the priority of the first configuration information, the first configuration information is ineffective on some time domain symbols. If the subcarrier spacing configured for the first forwarding resource is greater than the subcarrier spacing configured for the second forwarding resource, the time domain symbol length (for example, denoted as a length 1) corresponding to the first forwarding resource is less than the time domain symbol length (for example, denoted as a length 2) corresponding to the second forwarding resource. Therefore, ineffective duration of the first configuration information is shorter based on the length 1 than the length 2.

In another possible processing manner, the relay device may determine, based on a common subcarrier spacing (common subcarrier spacing for short), effective time periods of different forwarding resources and/or forwarding parameters (for example, a forwarding beam, an amplification gain, or disabled) in the effective time periods. In other words, the relay device may determine a common time domain symbol length based on the common subcarrier spacing, to obtain a time domain symbol of a same scale. In other words, in this embodiment, a time domain symbol length in the first time period and a time domain symbol length in the second time period may be determined based on the common subcarrier spacing.

Optionally, the common subcarrier spacing is a reference subcarrier spacing configured in the signaling with the higher priority in the first signaling and the second signaling.

For example, if the priority of the first signaling is higher than the priority of the second signaling, the reference subcarrier spacing configured in the first signaling is used as the common subcarrier spacing. For example, in (b) in FIG. 25, the reference subcarrier spacing configured in the first signaling is 120 kHz. Therefore, the common subcarrier spacing is 120 kHz. Based on the common subcarrier spacing, a time domain resource (namely, the second time period) configured in the second signaling may be represented by using a time domain symbol corresponding to the common subcarrier spacing. The time domain resource shown in the figure may be obtained as follows: a start symbol 4 and duration of 24 symbols.

Optionally, the common subcarrier spacing is a reference subcarrier spacing corresponding to a forwarding resource with longer effective duration in the first forwarding resource and the second forwarding resource. That is, the common subcarrier spacing is a reference subcarrier spacing configured by using signaling that is in the first signaling and the second signaling and in which a forwarding resource has longer effective duration.

Herein, duration may be determined by comparing time domain resources respectively configured by using the two pieces of signaling. As shown in (b) in FIG. 25, duration of a time domain resource in the first forwarding resource is longer than duration of a time domain resource in the second forwarding resource. Therefore, the reference subcarrier spacing of 120 kHz configured in the first signaling may be used as the common subcarrier spacing.

Optionally, the common subcarrier spacing is a reference subcarrier spacing corresponding to a forwarding resource with an earlier start effective time point in the first forwarding resource and the second forwarding resource.

Start effective time points may also be determined by comparing time domain resources respectively configured by using the two pieces of signaling. As shown in (b) in FIG. 25, a start effective time point of the first forwarding resource is earlier than a start effective time point of the second forwarding resource. Therefore, the reference subcarrier spacing of 120 kHz configured in the first signaling may be used as the common subcarrier spacing.

Optionally, the common subcarrier spacing is a reference subcarrier spacing corresponding to a forwarding resource with a later start effective time point in the first forwarding resource and the second forwarding resource.

As shown in (b) in FIG. 25, a start effective time point of the second forwarding resource is later than a start effective time point of the first forwarding resource. Therefore, the reference subcarrier spacing of 60 kHz configured in the second signaling may be used as the common subcarrier spacing.

Optionally, the common subcarrier spacing is a subcarrier spacing preconfigured by the network device.

The network device may preconfigure the common subcarrier spacing by using signaling. The common subcarrier spacing may be a value the same as the reference subcarrier spacing configured by using the first signaling or the second signaling, or may be a value different from the reference subcarrier spacing configured by using the first signaling and the second signaling. This is not limited in this application.

Optionally, the common subcarrier spacing is a larger one of the first reference subcarrier spacing configured by using the first signaling and the second reference subcarrier spacing configured by using the second signaling.

It may be understood that a larger subcarrier spacing indicates a smaller time domain symbol length. Therefore, selecting the larger one of the reference subcarrier spacings as the common subcarrier spacing means measuring time domain resources in different forwarding resources by using a time domain symbol with a smaller length as a unified scale.

It should be understood that the foregoing enumerated possible designs of the plurality of common subcarrier spacings are merely examples, and should not constitute any limitation on this application. For example, the common subcarrier spacing may alternatively be a value predefined in a protocol.

The time domain resources in different forwarding resources are measured by using the unified scale, so that the relay device can determine time domain resources on which there is a forwarding parameter configuration conflict between for different forwarding resources, and further the configuration conflict is resolved by using the method provided above.

Based on the foregoing solution, it can be learned that, if the first configuration information conflicts with the second configuration information, the relay device performs processing based on the configuration information with the higher priority in the first configuration information and the second configuration information. In this way, the relay device can normally perform signal forwarding without being affected by the configuration conflict, so that strong support is provided for wireless communication between the network device and the terminal device that have a long distance, to help improve the transmission performance. In addition, this application further standardizes, in terms of a time granularity, the plurality of processing manners used by the relay device based on the configuration information with the higher priority. This helps the network device design the configuration information with higher flexibility and control the forwarding behavior of the relay device, thereby helping improve the system performance.

It should be understood that, in the embodiment provided above, the processing method of the relay device is described by using an example in which the first configuration information conflicts with the second configuration information. Actually, the method does not limit a quantity of pieces of conflicting configuration information. When there are two or more pieces of configuration information, the relay device may also perform processing based on the concept provided in the foregoing method. For example, the first configuration information, the second configuration information, and third configuration information conflict. The relay device may determine, based on the foregoing method, the configuration information with the higher priority in the first configuration information and the second configuration information. It is assumed that the configuration information with the higher priority in the first configuration information and the second configuration information is the first configuration information. The relay device may further determine, based on the foregoing method, configuration information with a higher priority in the first configuration information and the third configuration information, to perform processing based on the determined configuration information with the higher priority. Alternatively, the relay device may directly determine, based on the foregoing method, configuration information with a highest priority in the first configuration information, the second configuration information, and the third configuration information, to perform processing based on the configuration information with the highest priority.

Based on the concept provided in the foregoing method, this application further provides a method, to resolve a problem of a conflict between a control link and a forwarding link in an uplink sending process.

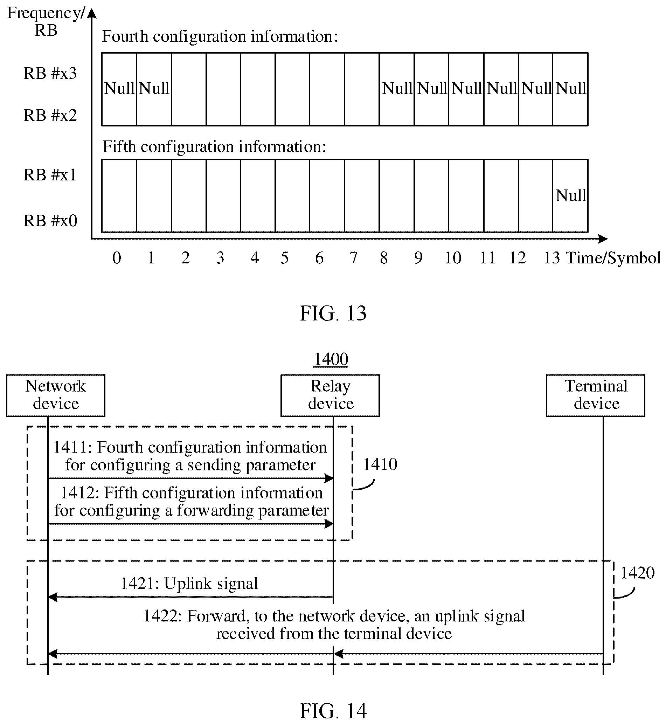

For ease of understanding, the following describes the conflict between the control link and the forwarding link with reference to FIG. 13. As shown in the figure, a network device configures a sending parameter for a control link of a relay device in a piece of configuration information (for example, denoted as fourth configuration information), and a specifically configuration is as follows: The relay device sends an uplink signal on a time-frequency resource located in a resource block (resource block, RB) #x0 to an RB #x1 and on a symbol 2 to a symbol 7, and an uplink transmit power is P_{c-link}. The network device configures a forwarding parameter for a forwarding link of the relay device in another piece of configuration information (for example, denoted as fifth configuration information), and a specifically configuration is as follows: The relay device forwards, on a time-frequency resource located in an RB #x2 to an RB #x3 and on a symbol 0 to a symbol 12, an uplink signal received from a terminal device, and an uplink transmit power is P_{Fwd}. x0 to x3 are non-negative integers.

It can be learned that although the uplink signal sent through the control link and the uplink signal forwarded through the forwarding link partially overlap in time domain, frequency division multiplexing (frequency division multiplexing, FDM) or space division multiplexing (spatial division multiplexing, SDM) (not shown in the figure) may be implemented because allocated frequency domain resources are different (or not completely the same). The uplink transmit power P_{c-link} represents a transmit power on the control link (C-link), and the uplink transmit power P_{Fwd} represents a transmit power on the forwarding (forwarding, Fwd) link. Although transmission of the signal on the control link and the signal on the forwarding link may be performed by using different time-frequency resources, because of partial overlapping in time domain, the two links need to be simultaneously for sending the uplink signals on an overlapping time domain resource. However, a sum of the uplink transmit powers on the two links exceeds a threshold, and the relay device cannot simultaneously use the uplink transmit power P_{c-link} to send the uplink signal on the control link, and use the uplink transmit power P_{Fwd} to forward, on the forwarding link, the uplink signal received from the terminal device.

For ease of description, the foregoing threshold is denoted as Pₜₒₜₐₗ. The threshold may be predefined, preconfigured, or supported by the relay device. The threshold may be a maximum power that can be reached by the relay device to transmit the uplink signal, and may be determined based on a capability of the relay device. The sum of the uplink transmit power P_{c-link} and the uplink transmit power P_{Fwd} exceeds the threshold. That is, P_{c-link}+P_{Fwd}>Pₜₒₜₐₗ.

It should be understood that the parameters in the foregoing examples may be indicated at a granularity of a slot. For example, for a slot i, an uplink transmit power P_{c-link (i)} for the control link and an uplink transmit power P_{Fwd (i)} for the forwarding link are indicated. The threshold Pₜₒₜₐₗ may also correspond to a slot, for example, P_{total (i)}. A sum of the uplink transmit power P_{c-link (i)} and the uplink transmit power P_{Fwd (i)} exceeds the threshold. That is, P_{c-link (i)}+P_{Fwd (i)}>P_{total (i)}.

Alternatively, due to a relay capability constraint, in a same time period, the uplink signal can be forwarded through the forwarding link or the uplink signal can be sent through the control link, but forwarding the uplink signal through the forwarding link and sending the uplink signal through the control link can be simultaneously performed. In this case, the relay needs to determine a signal to be selected for sending or forwarding.

For example, if the uplink control link and backhaul link are simultaneously indicated to one relay device, and the relay device supports time division multiplexing (time division multiplexing, TDM) but does not support FDM, SDM, or the like, in other words, the relay device supports only TDM, the signal on one of the control link and the backhaul link needs to be discarded. In this case, if configuration information (which may be referred to as a periodic indication (periodic indication)) in signaling that is for configuring a periodic resource and that is sent by the relay device through the forwarding link is discarded, and the periodic resource configured by using the signaling is for transmission of a broadcast signal (for example, a signal like an SSB), a coverage hole (coverage hole) may be caused, and system performance is affected.

In this case, this application provides a method, so that a parameter configured for configuration information with a lower priority can be preferentially adjusted based on priorities of two pieces of configuration information, to control a sending parameter and a forwarding parameter within a threshold range, so that a medium-to-high-level device can normally perform uplink transmission.

FIG. 14 is a schematic flowchart of a communication method according to another embodiment of this application. FIG. 14 shows the method from a perspective of device interaction. It may be understood that a relay device in the method may alternatively be replaced with a component in the relay device, for example, a chip, a chip system, or another module that may be configured to implement some or all of functions of the relay device. A network device in the method may alternatively be replaced with a component in the network device, for example, a chip, a chip system, or another module that may be configured to implement some or all of functions of the network device. A terminal device in the method may alternatively be replaced with a component in the terminal device, for example, a chip, a chip system, or another module that may be configured to implement some or all of functions of the terminal device. This is not limited in this application.

The method 1400 shown in FIG. 14 includes step 1410 and step 1420. The following describes in detail the steps in the method 1400.

In step 1410, the network device sends fourth configuration information and fifth configuration information to the relay device. Accordingly, the relay device receives the fourth configuration information and the fifth configuration information from the network device.

The fourth configuration information is for configuring a sending parameter for the relay device, and the sending parameter may be for controlling transmission performed by the relay device through a control link. For example, the sending parameter may include parameters such as signal bandwidth (or a frequency domain resource), a time domain resource, a transmit power (or a power spectral density), a transmit beam, a precoding vector (or a precoding matrix), and an amplification gain. This application includes but is not limited thereto.

The fifth configuration information is for configuring a forwarding parameter for the relay device, and the forwarding parameter may be for controlling forwarding behavior performed by the relay device through a forwarding link. For example, the forwarding parameter may include parameters such as a forwarding resource index, a backhaul link beam, an access link beam, an amplification gain, and a transmit power (or a power spectral density). The forwarding parameter may include one of the foregoing enumerated forwarding parameters. This is not limited in this application.

Alternatively, step 1410 may be expressed as that the network device configures the sending parameter and the forwarding parameter for the relay device.

It may be understood that the fourth configuration information and the fifth configuration information are similar to the first configuration information and the second configuration information in the foregoing method 600, and the fourth configuration information and the fifth configuration information each are configuration information delivered by the network device to control a parameter of behavior of the relay device. The fifth configuration information is the same as the first configuration information and the second configuration information, and is for configuring the forwarding parameter, to control the forwarding behavior of the relay device on the forwarding link. The fourth configuration information is for configuring the sending parameter, to control transmission behavior of the relay device on the control link. Therefore, the foregoing provided related designs of the first configuration information and the second configuration information are also applicable to the fourth configuration information and the fifth configuration information. For example, priorities of the fourth configuration information and the fifth configuration information are determined based on priority information. For another example, priorities of the fourth configuration information and the fifth configuration information are determined based on a preset rule. Details are not described herein again.

Similar to step 610 in the method 600, the fourth configuration information and the fifth configuration information may be carried by using different signaling. The network device may carry the fourth configuration information by using one piece of signaling, and carry the fifth configuration information by using another piece of signaling. Therefore, step 1410 may include step 1411 and step 1412, which are specifically as follows:

In step 1411, the network device sends the fourth configuration information to the relay device.

In step 1412, the network device sends the fifth configuration information to the relay device.

Accordingly, the relay device receives the fourth configuration information from the network device in step 1411, and receives the fifth configuration information from the network device in step 1412.

It should be understood that an execution order of step 1411 and step 1412 is not limited in this application.

In step 1420, the relay device sends an uplink signal based on at least one of the fourth configuration information or the fifth configuration information.

In other words, when the fourth configuration information conflicts with the fifth configuration information, the relay device may send the uplink signal based on at least one of the fourth configuration information or the fifth configuration information. Sending the uplink signal includes: sending the uplink signal through the control link and/or forwarding the uplink signal through the forwarding link.

That the fourth configuration information conflicts with the fifth configuration information may specifically mean that the sending parameter configured by using the fourth configuration information and the forwarding parameter configured by using the fifth configuration information do not satisfy a preset condition, for example, exceed a capability range of the relay device or exceed a threshold. In this way, after receiving the fourth configuration information and the fifth configuration information, the relay device cannot determine whether to perform processing based on the fourth configuration information or the fifth configuration information. This affects normal communication of the relay device, and affects system transmission performance.

A possible case in which the fourth configuration information conflicts with the fifth configuration information is as follows: The sending parameter configured by using the fourth configuration information and the forwarding parameter configured by using the fifth configuration information may be a same parameter, but effective time periods of the sending parameter and the forwarding parameter overlap. Consequently, the relay device cannot simultaneously perform uplink transmission based on the fourth configuration information and the fifth configuration information. For example, as shown in FIG. 13, the uplink transmit power configured by using the fourth configuration information conflicts with the uplink transmit power configured by using the fifth configuration information. As shown in FIG. 13, the total power, on the symbol 2 to the symbol 7, of the uplink transmit power configured by using the fourth configuration information and the uplink transmit power configured by using the fifth configuration information exceeds the preset threshold, the configured threshold, or the threshold supported by the relay, or a power difference between the two uplink transmit powers exceeds the preset threshold, the configured threshold, or the threshold supported by the relay. The relay device cannot simultaneously perform uplink transmission based on the fourth configuration information and the fifth configuration information. A parameter on which the configuration conflict occurs is the uplink transmit power.

Another possible case in which the fourth configuration information conflicts with the fifth configuration information is as follows: The sending parameter configured by using the fourth configuration information and the forwarding parameter configured by using the fifth configuration information may alternatively be different parameters, and effective time periods of the sending parameter and the forwarding parameter overlap. Consequently, the relay device cannot simultaneously perform uplink transmission based on the fourth configuration information and the fifth configuration information. For example, if the relay device does not support frequency division multiplexing, the relay device cannot send the uplink signal through the control link and forward the uplink signal through the forwarding link on a same time domain resource.

For the foregoing case, the relay device may send the uplink signal based on one of the fourth configuration information and the fifth configuration information. Which one of the fourth configuration information and the fifth configuration information is specifically based on by the relay device depends on the priorities of the fourth configuration information and the fifth configuration information. In other words, the relay device may send the uplink signal based on configuration information with a higher priority in the fourth configuration information and the fifth configuration information. Optionally, the method further includes: The relay device determines the configuration information with the higher priority in the fourth configuration information and the fifth configuration information.

It should be noted that, that the relay device sends the uplink signal based on the fourth configuration information (or the fifth configuration information) does not mean that the relay device sends the uplink signal only through the control link, and does not forward the uplink signal through the forwarding link. When sending the uplink signal through the control link based on the fourth configuration information, the relay device may not forward the uplink signal through the forwarding link. That is, one signal is selected from the two signals to send the uplink signal. Alternatively, the uplink signal may be forwarded through the forwarding link, but a forwarding parameter based on which forwarding is performed is not necessarily the forwarding parameter configured by using the fifth configuration information, but a parameter obtained through adjustment. The following provides descriptions with reference to an example. Details are not described herein temporarily.

For determining of the priorities of the fourth configuration information and the fifth configuration information, refer to the implementations provided in the foregoing method 600. For example, the priorities may be determined based on priority information, or may be determined based on the preset rule. The priority information may be, for example, a value carried in a preset field (for example, an "overwritten" field or a "no overwritten" field) in signaling for carrying the fourth configuration information or the fifth configuration information, or may be priority values carried in signaling for carrying the fourth configuration information and the fifth configuration information. The preset rule may be, for example, that a priority of configuration information in signaling for configuring a periodic resource is highest. For details, refer to the foregoing rule 1 to rule 8. Details are not described herein again.

For example, the priorities of the fourth configuration information and the fifth configuration information may be determined based on priorities of the uplink signal sent through the control link and the uplink signal sent through the forwarding link, may be determined based on priorities of a transmission resource for sending the uplink signal through the control link and a forwarding resource for sending the uplink signal through the forwarding link, or may be determined with reference to the foregoing two items.

With reference to a processing manner A and a processing manner B, the following describes how the relay device processes a problem of a conflict between the fourth configuration information and the fifth configuration information.

Processing manner A: A value of a parameter configured in configuration information with a lower priority is preferentially adjusted.

In a possible implementation, the relay device may determine the priorities of the fourth configuration information and the fifth configuration information based on the priorities of the uplink signal sent through the control link and the uplink signal sent through the forwarding link, to perform processing based on the configuration information with the higher priority, and preferentially adjust the value of the parameter configured by using the configuration information with the lower priority.

For example, the priority of the uplink signal sent through the control link is higher than the priority of the uplink signal sent through the forwarding link, and a priority of the sending parameter of the control link is higher than a priority of the forwarding parameter of the forwarding link. That is, the priority of the fourth configuration information is higher than the priority of the fifth configuration information. In this case, the relay device may adjust a value of the forwarding parameter rather than the sending parameter.

When the priority of the uplink signal sent through the forwarding link is higher than the priority of the uplink signal sent through the control link, a priority of the forwarding parameter of the forwarding link is higher than the priority of the sending parameter of the control link. That is, the priority of the fifth configuration information is higher than the priority of the fourth configuration information. In this case, the relay device may adjust a value of the sending parameter rather than the forwarding parameter.

In an example, when the signal sent through the control link includes a preset signal, the priority of the fourth configuration information is higher than the priority of the fifth configuration information, and the relay device may preferentially adjust the value of the forwarding parameter. The preset signal is a signal with a higher priority. The preset signal may include, for example, but is not limited to, a control signal like a PRACH or a PUCCH, or a cell-level common signal.

In another example, when the signal sent through the control link does not include a preset signal, but the signal sent through the forwarding link includes the preset signal, the priority of the fifth configuration information is higher than the priority of the fourth configuration information, and the relay device may preferentially adjust the value of the sending parameter. For example, the signal sent through the control link does not include any one of preset signals, for example, a PRACH, but the signal sent through the forwarding link includes any one of the preset signals, for example, the PRACH. In this case, the priority of the fourth configuration information is higher than the priority of the fifth configuration information.

In another possible implementation, the relay device may determine the priorities of the fourth configuration information and the fifth configuration information based on the priorities of the transmission resource for sending the uplink signal through the control link and the forwarding resource for sending the uplink signal through the forwarding link, to perform processing based on the configuration information with the higher priority, and preferentially adjust the value of the parameter configured by using the configuration information with the lower priority.

In an example, the priority of the transmission resource for sending the signal through the control link is higher than the priority of the forwarding resource for sending the signal through the forwarding link, the priority of the fourth configuration information is higher than the priority of the fifth configuration information, and the relay device may preferentially adjust a value of the forwarding parameter.

The priority of the forwarding resource for sending the uplink signal through the forwarding link is higher than the priority of the transmission resource for sending the signal through the control link, the priority of the fifth configuration information is higher than the priority of the fourth configuration information, and the relay device may preferentially adjust a value of the sending parameter.

In other words, a higher priority of a resource indicates a higher priority of configuration information of a parameter corresponding to a signal whose transmission is performed by using the resource.

For example, if the forwarding resource that is configured by using the fifth configuration information and that is for sending the signal through the forwarding link is one of preset types, or the forwarding resource that is configured by using the fifth configuration information and that is for sending the signal through the forwarding link is a periodic resource, the priority of the fifth configuration information is higher than the priority of the fourth configuration information, and the relay device may preferentially adjust the value of the sending parameter. It should be understood that the foregoing two methods for determining the priorities of the configuration information may alternatively be used in combination. For example, when a type of the uplink signal forwarded through the forwarding link cannot be determined, the priorities of the fourth configuration information and the fifth configuration information may be determined based on the priority of the forwarding resource for forwarding the signal through the forwarding link and the priority of the uplink signal sent through the control link. For example, when the priority of the forwarding resource for forwarding the signal through the forwarding link is higher, and the uplink signal sent through the control link is a data signal, it may be determined that the priority of the fifth configuration information is higher than the priority of the fourth configuration information.

In conclusion, if the priority of the fourth configuration information is higher than the priority of the fifth configuration information, the relay device may preferentially adjust the value of the forwarding parameter; or if the priority of the fifth configuration information is higher than the priority of the fourth configuration information, the relay device may preferentially adjust the value of the sending parameter.

In a possible implementation in which the relay device preferentially adjusts the value of the sending parameter, the value of the sending parameter rather than the forwarding parameter is adjusted. In a possible implementation in which the relay device preferentially adjusts the value of the forwarding parameter, the value of the forwarding parameter rather than the sending parameter is adjusted. A specific manner of adjusting the sending parameter or adjusting the forwarding parameter may be: when a value of one of the parameters is kept unchanged, reducing a value of the other parameter based on a threshold, so that a sum of the values of the two parameters is less than or equal to the threshold.

For example, if the relay device needs to adjust the uplink transmit power P_{c-link} rather than the uplink transmit power P_{Fwd}, the relay device may keep P_{Fwd} unchanged, and adjust the other item based on the threshold Pₜₒₜₐₗ, where a value obtained through adjustment is denoted as P'_{c-link}, and P'_{c-link} satisfies: P'_{c-link}≤Pₜₒₜₐₗ-P_{Fwd}. For another example, if the relay device needs to adjust the uplink transmit power P_{Fwd} rather than the uplink transmit power P_{c-link}, the relay device may keep P_{c-link} unchanged, and adjust the other item based on the threshold Pₜₒₜₐₗ, where a value obtained through adjustment is denoted as P'_{Fwd}, and P'_{Fwd} satisfies: P'_{Fwd}≤Pₜₒₜₐₗ-P_{c-link}.

As described above, each parameter may be indicated at a granularity of a slot. For a slot i, a value obtained through adjustment should satisfy the following:
P'_{c-link (i)}≤P_{total (i)}-P_{Fwd} (i), or P'_{Fwd (i)}≤P_{total (i)}-P_{c-link} (i).

In this way, when the relay device simultaneously performs uplink transmission through the control link and the forwarding link on the symbol 2 to the symbol 6, the sum of the uplink transmit powers does not exceed the threshold Pₜₒₜₐₗ.

In another possible implementation in which the relay device preferentially adjusts the sending parameter, the value of the sending parameter and the value of the forwarding parameter are adjusted, but an adjustment amplitude of the value of the sending parameter is greater than an adjustment amplitude of the value of the forwarding parameter. In a possible implementation in which the relay device preferentially adjusts the value of the forwarding parameter, the value of the forwarding parameter and the value of the sending parameter are adjusted, but an adjustment amplitude of the value of the forwarding parameter is greater than an adjustment amplitude of the value of the sending parameter. In other words, the relay device may alternatively send the uplink signal with reference to the fourth configuration information and the fifth configuration information.

For example, the uplink transmit power for the control link is reduced by X dB, and the uplink transmit power for the forwarding link is reduced by X+Y dB, where X and Y are positive integers. Specifically, X=max{(P_{Fwd}+P_{c-link}-Pₜₒₜₐₗ-Y)/2, 0}, and a value of Y may be predefined or preconfigured. For example, Y=3.

The relay device may determine, based on the respective values of the sending parameter and the forwarding parameter and the threshold, a value that exceeds the threshold, to determine a value of each parameter obtained through adjustment, so that an adjustment amplitude of a parameter that is preferentially adjusted is less than an adjustment amplitude of the other parameter.

After adjusting the value of the parameter, the relay device may simultaneously perform transmission of the uplink signal on the control link and the forwarding link. Therefore, when performing step 1420, the relay device may specifically perform the following steps.

Step 1421: The relay device sends the uplink signal to the network device.

Step 1422: The relay device forwards, to the network device, the uplink signal received from the terminal device.

Specifically, when performing step 1421, the relay device may send the uplink signal to the network device through the control link. When performing step 1422, the relay device may forward, to the network device through the forwarding link, the uplink signal received from the terminal device.

It should be noted that, if the relay device adjusts the value of the forwarding parameter rather than the sending parameter, the relay device may send the uplink signal to the network device based on the fourth configuration information when performing step 1421. It should be understood that, when sending the uplink signal to the network device based on the fourth configuration information, the relay device may further perform step 1422 to forward, to the network device, the uplink signal received from the terminal device. A difference is that the relay device forwards, to the network device, the uplink signal from the terminal device based on a forwarding parameter that is not based on a configuration of the fifth configuration information, and forwarding is performed based on a value of a forwarding parameter obtained through adjustment.

If the relay device adjusts the value of the sending parameter rather than the forwarding parameter, the relay device may forward, to the network device based on the fifth configuration information when performing step 1422, the uplink signal received from the terminal device. It should be understood that, when forwarding, to the network device based on the fifth configuration information, the uplink signal received from the terminal device, the relay device may further perform step 1421 to send the uplink signal to the network device. A difference is that the relay device sends the uplink signal to the network device based on a sending parameter that is not based on a configuration of the fourth configuration information, and sending is performed based on a value of a sending parameter obtained through adjustment.

If the relay device adjusts the value of the forwarding parameter and the value of the sending parameter, the relay device performs each of step 1421 and step 1422 based on a value of a parameter obtained through adjustment.

It may be understood that the relay device adjusts the value of the sending parameter rather than the forwarding parameter, that is, sends the uplink signal based on the fifth configuration information; the relay device adjusts the value of the forwarding parameter rather than the sending parameter, that is, sends the uplink signal based on the fourth configuration information; and the relay device adjusts the value of the sending parameter and the value of the forwarding parameter, that is, sends the uplink signals based on the fourth configuration information and the fifth configuration information.

Based on the foregoing solution, the value of the sending parameter configured by using the fourth configuration information and/or the value of the forwarding parameter configured by using the fifth configuration information are/is adjusted, so that the value of the sending parameter obtained through adjustment and/or the value of the forwarding parameter obtained through adjustment can satisfy the preset condition. In this way, the relay device can normally perform uplink transmission, and assist in communication between the network device and the terminal device. This helps improve system transmission performance.

Processing manner B: Based on the priorities of the configuration information, a signal corresponding to the configuration information with the higher priority is selected from the forwarding link and the control link for sending.

In another possible implementation, the relay device may determine the priorities of the fourth configuration information and the fifth configuration information based on the priorities of the uplink signal sent through the control link and the uplink signal sent through the forwarding link, to send the uplink signal based on the configuration information with the higher priority, but not send a signal corresponding to the other piece of configuration information.

In still another possible implementation, the relay device may determine the priorities of the fourth configuration information and the fifth configuration information based on the priorities of the transmission resource for sending the uplink signal through the control link and the forwarding resource for sending the uplink signal through the forwarding link, to send the uplink signal based on the configuration information with the higher priority, but not send a signal corresponding to the other piece of configuration information.

A specific manner in which the relay device determines the priorities of the fourth configuration information and the fifth configuration information based on the priorities of the signals or the priorities of the resources has been described above. Details are not described again.

A signal corresponding to configuration information may be understood as a signal that a parameter configured by using the configuration information (for example, the sending parameter configured by using the fourth configuration information or the forwarding parameter configured by using the fifth configuration information) is for controlling the relay device to send.

That the relay device sends the uplink signal based on configuration information with the higher priority, and does not send the signal corresponding to other piece of configuration information includes: The relay device, sends the uplink signal through the control link based on the fourth configuration information, and does not forward the uplink signal through the forwarding link (that is, corresponding to a case in which the priority of the fourth configuration information is higher than the priority of the fifth configuration information). Alternatively, the relay device forwards the uplink signal through the forwarding link based on the fifth configuration information, and does not send the uplink signal through the control link (that is, corresponding to a case in which the priority of the fifth configuration information is higher than the priority of the fourth configuration information).

For example, the priority of the uplink signal sent through the control link is higher than the priority of the uplink signal sent through the forwarding link, and a priority of the sending parameter of the control link is higher than a priority of the forwarding parameter of the forwarding link. That is, the priority of the fourth configuration information is higher than the priority of the fifth configuration information. In this case, the relay device may send the uplink signal through the control link, instead of forwarding the uplink signal through the forwarding link.

The priority of the uplink signal sent through the forwarding link is higher than the priority of the uplink signal sent through the control link, and a priority of the forwarding parameter of the forwarding link is higher than the priority of the sending parameter of the control link. That is, the priority of the fifth configuration information is higher than the priority of the fourth configuration information. In this case, the relay device may forward the uplink signal through the forwarding link, instead of sending the uplink signal through the control link.

In conclusion, if the priority of the fourth configuration information is higher than the priority of the fifth configuration information, the relay device may send the uplink signal through the control link, instead of forwarding the uplink signal through the forwarding link; or if the priority of the fifth configuration information is higher than the priority of the fourth configuration information, the relay device may forward the uplink signal through the forwarding link, instead of sending the uplink signal through the control link.

In the foregoing example, if the uplink control link and backhaul link are simultaneously indicated to one relay device, and the relay device supports TDM but does not support FDM or SDM, in other words, the relay device supports only TDM, the relay device may discard a signal on one of the control link and the backhaul link. However, the discarded signal is a signal with a lower priority, so that impact on the relay device can be avoided, and impact on system performance can be reduced. For example, in the foregoing example, when the signal forwarded through the forwarding link is a periodic indication, a priority of the periodic indication should be higher than the priority of the signal on the control link. In this case, the periodic indication is not discarded. In this manner, a case in which a coverage hole is caused because periodic forwarding (for example, a signal like an SSB) of the relay is disabled can be avoided. In this way, this helps obtain larger coverage of the relay device, to better assist in communication between the network device and the terminal device, and improve the transmission performance.

For another example, when the priority of the transmission resource for sending the signal through the control link is higher than the priority of the forwarding resource for sending the signal through the forwarding link, the priority of the fourth configuration information is higher than the priority of the fifth configuration information, and the relay device sends the uplink signal through the control link, instead of forwarding the uplink signal through the forwarding link.

When the priority of the forwarding resource for sending the uplink signal through the forwarding link is higher than the priority of the transmission resource for sending the signal through the control link, the priority of the fifth configuration information is higher than the priority of the fourth configuration information, and the relay device may forward the uplink signal through the forwarding link, instead of sending the uplink signal through the control link.

In the foregoing two implementations, when performing step 1420, the relay device may specifically perform step 1421 or step 1422.

In step 1421, the relay device sends the uplink signal to the network device.

In step 1422, the relay device forwards, to the network device, the uplink signal received from the terminal device.

Specifically, if the priority of the fourth configuration information is higher than the priority of the fifth configuration information, the relay device may perform step 1421 rather than step 1422. In this case, the relay device may send the uplink signal based on the fourth configuration information. If the priority of the fourth configuration information is lower than the priority of the fifth configuration information, the relay device may perform step 1422 rather than step 1421. In this case, the relay device may send the uplink signal based on the fifth configuration information.

Based on the foregoing solution, when configuration information of the two uplinks, namely, the control link and the forwarding link, conflicts, a signal on one of the two uplinks is selected for sending, so that the relay device can normally perform uplink transmission in a range supported by a capability, and assist in the communication between the network device and the terminal device. This helps improve the system transmission performance.

In conclusion, if the priority of the fourth configuration information is higher than the priority of the fifth configuration information, the relay device may preferentially adjust a value of the forwarding parameter, send the uplink signal to the network device through the control link based on the fourth configuration information, and forward, to the network device through the forwarding link based on a forwarding parameter obtained through adjustment, the uplink signal received from the terminal device. Alternatively, the relay device may adjust the value of the forwarding parameter and a value of the sending parameter, but an adjustment amplitude of the value of the forwarding parameter is greater than an adjustment amplitude of the value of the sending parameter. The relay device may send the uplink signal to the network device through the control link based on a sending parameter obtained through adjustment, and forward, to the network device through the forwarding link based on the forwarding parameter obtained through adjustment, the uplink signal received from the terminal device. Alternatively, the relay device may send an uplink signal to the network device through the control link, and does not forward, to the network device through the forwarding link, the uplink signal received from the terminal device.

If the priority of the fifth configuration information is higher than the priority of the fourth configuration information, the relay device may preferentially adjust a value of the sending parameter, forward, to the network device through the forwarding link based on the fifth configuration information, the uplink signal received from the terminal device, and send the uplink signal to the network device through the control link based on a sending parameter obtained through adjustment. Alternatively, the relay device may adjust a value of the forwarding parameter and the value of the sending parameter, but an adjustment amplitude of the value of the forwarding parameter is less than an adjustment amplitude of the value of the sending parameter. The relay device may send the uplink signal to the network device through the control link based on the sending parameter obtained through adjustment, and forward, to the network device through the forwarding link based on a forwarding parameter obtained through adjustment, the uplink signal received from the terminal device. Alternatively, the relay device may forward, to the network device through the forwarding link, the uplink signal received from the terminal device, but not send the uplink signal to the network device through the control link.

It should be understood that, when processing the problem of the conflict between the fourth configuration information and the fifth configuration information, whether the relay device selects the processing manner A or the processing manner B may be predefined in a protocol, may be preconfigured by the network device, or may be determined by the relay device.

For example, the relay device may determine, based on a type of a signal, a type of a resource, a priority of the resource, or another forwarding parameter, a processing manner to be used. In this way, signals of different types, resources of different types, resources with different priorities, and the like may correspond to different implementations. For example, when a signal forwarded by using a resource configured by using the fifth configuration information is the preset signal (for example, the SSB), the processing manner B may be used; or when a signal forwarded by using a resource configured by using configuration information in second signaling is another signal, the processing manner A may be used.

Further, the priority of the fourth configuration information and the priority of the fifth configuration information correspond to one slot. When the sending parameter and the forwarding parameter are configured for the relay device by using the pieces of signaling, configuration may be performed based on a slot. Therefore, the priorities of the pieces of configuration information may alternatively be compared at a granularity of the slot. In other words, configuration information may correspond to one priority in each slot. In other words, the priorities of the fourth configuration information and the fifth configuration information may be different in different slots.

It should be understood that, in the foregoing embodiments shown with reference to FIG. 6 and FIG. 14, sequence numbers of the steps do not mean execution orders. The execution orders of the processes should be determined based on functions and internal logic of the processes, and should not be construed as any limitation on the implementation processes of embodiments of this application. In addition, the steps in the procedures shown in the figures are merely examples, and do not necessarily mean that each step needs to be performed. For example, step 6201 and step 6202 in the method 600 are optional, and are not necessarily performed; and step 1421 and step 1422 in the method 1400 may be performed either or both. Based on a same concept, a person skilled in the art may make a simple change based on the procedures shown in the figures, for example, adjust an execution order of some steps, or add another step or reduce a step, to implement the methods provided in this application. These changes shall fall within the protection scope of this application.

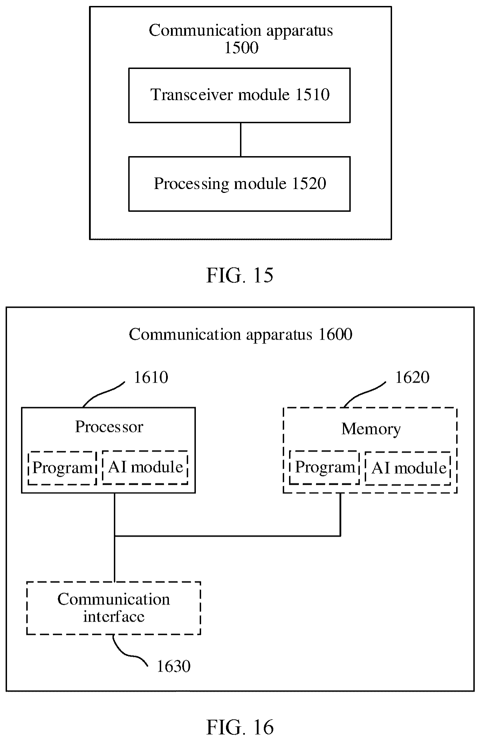

Apparatuses provided in embodiments of this application are described below in detail with reference to FIG. 15 and FIG. 16.

FIG. 15 and FIG. 16 are schematic block diagrams of possible communication apparatuses according to embodiments of this application. These communication apparatuses may be configured to implement the functions of the relay device in the foregoing method embodiments. Therefore, the beneficial effects of the foregoing method embodiments can also be implemented. In embodiments of this application, the communication apparatus may be the relay device 120 shown in FIG. 1, may be the relay device 300 shown in FIG. 3, or may be a module (for example, a chip or a chip system) used in a relay device.

As shown in FIG. 15, the communication apparatus 1500 includes a transceiver module 1510 and a processing module 1520.

In a possible design, the communication apparatus 1500 is configured to implement the functions of the relay device in the method embodiment shown in FIG. 6.

For example, the transceiver module 1510 is configured to receive first configuration information and second configuration information from a network device, where the first configuration information is for configuring a first forwarding parameter for the relay device, the second configuration information is for configuring a second forwarding parameter for the relay device, and the first forwarding parameter and the second forwarding parameter are parameters for controlling forwarding behavior of the relay device. The transceiver module 1510 is further configured to forward, to a terminal device based on the first configuration information, a signal received from the network device, or forward, to the network device based on the first configuration information, a signal received from the terminal device. Optionally, the apparatus may further include the processing module 1520. The processing module 1520 may be configured to determine configuration information with a higher priority in the first configuration information and the second configuration information.

For more detailed descriptions of the transceiver module 1510 and the processing module 1520, directly refer to the related descriptions in the method embodiment shown in FIG. 6. Details are not described herein again.

In another possible design, the communication apparatus 1500 is configured to implement the functions of the relay device in the method embodiment shown in FIG. 14.

For example, the transceiver module 1510 is configured to receive fourth configuration information and fifth configuration information from a network device, where the fourth configuration information is for configuring, for a terminal device, a sending parameter for uplink transmission, the sending parameter is a parameter for controlling uplink sending of the relay device, the fifth configuration information is for configuring, for the relay device, a forwarding parameter for uplink forwarding, and the forwarding parameter is for sending an uplink signal.

Optionally, the apparatus 1500 further includes the processing module 1520. The processing module 1520 may be configured to determine configuration information with a higher priority in the fourth configuration information and the fifth configuration information.

Optionally, the transceiver module 1510 may be specifically configured to send the uplink signal to the network device.

Optionally, the transceiver module 1510 may be specifically configured to forward, to the network device, the signal received from the terminal device.

For more detailed descriptions of the transceiver module 1510 and the processing module 1520, directly refer to the related descriptions in the method embodiment shown in FIG. 14. Details are not described herein again.

It should be noted that the communication apparatus 1500 may include a sending module, but not include a receiving module. Alternatively, the communication apparatus 1500 may include the receiving module, but not include the sending module. This may be specifically determined depending on whether the foregoing solutions performed by the communication apparatus 1500 include a sending action and a receiving action.

As shown in FIG. 16, the communication apparatus 1600 includes one or more processors 1610. The processor 1610 may be a general-purpose processor, a special-purpose processor, or the like. For example, the processor 1610 may be a baseband processor or a central processing unit. The baseband processor may be configured to process a communication protocol and communication data. The central processing unit may be configured to: control the communication apparatus (for example, a RAN node, a terminal, or a chip), execute a software program, and process data of the software program.

Optionally, in a design, the processor 1610 may include a program (which may also be referred to as code or instructions), and the program may be run on the processor 1610, so that the communication apparatus 1600 performs the methods performed by the relay device in the foregoing method embodiments. In another possible design, the communication apparatus 1600 includes a circuit (not shown in FIG. 16), and the circuit is configured to implement the functions of the relay device in embodiments in the foregoing method embodiments.

For example, the processor 1610 may be configured to execute a computer program or instructions in a memory, to implement the steps performed by the relay device in the method embodiment shown in FIG. 6 or FIG. 14.

Optionally, the communication apparatus 1600 may include one or more memories 1620, and the memory 1620 stores a program (which may also be sometimes referred to as code or instructions). The program may be run on the processor 1610, so that the communication apparatus 1600 performs the methods performed by the relay device in the foregoing embodiments.

Optionally, the processor 1610 and/or the memory 1620 may include an artificial intelligence (artificial intelligence, AI) module, and the AI module is configured to implement an AI-related function. The AI module may be implemented by using software, hardware, or a combination of the software and the hardware. For example, the AI module may include a radio intelligent controller (radio intelligent controller, RIC) module. For example, the AI module may be a near-real-time RIC or a non-real-time RIC.

Optionally, the processor 1610 and/or the memory 1620 may further store data. The processor and the memory may be separately disposed, or may be integrated together.

Optionally, the communication apparatus 1600 may further include a communication interface 1630. The processor 1610 may also be sometimes referred to as a processing unit, and controls the communication apparatus (for example, the RAN node or the terminal). The communication interface 1630 may also be sometimes referred to as a transceiver unit, a transceiver machine, a transceiver circuit, a transceiver, or the like, and is configured to implement a transceiver function of the communication apparatus.

Optionally, the apparatus 1600 further includes the communication interface 1630. The processor 1610 and the communication interface 1630 are coupled to each other. It may be understood that, the communication interface 1630 may be the transceiver or an input/output interface.

When the communication apparatus 1600 is configured to implement the method shown in FIG. 6 or FIG. 14, the processor 1610 is configured to perform a function of the foregoing processing unit, and the communication interface 1630 is configured to perform a function of the foregoing transceiver module. Whether the communication interface 1630 is for sending or receiving may be specifically determined depending on whether the communication interface 1630 is configured to perform a sending action or a receiving action in the solutions performed by the communication apparatus 1600.

When the communication apparatus 1600 is a chip used in a relay device, the chip implements the functions of the relay device in the foregoing method embodiments. The chip of the relay device receives a signal from another module (for example, a radio frequency module or an antenna) in the relay device. The signal may be sent by a network device or a terminal device to the relay device. Alternatively, the chip of the relay device sends a signal to the another module (for example, the radio frequency module or the antenna) in the relay device. The signal may be sent by the relay device to the network device or the terminal device.

It may be understood that, when the communication apparatus 1600 is a relay device, the communication interface 1630 may be the transceiver, and may specifically include a transmitter and a receiver. The transmitter is configured to send a signal, and the receiver is configured to receive a signal. When the communication apparatus 1600 is the chip used in the relay device, the communication interface 1630 may be an input/output circuit. The input circuit may be for receiving, and the output interface may be for sending.

It should be noted that, the foregoing method embodiments may be applied to a processor, or implemented by a processor. The processor may be an integrated circuit chip, and has a signal processing capability. In an implementation process, steps in the foregoing method embodiments may be completed by using a hardware integrated logic circuit in the processor or by using instructions in a form of software.

The processor may be a general-purpose processor, a digital signal processor (digital signal processor, DSP), an application-specific integrated circuit (application specific integrated Circuit, ASIC), a field programmable gate array (field programmable gate array, FPGA) or another programmable logic device, a discrete gate or a transistor logic device, a discrete hardware component, or any combination thereof. The general-purpose processor may be a microprocessor, or may be any conventional processor or the like.

The steps in the methods disclosed with reference to embodiments of this application may be directly performed and completed by a hardware decoding processor, or may be performed and completed by using a combination of hardware in the decoding processor and a software module. The software module may be located in a mature storage medium in the field, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

The memory in embodiments of this application may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the methods described in this specification aims to include but is not limited to these and any memory of another appropriate type.

All or some of the methods provided in the foregoing embodiments may be implemented by software, hardware, firmware, or any combination thereof. When the software is used to implement the methods, all or some of the methods may be implemented in a form of a computer program product. The computer program product may include one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic disk), an optical medium (for example, a DVD), a semiconductor medium (for example, a solid-state drive (solid state disk, SSD)), or the like.

A person of ordinary skill in the art may be aware that, with reference to the units and the algorithm steps in the examples described in embodiments disclosed in this specification, this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiment is merely an example. For example, the division into the units is merely logical function division, and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one location, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in this application essentially or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a system comprising a network device and a relay device, wherein the method comprises:
sending, by the network device, first configuration information and second configuration information to the relay device, wherein the first configuration information is for configuring a first forwarding parameter for the relay device, the second configuration information is for configuring a second forwarding parameter for the relay device, and the first forwarding parameter and the second forwarding parameter are parameters for controlling forwarding behavior of the relay device; and
forwarding, by the relay device to a terminal device based on the first configuration information, a signal received from the network device, or forwarding, to the network device based on the first configuration information, a signal received from the terminal device.

2. The method according to claim 1, wherein the first forwarding parameter and the second forwarding parameter are a same forwarding parameter, but configuration performed on the first forwarding parameter by using the first configuration information is different from configuration performed on the second forwarding parameter by using the second configuration information; or the first forwarding parameter and the second forwarding parameter are different forwarding parameters, wherein
the first forwarding parameter takes effect in a first time period, the second forwarding parameter takes effect in a second time period, and the first time period and the second time period are in a same slot.

3. The method according to claim 2, wherein the first forwarding parameter and the second forwarding parameter are a same forwarding parameter, but the configuration performed on the first forwarding parameter by using the first configuration information is different from the configuration performed on the second forwarding parameter by using the second configuration information; and the first forwarding parameter and the second forwarding parameter comprise a parameter for controlling the relay device to perform signal forwarding; and
forwarding, by the relay device to the terminal device based on the first configuration information, the signal received from the network device, or forwarding, to the network device based on the first configuration information, the signal received from the terminal device comprises one or more of the following:
forwarding, by the relay device to the terminal device based on the first configuration information in the first time period, the signal received from the network device, or forwarding, to the network device based on the first configuration information in the first time period, the signal received from the terminal device; and skipping performing signal forwarding on a time domain symbol other than the first time period in a target slot;
forwarding, by the relay device to the terminal device based on the first configuration information in a target time period, the signal received from the network device, or forwarding, to the network device based on the first configuration information in the target time period, the signal received from the terminal device;
forwarding, by the relay device to the terminal device based on the first configuration information in the target time period, the signal received from the network device, or forwarding, to the network device based on the first configuration information in the target time period, the signal received from the terminal device; and skipping performing signal forwarding on another time domain symbol that is in the target slot and that is after the target time period;
forwarding, by the relay device to the terminal device based on the first configuration information in the target time period, the signal received from the network device, or forwarding, to the network device based on the first configuration information in the target time period, the signal received from the terminal device; and skipping performing signal forwarding on another time domain symbol that is in the target slot and that is before the target time period;
forwarding, by the relay device to the terminal device based on the first configuration information in the target time period, the signal received from the network device, or forwarding, to the network device based on the first configuration information in the target time period, the signal received from the terminal device; and skipping performing signal forwarding in a reserved time period;
forwarding, by the relay device to the terminal device based on the first configuration information in the first time period and the second time period, the signal received from the network device, or forwarding, to the network device based on the first configuration information in the first time period and the second time period, the signal received from the terminal device; and skipping performing signal forwarding on a time domain symbol other than the first time period and the second time period in the target slot; or
forwarding, by the relay device to the terminal device based on the first configuration information in the target slot, the signal received from the network device, or forwarding, to the network device based on the first configuration information in the target slot, the signal received from the terminal device, wherein
the target slot is the slot which the first time period and the second time period are jointly in, the target time period is an overlapping time period between the first time period and the second time period, and the target time period comprises one or more time domain symbols in the target slot; and the reserved time period comprises k1 time domain symbols that are in the target slot and that are before the target time period and/or k2 time domain symbols that are in the target slot and that are after the target time period, wherein both k1 and k2 are preconfigured values or predefined values, and both k1 and k2 are integers greater than or equal to 0.

4. The method according to claim 2, wherein the first forwarding parameter and the second forwarding parameter are different forwarding parameters, and the first forwarding parameter is forwarding disabled; and
the method further comprises one or more of the following:
skipping, by the relay device, performing signal forwarding based on the first configuration information in the first time period;
skipping, by the relay device, performing signal forwarding based on the first configuration information in a target time period;
skipping, by the relay device, performing signal forwarding based on the first configuration information in the target time period and on another time domain symbol that is in a target slot and that is before the target time period;
skipping, by the relay device, performing signal forwarding based on the first configuration information in the target time period and on another time domain symbol that is in the target slot and that is after the target time period;
skipping, by the relay device, performing signal forwarding based on the first configuration information in the target time period and a reserved time period; or
skipping, by the relay device, performing signal forwarding based on the first configuration information in the target slot, wherein
the target slot is the slot which the first time period and the second time period are jointly in, the target time period is an overlapping time period between the first time period and the second time period, and the target time period comprises one or more time domain symbols in the target slot; and the reserved time period comprises k1 time domain symbols that are in the target slot and that are before the target time period and/or k2 time domain symbols that are in the target slot and that are after the target time period, wherein both k1 and k2 are preconfigured values or predefined values, and both k1 and k2 are integers greater than or equal to 0.

5. The method according to claim 1, wherein the first forwarding parameter and the second forwarding parameter are a same forwarding parameter, but configuration performed on the first forwarding parameter by using the first configuration information is different from configuration performed on the second forwarding parameter by using the second configuration information; or the first forwarding parameter and the second forwarding parameter are different forwarding parameters, wherein
the first forwarding parameter takes effect in a first time period, the second forwarding parameter takes effect in a second time period, the first time period is in one or more slots, the second time period is in one or more slots, at least one of the first time period and the second time period is in a plurality of slots, and the first time period and the second time period are jointly in one or more slots.

6. The method according to claim 5, wherein the first forwarding parameter and the second forwarding parameter are a same forwarding parameter, but the configuration performed on the first forwarding parameter by using the first configuration information is different from the configuration performed on the second forwarding parameter by using the second configuration information; and the first forwarding parameter and the second forwarding parameter comprise a parameter for controlling the relay device to perform signal forwarding; and
forwarding, by the relay device to the terminal device based on the first configuration information, the signal received from the network device, or forwarding, to the network device based on the first configuration information, the signal received from the terminal device comprises one or more of the following:
forwarding, by the relay device to the terminal device based on the first configuration information in the first time period, the signal received from the network device, or forwarding, to the network device based on the first configuration information in the first time period, the signal received from the terminal device; and skipping performing signal forwarding on a time domain symbol other than the first time period in a target slot;
forwarding, by the relay device to the terminal device based on the first configuration information in a target time period, the signal received from the network device, or forwarding, to the network device based on the first configuration information in the target time period, the signal received from the terminal device;
forwarding, by the relay device to the terminal device based on the first configuration information in the target time period, the signal received from the network device, or forwarding, to the network device based on the first configuration information in the target time period, the signal received from the terminal device; and skipping performing signal forwarding on another time domain symbol that is in the target slot and that is after the target time period;
forwarding, by the relay device to the terminal device based on the first configuration information in the target time period, the signal received from the network device, or forwarding, to the network device based on the first configuration information in the target time period, the signal received from the terminal device; and skipping performing signal forwarding on another time domain symbol that is in the target slot and that is before the target time period;
forwarding, by the relay device to the terminal device based on the first configuration information in the target time period, the signal received from the network device, or forwarding, to the network device based on the first configuration information in the target time period, the signal received from the terminal device; and skipping performing signal forwarding in a reserved time period;
forwarding, by the relay device to the terminal device based on the first configuration information in the first time period and the second time period, the signal received from the network device, or forwarding, to the network device based on the first configuration information in the first time period and the second time period, the signal received from the terminal device; and skipping performing signal forwarding on a time domain symbol other than the first time period and the second time period in the target slot;
forwarding, by the relay device to the terminal device based on the first configuration information in the target slot, the signal received from the network device, or forwarding, to the network device based on the first configuration information in the target slot, the signal received from the terminal device; or
forwarding, by the relay device to the terminal device based on the first configuration information in the first time period, the signal received from the network device, or forwarding, to the network device based on the first configuration information in the first time period, the signal received from the terminal device; and forwarding, to the terminal device based on the second configuration information on a time domain symbol other than the target slot in the second time period, the signal received from the network device, or forwarding, to the network device based on the second configuration information on the time domain symbol other than the target slot in the second time period, the signal received from the terminal device, wherein
the target slot is the slot which the first time period and the second time period are jointly in, the target time period is an overlapping time period between the first time period and the second time period, and the target time period comprises one or more time domain symbols in the target slot; and the reserved time period comprises k1 time domain symbols that are in the target slot and that are before the target time period and/or k2 time domain symbols that are in the target slot and that are after the target time period, wherein both k1 and k2 are preconfigured values or predefined values, and both k1 and k2 are integers greater than or equal to 0.

7. The method according to any one of claims 2 to 6, wherein the first configuration information is carried in first signaling, the second configuration information is carried in second signaling, the first signaling is further for configuring a first reference subcarrier spacing, the second signaling is further for configuring a second reference subcarrier spacing, the first reference subcarrier spacing is different from the second reference subcarrier spacing, the first time period is determined based on the first reference subcarrier spacing, and the second time period is determined based on the second reference subcarrier spacing.

8. The method according to any one of claims 2 to 6, wherein the first configuration information is carried in first signaling, the second configuration information is carried in second signaling, the first signaling is further for configuring a first reference subcarrier spacing corresponding to a first forwarding resource, the second signaling is further for configuring a second reference subcarrier spacing corresponding to the first forwarding resource, the first reference subcarrier spacing is different from the second reference subcarrier spacing, and the first time period and the second time period are determined based on a common subcarrier spacing, wherein the common subcarrier spacing comprises:
a reference subcarrier spacing configured in signaling with a higher priority in the first signaling and the second signaling;
a reference subcarrier spacing corresponding to a forwarding resource with longer effective duration in the first forwarding resource and the second forwarding resource;
a reference subcarrier spacing corresponding to a forwarding resource that takes effect earlier in the first forwarding resource and the second forwarding resource;
a reference subcarrier spacing corresponding to a forwarding resource that takes effect later in the first forwarding resource and the second forwarding resource;
a subcarrier spacing preconfigured by the network device; or
a larger one of the first reference subcarrier spacing and the second reference subcarrier spacing.

9. The method according to any one of claims 1 to 8, wherein a priority of the first configuration information is higher than a priority of the second configuration information.

10. The method according to claim 9, wherein the priority of the first configuration information and the priority of the second configuration information are determined based on priority information.

11. The method according to claim 10, wherein the first configuration information is carried in the first signaling, the second configuration information is carried in the second signaling, and the priority information comprises a preset value carried in a preset field in the first signaling or the second signaling.

12. The method according to claim 10, wherein the first configuration information is carried in the first signaling, the second configuration information is carried in the second signaling, and the priority information comprises a first priority value carried in the first signaling and a second priority value carried in the second signaling.

13. The method according to any one of claims 10 to 12, wherein the priority information corresponds to one of the following content: a forwarding parameter, a forwarding resource, a forwarding resource set, or a forwarding configuration, wherein the forwarding parameter comprises one or more forwarding parameters, the forwarding resource set comprises one or more forwarding resources, and the forwarding configuration comprises one or more forwarding resources and/or one or more forwarding resource sets.

14. The method according to claim 9, wherein the first configuration information is carried in the first signaling, the second configuration information is carried in the second signaling, and the first signaling satisfies one of the following:
the first signaling is signaling for scheduling an aperiodic resource;
the first signaling is signaling for configuring a periodic resource;
the first signaling is received by the relay device earlier than the second signaling;
an effective time period of a forwarding parameter configured in the first signaling is longer than an effective time period of a forwarding parameter configured in the second signaling;
the effective time period of the forwarding parameter configured in the first signaling is shorter than the effective time period of the forwarding parameter configured in the second signaling;
a priority of the forwarding parameter configured in the first signaling is higher than a priority of the forwarding parameter configured in the second signaling; or
a resource configured in the first signaling is for forwarding a preset signal.

15. A communication apparatus, comprising:
a transceiver module, configured to receive first configuration information and second configuration information from a network device, wherein the first configuration information is for configuring a first forwarding parameter for the apparatus, the second configuration information is for configuring a second forwarding parameter for the apparatus, and the first forwarding parameter and the second forwarding parameter are parameters for controlling forwarding behavior of the apparatus, wherein
the transceiver module is further configured to: forward, to a terminal device based on the first configuration information, a signal received from the network device, or forward, to the network device based on the first configuration information, a signal received from the terminal device.

16. The apparatus according to claim 15, wherein the first forwarding parameter and the second forwarding parameter are a same forwarding parameter, but configuration performed on the first forwarding parameter by using the first configuration information is different from configuration performed on the second forwarding parameter by using the second configuration information; or the first forwarding parameter and the second forwarding parameter are different forwarding parameters, wherein
the first forwarding parameter takes effect in a first time period, the second forwarding parameter takes effect in a second time period, and the first time period and the second time period are in a same slot.

17. The apparatus according to claim 16, wherein the first forwarding parameter and the second forwarding parameter are a same forwarding parameter, but the configuration performed on the first forwarding parameter by using the first configuration information is different from the configuration performed on the second forwarding parameter by using the second configuration information; and the forwarding parameters comprise a parameter for controlling the apparatus to perform signal forwarding; and
the transceiver module is specifically configured to perform one or more of the following:
forward, to the terminal device based on the first configuration information in the first time period, the signal received from the network device, or forward, to the network device based on the first configuration information in the first time period, the signal received from the terminal device; and skip performing signal forwarding on a time domain symbol other than the first time period in a target slot;
forward, to the terminal device based on the first configuration information in a target time period, the signal received from the network device, or forward, to the network device based on the first configuration information in the target time period, the signal received from the terminal device;
forward, to the terminal device based on the first configuration information in the target time period, the signal received from the network device, or forward, to the network device based on the first configuration information in the target time period, the signal received from the terminal device; and skip performing signal forwarding on another time domain symbol that is in the target slot and that is after the target time period;
forward, to the terminal device based on the first configuration information in the target time period, the signal received from the network device, or forward, to the network device based on the first configuration information in the target time period, the signal received from the terminal device; and skip performing signal forwarding on another time domain symbol that is in the target slot and that is before the target time period;
forward, to the terminal device based on the first configuration information in the target time period, the signal received from the network device, or forward, to the network device based on the first configuration information in the target time period, the signal received from the terminal device; and skip performing signal forwarding in a reserved time period;
forward, to the terminal device based on the first configuration information in the first time period and the second time period, the signal received from the network device, or forward, to the network device based on the first configuration information in the first time period and the second time period, the signal received from the terminal device; and skip performing signal forwarding on a time domain symbol other than the first time period and the second time period in the target slot; or
forward, to the terminal device based on the first configuration information in the target slot, the signal received from the network device, or forward, to the network device based on the first configuration information in the target slot, the signal received from the terminal device, wherein
the target slot is the slot which the first time period and the second time period are jointly in, the target time period is an overlapping time period between the first time period and the second time period, and the target time period comprises one or more time domain symbols in the target slot; and the reserved time period comprises k1 time domain symbols that are in the target slot and that are before the target time period and/or k2 time domain symbols that are in the target slot and that are after the target time period, wherein both k1 and k2 are preconfigured values or predefined values, and both k1 and k2 are integers greater than or equal to 0.

18. The apparatus according to claim 16, wherein the first forwarding parameter and the second forwarding parameter are different forwarding parameters, and the first forwarding parameter is forwarding disabled; and
the apparatus further comprises a processing module, configured to perform one or more of the following:
skip performing signal forwarding based on the first configuration information in the first time period;
skip performing signal forwarding based on the first configuration information in a target time period;
skip performing signal forwarding based on the first configuration information in the target time period and on another time domain symbol that is in a target slot and that is before the target time period;
skip performing signal forwarding based on the first configuration information in the target time period and on another time domain symbol that is in the target slot and that is after the target time period;
skip performing signal forwarding based on the first configuration information in the target time period and a reserved time period; or
skip performing signal forwarding based on the first configuration information in the target slot, wherein
the target slot is the slot which the first time period and the second time period are jointly in, the target time period is an overlapping time period between the first time period and the second time period, and the target time period comprises one or more time domain symbols in the target slot; and the reserved time period comprises k1 time domain symbols that are in the target slot and that are before the target time period and/or k2 time domain symbols that are in the target slot and that are after the target time period, wherein both k1 and k2 are preconfigured values or predefined values, and both k1 and k2 are integers greater than or equal to 0.

19. The apparatus according to claim 15, wherein the first forwarding parameter and the second forwarding parameter are a same forwarding parameter, but configuration performed on the first forwarding parameter by using the first configuration information is different from configuration performed on the second forwarding parameter by using the second configuration information; or the first forwarding parameter and the second forwarding parameter are different forwarding parameters, wherein
the first forwarding parameter takes effect in a first time period, the second forwarding parameter takes effect in a second time period, the first time period is in one or more slots, the second time period is in one or more slots, and the first time period and the second time period are jointly in one or more slots.

20. The apparatus according to claim 19, wherein the first forwarding parameter and the second forwarding parameter are a same forwarding parameter, but the configuration performed on the first forwarding parameter by using the first configuration information is different from the configuration performed on the second forwarding parameter by using the second configuration information; and the first forwarding parameter and the second forwarding parameter comprise a parameter for controlling the apparatus to perform signal forwarding; and
the transceiver module is specifically configured to perform one or more of the following:
forward, to the terminal device based on the first configuration information in the first time period, the signal received from the network device, or forward, to the network device based on the first configuration information in the first time period, the signal received from the terminal device; and skip performing signal forwarding on a time domain symbol other than the first time period in a target slot;
forward, to the terminal device based on the first configuration information in a target time period, the signal received from the network device, or forward, to the network device based on the first configuration information in the target time period, the signal received from the terminal device;
forward, to the terminal device based on the first configuration information in the target time period, the signal received from the network device, or forward, to the network device based on the first configuration information in the target time period, the signal received from the terminal device; and skip performing signal forwarding on another time domain symbol that is in the target slot and that is after the target time period;
forward, to the terminal device based on the first configuration information in the target time period, the signal received from the network device, or forward, to the network device based on the first configuration information in the target time period, the signal received from the terminal device; and skip performing signal forwarding on another time domain symbol that is in the target slot and that is before the target time period;
forward, to the terminal device based on the first configuration information in the target time period, the signal received from the network device, or forward, to the network device based on the first configuration information in the target time period, the signal received from the terminal device; and skip performing signal forwarding in a reserved time period;
forward, to the terminal device based on the first configuration information in the first time period and the second time period, the signal received from the network device, or forward, to the network device based on the first configuration information in the first time period and the second time period, the signal received from the terminal device; and skip performing signal forwarding on a time domain symbol other than the first time period and the second time period in the target slot;
forward, to the terminal device based on the first configuration information in the target slot, the signal received from the network device, or forward, to the network device based on the first configuration information in the target slot, the signal received from the terminal device; or
forward, to the terminal device based on the first configuration information in the first time period, the signal received from the network device, or forward, to the network device based on the first configuration information in the first time period, the signal received from the terminal device; and forward, to the terminal device based on the second configuration information on a time domain symbol other than the target slot in the second time period, the signal received from the network device, or forward, to the network device based on the second configuration information on the time domain symbol other than the target slot in the second time period, the signal received from the terminal device, wherein
the target slot is the slot which the first time period and the second time period are jointly in, the target time period is an overlapping time period between the first time period and the second time period, and the target time period comprises one or more time domain symbols in the target slot; and the reserved time period comprises k1 time domain symbols that are in the target slot and that are before the target time period and/or k2 time domain symbols that are in the target slot and that are after the target time period, wherein both k1 and k2 are preconfigured values or predefined values, and both k1 and k2 are integers greater than or equal to 0.

21. The apparatus according to any one of claims 16 to 20, wherein the first configuration information is carried in first signaling, the second configuration information is carried in second signaling, the first signaling is further for configuring a first reference subcarrier spacing, the second signaling is further for configuring a second reference subcarrier spacing, the first reference subcarrier spacing is different from the second reference subcarrier spacing, the first time period is determined based on the first reference subcarrier, and the second time period is determined based on the second reference subcarrier.

22. The apparatus according to any one of claims 16 to 20, wherein the first configuration information is carried in first signaling, the second configuration information is carried in second signaling, the first signaling is further for configuring a first reference subcarrier spacing corresponding to a first forwarding resource, the second signaling is further for configuring a second reference subcarrier spacing corresponding to the first forwarding resource, the first reference subcarrier spacing is different from the second reference subcarrier spacing, and the first time period and the second time period are determined based on a common subcarrier spacing, wherein the common subcarrier spacing comprises:
a reference subcarrier spacing configured in signaling with a higher priority in the first signaling and the second signaling;
a reference subcarrier spacing corresponding to a forwarding resource with longer effective duration in the first forwarding resource and the second forwarding resource;
a reference subcarrier spacing corresponding to a forwarding resource that takes effect earlier in the first forwarding resource and the second forwarding resource;
a reference subcarrier spacing corresponding to a forwarding resource that takes effect later in the first forwarding resource and the second forwarding resource;
a subcarrier spacing preconfigured by the network device; or
a larger one of the first reference subcarrier spacing and the second reference subcarrier spacing.

23. The apparatus according to any one of claims 15 to 22, wherein a priority of the first configuration information is higher than a priority of the second configuration information.

24. The apparatus according to claim 23, wherein the priority of the first configuration information and the priority of the second configuration information are determined based on priority information.

25. The apparatus according to claim 24, wherein the first configuration information is carried in the first signaling, the second configuration information is carried in the second signaling, and the priority information comprises a preset value carried in a preset field in the first signaling or the second signaling.

26. The apparatus according to claim 24, wherein the first configuration information is carried in the first signaling, the second configuration information is carried in the second signaling, and the priority information comprises a first priority value carried in the first signaling and a second priority value carried in the second signaling.

27. The apparatus according to any one of claims 24 to 26, wherein the priority information corresponds to one of the following content: a forwarding parameter, a forwarding resource, a forwarding resource set, or a forwarding configuration, wherein the forwarding resource comprises one or more forwarding parameters, the forwarding resource set comprises one or more forwarding resources, and the forwarding configuration comprises one or more forwarding resources and/or one or more forwarding resource sets.

28. The apparatus according to claim 23, wherein the first configuration information is carried in the first signaling, the second configuration information is carried in the second signaling, and the first signaling satisfies one of the following:
the first signaling is signaling for scheduling an aperiodic resource;
the first signaling is signaling for configuring a periodic resource;
the first signaling is received by the apparatus earlier than the second signaling;
an effective time period of a forwarding parameter configured in the first signaling is longer than an effective time period of a forwarding parameter configured in the second signaling;
the effective time period of the forwarding parameter configured in the first signaling is shorter than the effective time period of the forwarding parameter configured in the second signaling;
a priority of the forwarding parameter configured in the first signaling is higher than a priority of the forwarding parameter configured in the second signaling; or
a resource configured in the first signaling is for forwarding a preset signal.

29. A communication apparatus, comprising a processor, wherein the processor is configured to execute program code, to enable the apparatus to implement the steps performed by the relay device in the method according to any one of claims 1 to 14.

30. A communication system, comprising a network device and a relay device, wherein
the network device is configured to send first configuration information and second configuration information to the relay device, wherein the first configuration information is for configuring a first forwarding parameter for the relay device, the second configuration information is for configuring a second forwarding parameter for the relay device, and the first forwarding parameter and the second forwarding parameter are parameters for controlling forwarding behavior of the relay device; and
the relay device is configured to: forward, to a terminal device based on the first configuration information, a signal received from the network device, or forward, to the network device based on the first configuration information, a signal received from the terminal device.

31. A computer-readable storage medium, storing a computer program, wherein when the computer program is executed by a processor, the method performed by the relay device and/or the method performed by the network device in any one of claims 1 to 14 are/is enabled to be performed.

32. A computer program product, comprising a computer program, wherein when the computer program is run, the method performed by the relay device and/or the method performed by the network device in any one of claims 1 to 14 are/is enabled to be performed.
